# EUROPÄISCHE PATENTSCHRIFT

(11) **EP 2 344 980 B1**
(45) Veröffentlichungstag und Bekanntmachung des Hinweises auf die Patenterteilung: **18.12.2013**
(21) Anmeldenummer: 09744627.2
(22) Anmeldetag: 21.10.2009
(51) Int. Cl.: G06K 9/00, G06K 9/46

(54) **VORRICHTUNG, VERFAHREN UND COMPUTERPROGRAMM ZUR ERKENNUNG EINER GESTE IN EINEM BILD, SOWIE VORRICHTUNG, VERFAHREN UND COMPUTERPROGRAMM ZUR STEUERUNG EINES GERÄTS**
DEVICE, METHOD AND COMPUTER PROGRAM FOR DETECTING A GESTURE IN AN IMAGE, AND SAID DEVICE, METHOD AND COMPUTER PROGRAM FOR CONTROLLING A DEVICE
DISPOSITIF, PROCÉDÉ ET PROGRAMME D'ORDINATEUR POUR LA DÉTECTION D'UN GESTE DANS UNE IMAGE AINSI QUE DISPOSITIF, PROCÉDÉ ET PROGRAMME D'ORDINATEUR POUR LA COMMANDE D'UN APPAREIL

(30) Priorität: 23.10.2008 DE 102008052928
(43) Veröffentlichungstag der Anmeldung: 20.07.2011
(73) Patentinhaber: Fraunhofer-Gesellschaft zur Förderung der angewandten Forschung e.V., 80686 München (DE)
(72) Erfinder: KLEFENZ, Frank, 68159 Mannheim (DE); HARDZEYEU, Valiantsin, 98693 Ilmenau (DE)
(74) Vertreter: Burger, Markus
(86) Internationale Anmeldenummer: PCT/EP2009/007547
(87) Internationale Veröffentlichungsnummer: WO 2010/046101

(56) Entgegenhaltungen:
- US-B1- 6 788 809
- MUNIB ET AL: "American sign language (ASL) recognition based on Hough transform and neural networks" EXPERT SYSTEMS WITH APPLICATIONS, OXFORD, GB, Bd. 32, Nr. 1, 1. Januar 2007 (2007-01-01), Seiten 24-37, XP005635960 ISSN: 0957-4174
- SUN TIEN-LUNG: "Conics-enhanced vision approach for easy and low-cost 3D tracking" PATTERN RECOGNITION, ELSEVIER, GB, Bd. 37, Nr. 7, 1. Juli 2004 (2004-07-01), Seiten 1441-1450, XP004508394 ISSN: 0031-3203
- UKITA N ET AL: "Wearable virtual tablet: fingertip drawing interface using an active-infrared camera" TRANSACTIONS OF THE INFORMATION PROCESSING SOCIETY OF JAPAN INF. PROCESS. SOC. JAPAN JAPAN, Bd. 45, Nr. 3, März 2004 (2004-03), Seiten 977-990, XP002560103 ISSN: 0387-5806
- SAFAEE-RAD R ET AL: "Application of moment and Fourier descriptors to the accurate estimation of elliptical shape parameters" SPEECH PROCESSING 1. TORONTO, MAY 14 - 17, 1991; [INTERNATIONAL CONFERENCE ON ACOUSTICS, SPEECH & SIGNAL PROCESSING. ICASSP], NEW YORK, IEEE, US, Bd. CONF. 16, 14. April 1991 (1991-04-14), Seiten 2465-2468, XP010043505 ISBN: 978-0-7803-0003-3
- KIERKEGAARD P: "A Method for detection of circular arcs based on the Hough transform" MACHINE VISION AND APPLICATIONS, Bd. 1992, Nr. 5, 1992, Seiten 249-263, XP002560104
- XABIER ITURBE ET AL: "VHDL described finger tracking system for real-time human-machine interaction" SIGNALS AND ELECTRONIC SYSTEMS, 2008. ICSES '08. INTERNATIONAL CONFERENCE ON, IEEE, PISCATAWAY, NJ, USA, 14. September 2008 (2008-09-14), Seiten 171-176, XP031361739 ISBN: 978-83-88309-47-2
- CHARAYAPHAN ET AL: "Image processing system for interpreting motion in American Sign Language" JOURNAL OF BIOMEDICAL ENGINEERING, BUTTERWORTH, GUILDFORD, GB, Bd. 14, Nr. 5, 1. September 1992 (1992-09-01), Seiten 419-425, XP022444204 ISSN: 0141-5425
- CHUTISANT KERDVIBULVECH ET AL: "Vision-Based Detection of Guitar Players' Fingertips Without Markers", COMPUTER GRAPHICS, IMAGING AND VISUALISATION, 2007. CGIV '07, IEEE, PISCATAWAY, NJ, USA, 1 August 2007 (2007-08-01), pages 419-428, XP031129058, ISBN: 978-0-7695-2928-8

## Beschreibung

### Hintergrund

Ausführungsbeispiele gemäß der vorliegenden Erfindung beziehen sich auf eine Vorrichtung, ein Verfahren und ein Computerprogramm zur Erkennung von Gesten in einem Bild.

Weitere Ausführungsbeispiele gemäß der Erfindung beziehen sich auf eine Vorrichtung, ein Verfahren und ein Computerprogramm zur Steuerung eines Geräts basierend auf einer Geste.

Einige Ausführungsbeispiele gemäß der Erfindung beziehen sich auf ein Verfahren und eine Vorrichtung zur Zeichen- und Gestenerkennung.

In vielen verschiedenen technischen Anwendungen ist es wünschenswert, Computer oder sonstige Geräte beispielsweise berührungsfrei zu steuern. Diesbezüglich hat es sich in vielen Fällen als vorteilhaft erwiesen, eine Steuerung durch Gesten vorzunehmen. Gesten sind beispielsweise zeichenhafte Bewegungen bestimmter Körperteile, beispielsweise der Hand oder des Kopfes, zum Zwecke der nonverbalen Kommunikation.

Beispielsweise ist es einem Menschen möglich, die Hand bzw. die Finger in eine Vielzahl von verschiedenen Konfigurationen (bzw. Anordnungen) zu bringen.

Die verschiedenen Konfigurationen der Hand können beispielsweise zur Steuerung eines Computers oder eines Geräts verwende werden. Dabei ist im Übrigen auch zu beachten, dass Gesten in vielen Fällen sogar von behinderten Personen zur Kommunikation verwendet werden können, selbst wenn für diese andere Möglichkeiten, eine Information zu artikulieren, nicht nutzbar sind. Als Beispiel sei hier auch auf die Gebärdensprache der Taubstummen hingewiesen. Im Übrigen können auch Menschen, die, aus welchen Gründen auch immer, beispielsweise an der Benutzung einer Tastatur gehindert sind, Informationen an einen Computer unter Verwendung einer Geste weitergeben.

Im Folgenden werden einige herkömmliche Ansätze und Konzepte zur Gestenerkennung beschrieben.

Die Veröffentlichung "Using deficits of convexity to recognize hand gestures from silhouettes" von E. Lawson und Z. Duric beschreibt ein Verfahren zur Erkennung von Handgesten aufgrund von Hand-Silhouetten. Basierend auf der Silhouette einer Hand wird deren konvexe Hülle berechnet. Defizite im Hinblick auf die Konvexität, die Unterschiede zwischen der Hülle und der Silhouette beschreiben, werden extrahiert. Die Defizite der Konvexität werden normiert, indem sie um die Kanten, die sie gemeinsam mit der Hülle haben, gedreht werden. Um eine Geste zu bestimmen, werden die Defizite einer Mehrzahl von Beispielen extrahiert und normiert. Die Defizite werden nach Ähnlichkeit gruppiert. Gesten werden durch Strings von Symbolen dargestellt, die dem nächsten Nachbar der Defizite entsprechen. Unterschiedliche Sequenzen von Symbolen, die einer gegebenen Geste entsprechen, werden in einem Wörterbuch gespeichert. Für eine gegebene unbekannte Geste werden deren Defizite der Konvexität extrahiert und einer entsprechenden Sequenz von Symbolen zugeordnet. Diese Sequenz wird mit dem Wörterbuch von bekannten Gesten verglichen und der Klasse zugeordnet, zu der der am besten übereinstimmende String gehört.

Die Veröffentlichung "Object detection by contour segment networks" von V. Ferrari und anderen beschreibt ein Verfahren zur Objekt-Detektion in ralen Bildern basierend auf einem einzigen Hand-gezeichneten Beispiel als Modell.

Die Bildkanten werden in Kontur-Segmente unterteilt und in einer Bild-Darstellung organisiert, die ihre Verbindungen codiert. Das Objekt-Detektions-Problem wird formuliert als Auffinden von Pfaden durch das Netzwerk, das die Umrisse des Modells wiedergibt. Eine Detektions-Technik wird beschrieben.

Die Veröffentlichung "Robust object recognition with cortex-like mechanisms" von T. Serre und anderen (veröffentlicht in: IEEE, Transactions on Pattern Analysis and Machine Intelligence, Vol. 29, No. 3, March 2007) beschreibt ein Konzept für die Erkennung von komplexen visuellen Szenen. Die Veröffentlichung beschreibt ein hierarchisches System, das der Organisation des visuellen Kortex folgt, und das eine zunehmend komplexe und invariante Merkmalsdarstellung aufbaut, indem zwischen einem Schablonen-Vergleich und einer Operation des maximalen Zusammenfassens abgewechselt wird.

Die Veröffentlichung "Visual hand tracking using nonparametric belief propagation" von E. B. Sudderth und anderen (veröffentlicht in: MIT Laboratory for Information and Decision Systems Technical Report, P-2603, Mai 2004) beschreibt wahrscheinlichkeitsbasierte Verfahren zur optischen Verfolgung eines dreidimensionalen biometrischen Handmodells basierend auf einer Bildsequenz. Eine redundante Darstellung wird verwendet, in der jede Modell-Komponente durch ihre Position und Orientierung in einem Welt-Koordinaten-Rahmen beschrieben wird. Hierin wird ein Modell definiert, das die kinematischen Beschränkungen erzwingt, die durch die Gelenke des Modells impliziert werden. Die redundante Darstellung ermöglicht es, dass Farben-basierte und Kanten-basierte Wahrscheinlichkeitsmaße, wie beispielsweise der Chamfer-Abstand, in ähnlicher Weise zerlegt werden können, wie in Fällen, in denen keine Selbst-Überdeckung vorhanden ist. Basierend auf diesem grafischen Modell der Kinematik der Hand wird die Bewegung der Hand unter Verwendung eines Algorithmus der nicht-parametrischen Glaubens-Ausbreitung verfolgt. Die nicht-parametrische Glaubens-Ausbreitung nimmt die spätere Verteilung über Hand-Konfigurationen als eine Sammlung von Abtastwerten an. Die nicht-parametrische Glaubens-Ausbreitung verwendet die grafische Struktur, um die Dimensionalität dieser Verteilungen zu verringern.

Die Veröffentlichung "Hand gesture extraction by active shape models" von N. Liu und B. C. Lovell (veröffentlicht in: Proceedings of the Digital Imaging Computing: Techniques and Applications, DICTA 2005) beschreibt eine Anwendung eines statistischen Modells zur Hand-Gesten-Extraktion und Erkennung. Nachdem die Hand-Konturen durch ein System zur Realzeit-Segmentierung und Verfolgung gefunden sind, wird ein Satz von Merkmalspunkten automatisch oder manuell entlang der Kontur markiert. Ein Satz von Merkmalsvektoren wird normiert und ausgerichtet. Der Satz von Merkmalsvektoren wird dann unter Verwendung einer Haupt-Komponenten-Analyse trainiert. Eine mittlere Form, Eigenwerte und Eigenvektoren werden berechnet und bilden das aktive Form-Modell. Wenn Modellparameter kontinuierlich eingestellt werden, werden verschiedene Form-Konturen erzeugt, um eine Übereinstimmung mit Hand-Kanten, die aus Originalbildern extrahiert worden sind, zu erkennen. Eine Geste wird schließlich erkannt.

Die Veröffentlichung "MAP - Inference for highly-connected graphs with DC-programming" von J. Kappes und C. Schnörr beschreibt einen Entwurf von Schlussfolgerungs-Algorithmen für diskret-wertige Markov-Zufallsfelder. Die genannte Veröffentlichung beschreibt eine Klasse von mathematischen Algorithmen, die auf die genannte Problemklasse angewendet werden können, wobei eine Konvergenz zu einem kritischen Punkt der Zielfunktion garantiert ist. Die sich ergebenden iterativen Algorithmen können als einfache Nachrichten-Übergabe-Algorithmen interpretiert werden, die aufgrund ihrer Konstruktion konvergieren.

Der Artikel "Real-time object detection for "smart" vehicles" von D. M. Gavrila und V. Philomin beschreibt ein Form-basiertes Objekt-Detektions-Verfahren, das auf Entfernungs-Transformationen basiert. Das Verfahren verwendet eine Hierarchie von Schablonen, um die Mehrzahl von Objekt-Formen zu erfassen. Effiziente Hierarchien können für gegebene Form-Verteilungen unter Verwendung von stochastischen Optimierungstechniken erzeugt werden. Ein Vergleich umfasst einen gleichzeitigen grob-zu-fein-Ansatz über die Form-Hierarchie und über die Transformationsparameter.

Der Artikel "Cassandra: Audio-video sensor fusion for aggression detection" von W. Zajdel und anderen (veröffentlicht auf der IEEE International Conference on Advanced Video and Signal based Surveillance (AVSS), London, 2007) beschreibt ein intelligentes Überwachungssystem namens Cassandra, das darauf ausgerichtet ist, aggressives menschliches Verhalten in öffentlichen Umgebungen zu detektieren. Dabei wird die sich ergänzende Natur von Audioerfassung und Videoerfassung verwendet. Auf einem niedrigen Niveau erfolgt eine unabhängige Analyse des Audiostroms und des Videostroms. Auf einem höheren Niveau wird ein dynamisches bayesisches Netzwerk als Kombinations-Mechanismus verwendet, um eine Aggressions-Anzeige für eine Szene zu erhalten.

Der Artikel "American sign language (ASL) recognition based on Hough transform and neural networks" von Q. Munib und anderen (Expert Systems with Applications, Vol. 32, No. 1, 2007, pp. 24-37) beschreibt die statische Gestenerkennung mittels Hough Transformationen.

Die Veröffentlichung "Schürmann-Polynomials - Roots and Offsprings" von U. Miletzki beschreibt einen Einfluss der so genannten "Schürmann-Polynome" auf die heutige Mustererkennung.

Weitere Details im Hinblick auf eine Computer-basierte Bilderkennung finden sich beispielsweise in dem "Handbook of Mathematical Models in Computer Vision".

In Anbetracht der obigen Ausführungen besteht ein Bedarf für ein Konzept zur Erkennung von Gesten in einem Bild, das eine besonders zuverlässige Erkennung von Gesten ermöglicht.

### Kurze Zusammenfassung der Erfindung

Ausführungsbeispiele gemäß der Erfindung schaffen eine Vorrichtung zur Erkennung von Gesten in einem Bild gemäss Anspruch 1. Die Vorrichtung umfasst einen Hough-Transformator, der ausgebildet ist, um Bögen in dem Bild oder in einer vorverarbeiteten Version des Bildes als identifizierte Gestenelemente zu identifizieren, um eine Information über die identifizierten Gestenelemente zu erhalten. Die Vorrichtung umfasst ferner einen Gesten-Beschreibungs-Ersteller, der ausgelegt ist, um eine Gesten-Beschreibung unter Verwendung der Information über die identifizierten Gestenelemente zu erhalten. Die Vorrichtung umfasst ferner einen Gesten-Klassifizierer, der ausgelegt ist, um die Gesten-Beschreibung mit einer Mehrzahl von Vergleichs-Gesten-Beschreibungen zu vergleichen, denen Gesten-Codes zugeordnet sind, um als Ergebnis des Vergleichs einen Gesten-Code einer identifizierten Geste zu liefern.

Das genannte Ausführungsbeispiel gemäß der Erfindung basiert auf der Erkenntnis, dass durch einen Hough-Transformator in besonders vorteilhafter Weise Gestenelemente, also beispielsweise Kreisbögen oder Ellipsenbögen (oder, bei einigen Ausführungsbeispielen, auch gerade Strecken) identifiziert werden können, und dass die Lage der somit identifizierten Gestenelemente eine charakteristische Gesten-Beschreibung darstellt, die in effizienter Weise für eine Identifizierung von Gesten herangezogen werden kann.

In anderen Worten, es wurde erkannt, dass eine Identifizierung von einzelnen Gestenelementen, also von Bögen oder geraden Strecken, eine effiziente Verarbeitung ermöglicht. Eine Geste wird durch die in dem Hough-Transformator ausgeführte Identifikation von Gestenelementen in eine Mehrzahl von klar definierten Einzelelementen, nämlich eine Mehrzahl von einzelnen Bögen (zum Beispiel Kreisbögen oder Ellipsenbögen) (und, optional, zusätzlich geraden Strecken) zerlegt. Damit besteht die Möglichkeit, Gesten durch eine geringe Anzahl von Parametern, nämlich beispielsweise durch die Lage der identifizierten Gestenelemente, zu beschreiben. Die identifizierten Gestenelemente bzw. deren Lageparameter stellen daher eine Beschreibungsform dar, die sich für eine besonders effiziente Klassifizierung (zum Beispiel unter Verwendung eines Datenbankvergleichs, oder unter Verwendung eines anderweitigen Klassifizierungskonzepts) eignen.

Besteht beispielsweise eine Geste aus vielen tausend Bildpunkten (zum Beispiel einhundert Bildpunkte mal einhundert Bildpunkte = 10.000 Bildpunkte), so umfasst die in der erfindungsgemäßen Weise erstellte Gesten-Beschreibung beispielsweise nur eine vergleichsweise geringe Zahl von Lageparametern. Beispielsweise kann jeder der Fingerspitzen einer Geste, die durch eine menschliche Hand dargestellt wird, ein Lageparameter zugeordnet werden. Zusätzlich können beispielsweise weitere Lageparameter verwendet werden, wobei in vielen Fällen etwa 10 bis 20 Lageparameter von charakteristischen Punkten der Geste ausreichend sind, um die Geste zu identifizieren bzw. zu klassifizieren.

Lageparameter der identifizierten Gestenelemente eignen sich damit hervorragend für eine effiziente Klassifikation (beispielsweise unter Verwendung eines DatenbankVergleichs) und stellen daher eine charakteristische Information über eine Geste dar. Verschiedene Gesten unterscheiden sich nämlich gerade in der Lage der einzelnen Gestenelemente (zum Beispiel Fingerspitzen), die beispielsweise in dem Bild durch Bögen (bzw. Ausschnitte aus Bögen) dargestellt sind.

Beispielsweise umfasst ein Umriss einer Hand gerade solche Gestenelemente (zum Beispiel Ausschnitte aus Bögen, wie beispielsweise Kreisbögen oder Ellipsenbögen, und gerade Linien), die durch einen Hough-Transformator detektiert werden können. Im Übrigen setzt sich eine Umrisslinie einer Hand üblicherweise aus einer Mehrzahl von aufeinander folgenden Bögen (ggf. mit dazwischenliegenden näherungsweise geraden Linien) zusammen, sodass sich eine Beschreibung dieser verschiedenen Gestenelemente (Bögen und ggf. gerade Linien) besonders gut für eine Klassifikation der Geste eignet.

Ferner sei darauf hingewiesen, dass durch die Verwendung einer Hough-Transformation eine Erkennung von Gesten in Bildern geringer Qualität (zum Beispiel in Bildern, die mit geringer Auflösung oder unter erschwerten Bedingungen, wie zum Beispiel bei Dunkelheit oder Regen, aufgenommen worden sind) mit hoher Zuverlässigkeit möglich ist. So ist nämlich ein Hough-Transformator in der Lage, auch linienförmige Verläufe, die vergleichsweise kurze Unterbrechungen aufweisen (die beispielsweise durch ein Bildrauschen oder durch sonstige Bildstörungen bedingt sein können), als einen zusammenhängenden Verlauf zu erkennen. Damit wird das erfindungsgemäße Konzept zur Erkennung von Gesten auch durch das Vorliegen von Bildern in vergleichsweise schlechter Qualität nicht wesentlich beeinträchtigt.

Somit werden durch die Verwendung eines Hough-Transformators bei der Erkennung von Gesten zwei wesentliche Vorteile erreicht. Zum einen ist die durch den Hough-Transformator gelieferte Information über erkannte Gestenelemente eine besonders zuverlässige und aussagekräftige Information, die einen effizienten Datenbankvergleich ermöglicht. Andererseits werden durch die Verwendung eines Hough-Transformators Störungen in dem Bild, zum Beispiel Unterbrechungen einer Kontur der Geste, im Wesentlichen ausgeglichen, sodass auch im Falle von schlechten Bildern eine zuverlässige Gestenerkennung möglich ist.

Bei einem Ausführungsbeispiel gemäß der Erfindung umfasst die Vorrichtung einen Flächenparameter-Bestimmer, der ausgelegt ist, um einen Flächenparameter einer Gestenfläche zu bestimmen. Der Gesten-Beschreibungs-Ersteller kann bei diesem Ausführungsbeispiel ausgelegt sein, um die Gesten-Beschreibung unter Verwendung des Flächenparameters zu erhalten. Die Verwendung eines Flächenparameters bei der Erstellung der Gesten-Beschreibung ermöglicht eine Ermittlung einer umfassenden Gesten-Beschreibung, die über die bloße Berücksichtigung einer Umrisslinie der Geste hinausgeht. So ist beispielsweise die Lage der Handfläche ein wichtiger Bestandteil einer menschlichen Geste, die unter Verwendung der Hand gegeben wird. Gerade die Handfläche kann aber aufgrund ihrer flächigen Ausdehnung in vielen Fällen wesentlich besser durch einen Flächenparameter beschrieben werden als durch eine Beschreibung der entsprechenden Umrisse.

Durch die Verwendung einer Flächeninformation kann beispielsweise eine große Menge an Informationen in einem einzigen Parameter der Gesten-Beschreibung zusammengefasst werden. Ferner bringt die Verwendung eines Flächenparameters bei einigen Ausführungsbeispielen den Vorteil mit sich, dass Positionen von Gestenelementen, die durch den Hough-Transformator identifiziert wurden, beispielsweise auf eine Position einer Fläche bzw. auf eine Position eines Flächenschwerpunktes bezogen werden können. Somit kann eine besonders aussagekräftige Gesten-Beschreibung erhalten werden, die sowohl Informationen im Hinblick auf eine Umrisslinie einer Gestenfläche als auch Informationen im Hinblick auf die Gestenfläche selbst vereint.

Ferner kann die Flächeninformation beispielsweise für eine Normierung der Gesten-Beschreibung verwendet werden, wodurch sich beispielsweise eine Gesten-Beschreibung erzielen lässt, die unabhängig von einer Größe eines Bildes, das die Geste zeigt, bzw. unabhängig von einer Größe, mit der die Geste in dem Bild dargestellt ist, ist.

Bei einem Ausführungsbeispiel ist der Gesten-Beschreibungs-Ersteller ausgelegt, um als Gesten-Beschreibung eine Beschreibung einer Geste zu erhalten, die die Geste als eine geordnete Beschreibung von identifizierten Gestenelementen beschreibt. Werden somit die einzelnen Gestenelemente beispielsweise gemäß einer vorgegebenen Anordnungsregel in eine vorbestimmte Ordnung gebracht, so kann eine Klassifizierung (beispielsweise unter Verwendung eines Datenbankvergleichs) in besonders effizienter Weise erfolgen.

Bei einem Ausführungsbeispiel gemäß der Erfindung ist der Gesten-Beschreibungs-Ersteller ausgelegt, um die Gesten-Beschreibung so zu ordnen, dass die geordneten identifizierten Gestenelemente eine durchgehende Umrisslinie einer Gestenfläche beschreiben. In diesem Fall entspricht die Anordnung der Gesten-Beschreibung einer "natürlichen" Reihenfolge, wie die Geste bzw. der Umriss derselben beispielsweise durch einen Menschen nachgezeichnet würde. Die entsprechende Beschreibung ist typischerweise eindeutig. Somit ergibt sich durch die beschriebene Ausgestaltung des Gesten-Beschreibungs-Erstellers wiederum eine besonders effiziente und typischerweise eindeutige Gesten-Beschreibung, wodurch ein beispielsweise bei der Klassifizierung durchgeführter Datenbankvergleich sehr effizient erfolgen kann.

Bei einem Ausführungsbeispiel gemäß der Erfindung ist die Vorrichtung ausgelegt, um Bildpunkte, deren Farbwert in einem vorgegebenen Bereich liegt, als zu einer Gestenfläche gehörende Bildpunkte zu identifizieren. Eine derartige Identifizierung der Gestenfläche ist in vielen Fällen zweckmäßig, da eine Geste im Regelfall durch einen näherungsweise einfarbigen Körperteil dargestellt wird. Eine Feinstruktur innerhalb der Gestenfläche ist hingegen in vielen Fällen nicht von Bedeutung, so dass eine Menge an zu verarbeitender Information verringert werden kann, indem feine Abstufungen der Farbe innerhalb der Gestenfläche ausgeblendet werden.

Bei einem Ausführungsbeispiel gemäß der Erfindung umfasst die Vorrichtung einen Bildausschnitt-Auswähler, der ausgelegt ist, um in dem Bild einen Bildausschnitt zu identifizieren, der eine zusammenhängende Gestenfläche umfasst. In diesem Fall kann der Hough-Transformator ausgelegt sein, um eine vorverarbeitete Version des Bildes zu verarbeiten, die dem Bildausschnitt entspricht. Durch eine entsprechende Ausgestaltung der erfindungsgemäßen Vorrichtung kann beispielsweise eine Effizienz bei einer Verarbeitung erhöht werden. Wird nämlich festgestellt, dass in einem bestimmten Bereich des Bildes keine Gestenfläche liegt, so kann dieser Bereich, in dem keine Gestenfläche liegt, für die weitere Verarbeitung ausgeblendet werden. Entsprechend verringert sich der Aufwand bei der Durchführung der Hough-Transformation.

Bei einem Ausführungsbeispiel gemäß der Erfindung ist der Gesten-Klassifizierer ausgelegt, um eine so genannte "symbolische affine Abbildung" durchzuführen. Durch die Durchführung einer derartigen symbolischen affinen Abbildung wird eine Klassifizierung einer Geste wesentlich erleichtert. So kann durch die Durchführung der symbolischen affinen Abbildung beispielsweise eine Drehung der Geste (im Hinblick auf eine Vergleichs-Geste) oder eine Veränderung einer Größe einer Gestenfläche (im Hinblick auf die Gestenfläche einer Vergleichs-Geste) berücksichtigt werden, wobei ein Aufwand für die Durchführung der Klassifikation in einem vertretbaren Rahmen bleibt.

Bei einem Ausführungsbeispiel gemäß der Erfindung ist der Gesten-Beschreibungs-Ersteller beispielsweise ausgelegt, um als die Gesten-Beschreibung einen geordneten Satz von Parametern bereitzustellen, die Umriss-Abschnitte einer Gestenfläche beschreiben. Der Gesten-Klassifizierer kann in diesem Fall beispielsweise ausgelegt sein, um den geordneten Satz von Parametern mit einer Mehrzahl von Vergleichs-Parametersätzen zu vergleichen, die Vergleichs-Gesten zugeordnet sind, um eine Information über Unterschiede zwischen dem geordneten Satz von Parametern und den Vergleichs-Parametersätzen zu erhalten.

Der Gesten-Klassifizierer kann ferner ausgelegt sein, um eine oder mehrere zyklisch durchrotierte Versionen des geordneten Satzes von Parametern mit der Mehrzahl von Vergleichs-Parametersätzen zu vergleichen, um eine Information über Unterschiede zwischen der einen oder den mehreren zyklisch durchrotierten Versionen des geordneten Satzes von Parametern und den Vergleichs-Parametersätzen zu erhalten. Der Gesten-Klassifizierer kann ferner ausgelegt sein, um basierend auf den Informationen über die Unterschiede einen Gesten-Code zu erhalten. Durch das Durchrotieren von geordneten Parametersätzen von durch den Hough-Transformator identifizierten Gestenelementen kann somit im Rahmen einer symbolischen affinen Abbildung eine Rotation der Geste dargestellt bzw. festgestellt werden. Insofern kann eine Geste auch dann erkannt werden, wenn beispielsweise eine Kamera, die das Bild aufnimmt, gegenüber der Geste etwas verdreht ist, oder umgekehrt. Ferner können auch Gesten in verschiedenen Richtungen auf die genannte Weise detektiert und unterscheiden werden, ohne dass beispielsweise Vergleichs-Parametersätze für alle möglichen Ausrichtungen der Geste (beispielsweise in einer Datenbank) vorhanden sind. Beispielsweise kann ermittelt werden, wie oft ein Satz von Gestenelement-Parametern, der eine ausreichend hohe Übereinstimmung mit einem Vergleichs-Parametersatz aufweist, durchrotiert worden ist. Anhand der entsprechenden Information (beispielsweise in Form eines einfachen Zahlenwerts) kann dann eine Orientierung der Geste in extrem effizienter Weise bestimmt werden.

Durch die Verwendung einer symbolischen affinen Abbildung kann im Übrigen davon abgesehen werden, ein Bild, das eine Geste zeigt, mehrfach zu drehen und wiederholt zu analysieren. Somit wird durch die Durchführung der symbolischen affinen Abbildung unter Verwendung der durch den Hough-Transformator identifizierten Gestenelemente eine Effizienz bei der Erkennung von Gesten wesentlich erhöht.

Bei einem Ausführungsbeispiel kann der Gesten-Beschreibungs-Ersteller ausgelegt sein, um als die Gesten-Beschreibung einen geordneten Satz von Parametern bereitzustellen, die Umriss-Abschnitte einer Gestenfläche beschreiben. Der Gesten-Klassifizierer kann beispielsweise ausgelegt sein, um den geordneten Satz von Parametern mit einer Mehrzahl von Vergleichs-Parametersätzen zu vergleichen, die Vergleichs-Gesten zugeordnet sind, um eine Information über Unterschiede zwischen dem geordneten Satz von Parametern und den Vergleichs-Parametersätzen zu erhalten. Der Gesten-Klassifizierer kann ferner ausgelegt sein, um eine oder mehrere skalierte Versionen des geordneten Satzes von Parametern mit einer Mehrzahl der Vergleichs-Parametersätze zu vergleichen, um eine Information über Unterschiede zwischen dem einen oder den mehreren skalierten Versionen des geordneten Satzes von Parametern und den Vergleichs-Parametersätzen zu erhalten. Der Gesten-Klassifizierer kann ferner ausgelegt sein, um basierend auf der Information über die Unterschiede einen zu dem geordneten Satz von Parametern gehörigen oder einen zu einer skalierten Version des geordneten Satzes von Parametern gehörigen Gesten-Code zu ermitteln.

Im Rahmen einer symbolischen affinen Abbildung kann also neben einer Rotation auch eine größenmäßige Skalierung der Gestenfläche berücksichtigt werden. Dies kann derart erfolgen, dass die einzelnen Gestenelemente, die durch den Hough-Transformator identifiziert wurden, und die in der Gesten-Beschreibung beschrieben sind, im Hinblick auf ihre Größe skaliert werden. Auf die genannte Weise kann somit eine Abhängigkeit der Klassifizierung von einer Größe der Gestenfläche verringert werden.

Bei einem Ausführungsbeispiel ist der Gesten-Klassifizierer ausgelegt, um die eine oder die mehreren skalierten Versionen des geordneten Satzes von Parametern so zu erhalten, dass die eine oder die mehreren skalierten Versionen einen Umriss einer im Vergleich zu einer tatsächlich in dem Bild enthaltenen Gestenfläche vergrößerten oder verkleinerten skalierten Gestenfläche beschreiben.

Bei einem Ausführungsbeispiel gemäß der Erfindung kann der Gesten-Beschreibungs-Ersteller ausgelegt sein, um als die Gesten-Beschreibung einen Satz von Parametern bereitzustellen, die Umriss-Abschnitte einer Gesten-Fläche beschreiben. Der Gesten-Klassifizierer kann beispielsweise ausgelegt sein, um anhand eines physikalischen Modells eines Körperteils, das die Geste bildet, eine Wahrscheinlichkeit zu bestimmen, mit der die durch den Satz von Parametern beschriebene Stellung von Einzelelementen des Körperteils angenommen wird. Der Gesten-Klassifizierer kann ferner ausgelegt sein, um die Wahrscheinlichkeit bei der Bestimmung des Gesten-Codes zu berücksichtigen.

Somit ist es möglich, bei der Klassifizierung der Gesten eine Information über ein physikalisches Modell eines Körperteils, durch das die Geste gebildet wird, zu berücksichtigen. Beispielsweise kann berücksichtigt werden, dass manche Positionen von Einzelelementen eines Körperteils vergleichsweise unwahrscheinlich sind. Beispielsweise ist es unwahrscheinlich, dass zwei Finger einen Winkel einschließen, der größer als etwa 60° ist. Im Übrigen gibt es natürlich eine Reihe weiterer geometrischer Beschränkungen im Hinblick auf einen Körperteil, der eine Geste bildet. Durch die Berücksichtigung derartiger physikalischer Rahmenbedingungen kann eine Genauigkeit bei einer Erkennung einer Geste verbessert werden.

Bei einem Ausführungsbeispiel kann der Gesten-Beschreibungs-Ersteller ausgelegt sein, um als die Gesten-Beschreibung einen Satz von Parametern bereitzustellen, die Umriss-Abschnitte einer Gestenfläche beschreiben. Der Gesten-Klassifizierer kann ausgelegt sein, um zu erkennen, ob der Satz von Parameterwerten eine vorgegebene Bedingung verletzt, und um eine Bereitstellung des Gesten-Codes zu unterdrücken, wenn der Satz von Parameterwerten die vorgegebene Bedingung verletzt. In der genannten Weise kann beispielsweise eine Verletzung von physikalischen Beschränkungen im Hinblick auf einen Körperteil, der die Geste bildet, mit berücksichtigt werden.

Gemäß einem weiteren Ausführungsbeispiel kann der Gesten-Beschreibungs-Ersteller ausgelegt sein, um als die Gesten-Beschreibung einen Satz von Parametern bereitzustellen, der Umriss-Abschnitte einer Gestenfläche beschreibt. Der Gesten-Klassifizierer kann ausgelegt sein, um den aktuellen Gesten-Code, der einen aktuellen Gesten-Zustand beschreibt, in Abhängigkeit von einem vorher basierend auf einem früheren Bild bestimmten Gesten-Code, der einen vorherigen Gesten-Zustand beschreibt, zu bestimmen. Somit kann der Klassifizierer beispielsweise eine Dynamik der Geste berücksichtigen. Beispielsweise kann der Gesten-Klassifizierer feststellen, dass eine bestimmte Nachfolge-Geste im Anschluss an eine vorhergehende Geste besonders wahrscheinlich oder besonders unwahrscheinlich ist. Beispielsweise kann davon ausgegangen werden, dass sich ein Körperteil, oder ein Einzelteil des Körperteils, nur mit einer bestimmten maximalen Geschwindigkeit bewegt. Insofern kann davon ausgegangen werden, dass ein abrupter Übergang zwischen zwei deutlich verschiedenen Gesten sehr unwahrscheinlich ist, während hingegen ein Übergang zwischen zwei recht ähnlichen Gesten eine vergleichsweise hohe Wahrscheinlichkeit aufweist. Die entsprechende Übergangswahrscheinlichkeit zwischen zwei aufeinander folgenden Gesten-Zuständen, die durch den Klassifizierer berücksichtigt werden kann, ist beispielsweise von großem Nutzen in Fällen, in denen die Gesten-Beschreibung nicht ganz eindeutig einer bestimmten Geste (bzw. Vergleichs-Geste) zugeordnet werden kann. Resultieren beispielsweise zwei unterschiedliche Gesten in ähnlichen Gesten-Beschreibungen, so kann aufgrund einer vorher angenommenen Geste ermittelt werden, welche von mehreren aufgrund der identifizierten Gestenelemente grundsätzlich in Frage kommenden Gesten tatsächlich gerade vorhanden ist (oder mit der höchsten Wahrscheinlichkeit vorhanden ist).

Bei einem Ausführungsbeispiel kann der Gesten-Klassifizierer ausgelegt sein, um bei der Bestimmung eines aktuellen Gesten-Codes eine Zustandsübergangs-Zulässigkeitsinformation auszuwerten, die beschreibt, welche aktuellen Gesten-Zustände ausgehend von einem vorigen Gesten-Zustand angenommen werden können. Somit kann beispielsweise aufgrund einer harten Entscheidung (beispielsweise "Zustandsübergang zulässig" oder "Zustandsübergang nicht zulässig") ein aktueller Gesten-Zustand bzw. ein zugehöriger Gesten-Code ermittelt werden.

Alternativ oder zusätzlich kann der Gesten-Klassifizierer ausgelegt sein, um bei der Bestimmung eines aktuellen Gesten-Codes eine Zustandsübergangs-Wahrscheinlichkeitsinformation auszuwerten, die beschreibt, wie groß eine Wahrscheinlichkeit für einen Übergang aus einem vorigen Gesten-Zustand in verschiedene aktuelle Gesten-Zustände ist. Somit kann unter Verwendung einer weichen Entscheidung der aktuelle Gesten-Zustand bzw. der zugehörige Gesten-Code ermittelt werden.

Die vorliegende Erfindung schafft im Übrigen ein entsprechendes Verfahren gemäss Anspruch 12 und ein entsprechendes Computerprogramm gemäss Anspruch 13 zur Erkennung von Gesten in einem Bild.

Ferner schafft die vorliegende Erfindung ein Kamerasystem gemäss Anspruch 14 und eine Geräteanordnung gemäss Anspruch 15.

### Kurze Beschreibung der Figuren

Ausführungsbeispiele gemäß der vorliegenden Erfindung werden nachfolgend Bezug nehmend auf die beiliegenden Figuren näher erläutert. Es zeigen:
- Fig. 1: ein Blockschaltbild einer Vorrichtung zur Erkennung einer Geste in einem Bild, gemäß einem Ausführungsbeispiel der Erfindung;
- Fig. 2: ein Blockschaltbild einer Vorrichtung zur Erkennung einer Geste in einem Bild, gemäß einem weiteren Ausführungsbeispiel der Erfindung;
- Fig. 3: ein Blockschaltbild einer Bildverarbeitungseinrichtung, gemäß einem Ausführungsbeispiel der Erfindung;
- Fig. 4: ein Blockschaltbild eines Bildpunkt-Klassifizierers, gemäß einem Ausführungsbeispiel der Erfindung;
- Fig. 5: ein Blockschaltbild eines Konturlinien-Bestimmers, gemäß einem Ausführungsbeispiel der Erfindung;
- Fig. 6a: ein Blockschaltbild eines Flächenparameter-Bestimmers, gemäß einem Ausführungsbeispiel der Erfindung;
- Fig. 6b: eine schematische Darstellung eines Bildes bzw. eines Bildausschnitts in Verbindung mit dazugehörigen Histogrammen;
- Figur 6c: zeigt eine Darstellung von Formeln zur Berechnung eines Gesamt-Drehmoments m einer Gesten-Fläche in einem Bild sowie zur Berechnung eines Drehmoments mₓ in x-Richtung und eines Drehmoments m_{y} in y-Richtung;
- Fig. 7a: eine schematische Darstellung einer ersten Geste;
- Fig. 7b: eine schematische Darstellung einer zweiten Geste;
- Fig. 7c: eine schematische Darstellung einer dritten Geste;
- Fig. 7d: eine schematische Darstellung eines Ausschnitts der ersten Geste;
- Fig. 8: eine schematische Darstellung von Parametern zur Beschreibung von Bögen oder geraden Strecken;
- Fig. 9a: eine schematische Darstellung der ersten Geste, in Verbindung mit einer beispielhaften zugehörigen Gesten-Beschreibung;
- Fig. 9b: eine schematische Darstellung der ersten Geste, zusammen mit einer weiteren beispielhaften zugehörigen Gesten-Beschreibung;
- Fig. 10: ein Blockschaltbild eines Gesten-Beschreibungs-Erstellers, gemäß einem Ausführungsbeispiel der Erfindung;
- Fig. 11: ein Blockschaltbild eines Gesten-Beschreibungs-Erstellers, gemäß einem weiteren Ausführungsbeispiel der Erfindung;
- Fig. 12: ein Blockschaltbild eines Gesten-Beschreibungs-Erstellers, gemäß einem weiteren Ausführungsbeispiel der Erfindung;
- Fig. 13: ein Blockschaltbild eines Gesten-Klassifizierers, gemäß einem Ausführungsbeispiel der Erfindung;
- Fig. 14: ein Blockschaltbild eines Gesten-Klassifizierers, gemäß einem weiteren Ausführungsbeispiel der Erfindung;
- Fig. 15: ein Blockschaltbild eines Gesten-Beschreibungs-Überprüfers, gemäß einem Ausführungsbeispiel der Erfindung;
- Fig. 16: ein Blockschaltbild eines Gesten-Klassifizierers, gemäß einem Ausführungsbeispiel der Erfindung;
- Fig. 17a: eine grafische Darstellung einer Vorgehensweise zum Durchschieben eines grafischen Bildes durch eine Mustererkennungseinrichtung;
- Fig. 17b: eine grafische Darstellung von Zeitsignalen, die bei der Umwandlung eines Rasterbildes in parallele Zeitsignale entstehen;
- Fig. 18: ein Blockschaltbild einer Mustererkennungseinrichtung zur Verwendung in einer erfindungsgemäßen Vorrichtung zum Erkennen einer Geste, gemäß einem Ausführungsbeispiel der Erfindung;
- Fig. 19: eine grafische Darstellung von drei beispielhaften Referenzkurven zur Verwendung in einer Mustererkennungseinrichtung, gemäß einem Ausführungsbeispiel der Erfindung;
- Fig. 20a: eine schematische Darstellung eines Bildausschnitts, der eine nach oben orientierte Fingerspitze umfasst;
- Fig. 20b: eine schematische Darstellung eines Bildausschnitts, die einen nach rechts oben weisende Fingerspitze zeigt;
- Fig. 21: eine schematische Darstellung einer Vorgehensweise bei einem zyklischen Durchrotieren einer Gesten-Beschreibung;
- Fig. 22: eine schematische Darstellung einer Vorgehensweise bei einer Skalierung einer Gesten-Beschreibung;
- Fig. 23: ein Blockschaltbild einer Vorrichtung zur Steuerung eines Geräts, gemäß einem Ausführungsbeispiel der Erfindung;
- Fig. 24: ein Blockschaltbild einer Vorrichtung zur Steuerung einer Kamera, gemäß einem Ausführungsbeispiel der Erfindung;
- Fig. 25: ein Flussdiagramm eines Verfahrens zur Identifizierung einer Geste in einem Bild, gemäß einem Ausführungsbeispiel der Erfindung; und
- Fig. 26: ein Flussdiagramm eines Verfahrens zur Identifizierung einer Geste in einem Bild, gemäß einem weiteren Ausführungsbeispiel der Erfindung.

### Detaillierte Beschreibung von Ausführungsbeispielen der Erfindung

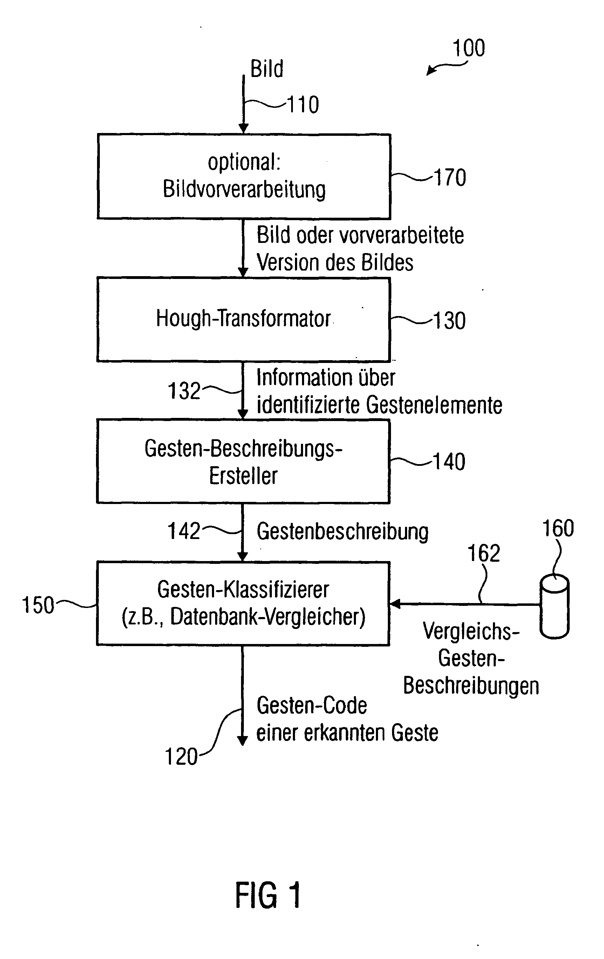

### Vorrichtung gemäß Fig. 1

Fig. 1 zeigt ein Blockschaltbild einer Vorrichtung zur Erkennung von Schriftzeichen in einem Bild. Die Vorrichtung gemäß der Fig. 1 ist in Ihrer Gesamtheit mit 100 bezeichnet. Die Vorrichtung 100 ist ausgelegt, um ein Bild 110 zu empfangen, und um basierend auf dem Bild 110 einen Gesten-Code 120 einer in dem Bild 110 erkannten Geste zu liefern. Die Vorrichtung 100 umfasst einen Hough-Transformator 130, der ausgelegt ist, um das Bild 110 oder eine vorverarbeitete Version des Bildes zu empfangen, und um eine Information 132 über identifizierte Gestenelemente zu liefern. Die Vorrichtung 100 umfasst ferner einen Gesten-Beschreibungs-Ersteller 140, der ausgelegt ist, um die Information 132 über identifizierte Gestenelemente von dem Hough-Transformator 130 zu empfangen, und um basierend auf der Information 132 über die identifizierten Gestenelemente eine Gestenbeschreibung 142 zu liefern. Die Vorrichtung 100 umfasst ferner einen Gesten-Klassifizierer 150, der ausgelegt ist, um die Gestenbeschreibung 142 von dem Gesten-Beschreibungs-Ersteller 140 zu empfangen, und um basierend darauf den Gestencode 120 einer erkannten Geste zu liefern.

Die Vorrichtung 100 kann optional eine Datenbank 160 umfassen, die ausgelegt ist, um dem Gesten-Klassifizierer eine Mehrzahl von Vergleichs-Gestenbeschreibungen zu liefern.

Die Vorrichtung 100 kann ferner optional eine Bildvorverarbeitung 170 aufweisen, die ausgelegt sein kann, um das Bild 110 zu empfangen, und um an den Hough-Transformator 130 eine vorverarbeitet Version des Bildes zur Verfügung zu stellen.

Basierend auf der obigen strukturellen Beschreibung wird im Folgenden die Funktion der vorliegenden Vorrichtung 100 zur Erkennung von Gesten in einem Bild beschrieben. Die Vorrichtung 100 empfängt für eine Gestenerkennung das Bild 110. Der Hough-Transformator 130 kann beispielsweise ausgelegt sein, um Bögen (zum Beispiel Kreisbögen und/oder Ellipsenbögen, beziehungsweise Ausschnitte aus derartigen Bögen) in dem Bild oder in einer vorverarbeiteten Version des Bildes als identifizierte Gestenelemente zu identifizieren. Der Hough-Transformator 130 kann somit die Gesteninformation 132 über die identifizierten Gestenelemente erhalten und dem Gesten-Beschreibungs-Ersteller 140 zur Verfügung stellen. Der Gesten-Beschreibungs-Ersteller 140 kann beispielsweise ausgelegt sein, um die Gestenbeschreibung 142 unter Verwendung der Information 132 über die identifizierten Gestenelemente zu erhalten. Der Gestenbeschreibung 142 kann somit beispielsweise einen Satz von identifizierten Gestenelementen beschreiben.

Der Gesten-Klassifizierer kann beispielsweise ausgelegt sein, um die Gestenbeschreibung 142 mit einer Mehrzahl von Vergleichs-Gestenbeschreibungen (beispielsweise aus der optionalen Datenbank 160) zu vergleichen, denen Gesten-Codes zugeordnet sind, und um als Ergebnis des Vergleichs den Gesten-Code einer erkannten Geste zu liefern.

Somit ist festzuhalten, dass es die Vorrichtung 100 ermöglicht, in effizienter und zuverlässiger Weise eine Geste in dem Bild 110 zu identifizieren. Durch den Hough-Transformator 130 können besonders charakteristische Gestenelemente, wie beispielsweise Bögen (zum Beispiel Kreisbögen oder Ellipsenbögen, beziehungsweise Ausschnitte aus derartigen Bögen) in dem Bild (oder in einer vorverarbeiteten Version des Bildes) identifiziert werden. Die Identifizierung von Gestenelementen durch den Hough-Transformator ist dabei in besonders zuverlässiger und schneller Weise möglich, da der Hough-Transformator derartige Gestenelemente auch in einem gestörten Bild erkennen kann. Im Übrigen ist der Hough-Transformator in der Lage, beispielsweise Bögen mit unterschiedlichen Krümmungsradien in sehr zuverlässiger und effizienter Weise zu bestimmen. Somit kann eine Information über identifizierte Gestenelemente in zuverlässiger und effizienter Weise erhalten werden, wobei die besonders wichtigen Elemente einer Geste durch Parameter beschrieben werden können.

Somit ist der Gesten-Beschreibungs-Ersteller 140 in der Lage, basierend auf der durch den Hough-Transformator gelieferten Information 132 eine aussagekräftige und zuverlässige Gestenbeschreibung 142 zu erzeugen, die beispielsweise die Information über mehrere durch den Hough-Transformator identifizierte Gestenelemente zusammenfassen kann. Der Gesten-Beschreibungs-Ersteller 140 empfängt somit von dem Hough-Transformator 130 eine kompakte Information (beispielsweise Parameter von identifizierten Gestenelementen) und muss diese nur noch zu einer Gestenbeschreibung zusammenfügen.

Der Gestenklassifizierer 150 schließlich kann aufgrund der Gestenbeschreibung 142 in effizienter und zuverlässiger Weise den Gestencode 120 ermitteln. Dabei kommt es dem Gesten-Klassifizierer zugute, dass durch den Hough-Transformator die besonders charakteristischen Elemente einer Geste, wie zum Beispiel Bögen (beispielsweise Ausschnitte aus Vollbögen), in isolierter bzw. diskreter Weise extrahiert werden können. Somit kann die Gestenbeschreibung sehr kompakt ausfallen, wobei Artefakte in dem Bild durch den Hough-Transformator unterdrückt werden und somit die Gestenbeschreibung 142 nicht unnötig aufblähen. Insofern kann auch die Gesten-Klassifikation in dem Gesten-Klassifizierer 150 in sehr effizienter Weise erfolgen.

Im Übrigen ist festzuhalten, dass gerade durch die Verwendung des Hough-Transformators ein hohes Maß an Fehlertoleranz und Präzision erzielt werden kann. Konturlinien einer Gestenfläche, die beispielsweise geringfügige Unterbrechungen aufweisen (beispielsweise aufgrund von Bildstörungen) können durch den Hough-Transformator 130 dennoch zuverlässig verarbeitet werden, so dass durch den Hough-Transformator eine recht präzise Information über eine Lage der entsprechenden Gestenelemente bereitgestellt werden kann. Dem entsprechend kann die Ermittlung des Gesten-Codes in dem Gesten-Klassifizierer 150 auch mit hoher Präzision erfolgen.

Zusammenfassend ist somit festzuhalten, dass der Einsatz des Hough-Transformators 130 bei der Gestenerkennung wesentliche Vorteile mit sich bringt, so dass der Einsatz des Hough-Transformators 130 einen Aufbau einer effizienten Gestenerkennung mit moderatem Ressourcenaufwand und guter Zuverlässigkeit ermöglicht.

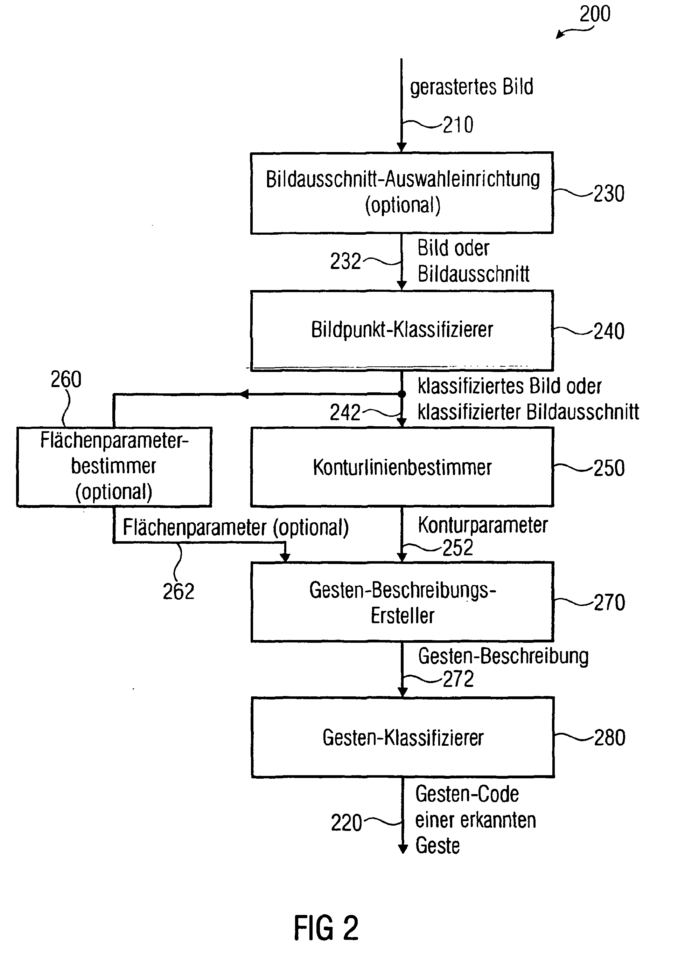

### Vorrichtung gemäß Fig. 2

Fig. 2 zeigt ein Blockschaltbild einer Vorrichtung zur Erkennung von Gesten in einem Bild. Die Vorrichtung gemäß der Fig. 2 ist in ihrer Gesamtheit mit 200 bezeichnet. Die Vorrichtung 200 ist ausgelegt, um ein gerastertes Bild 210 zu empfangen, und um basierend auf dem gerasterten Bild 210 einen Gestencode 220 einer in dem gerasterten Bild erkannten Geste bereitzustellen. Die Vorrichtung 200 umfasst optional eine Bildausschnitt-Auswahleinrichtung 230, die ausgelegt ist, um das gerasterte Bild 210 zu empfangen und basierend darauf einen ausgewählten Bildausschnitt 232 oder eine Information über einen auszuwählenden Bildausschnitt bereitzustellen. Die Vorrichtung 200 umfasst ferner einen Bildpunkt-Klassifizierer 240, der ausgelegt ist, um das gerasterte Bild 210 oder einen durch die optionale Bildausschnitt-Auswahleinrichtung 230 bereitgestellten Bildausschnitt zu empfangen, und um die in dem Bild 210 oder Bildausschnitt 232 enthaltene Bildpunkte zu klassifizieren. Der Bildpunkt-Klassifizierer 240 ist ferner ausgelegt, um ein klassifiziertes Bild 242 (oder einen klassifizierten Bildausschnitt 242) basierend auf dem gerasterten Bild 210 oder dem gerasterten Bildausschnitt 232 bereitzustellen. Die Vorrichtung 200 umfasst ferner einen Konturlinienbestimmer 250, der ausgelegt ist, um das klassifizierte Bild 242 (oder den klassifizierten Bildausschnitt) zu empfangen, und um basierend auf dem klassifizierten Bild (oder Bildausschnitt) Konturparameter 252 bereitzustellen. Die Vorrichtung 200 umfasst ferner, optional, einen Flächenparameter-Bestimmer 260, der beispielsweise ausgelegt sein kann, um das klassifizierte Bild (oder den klassifizierten Bildausschnitt) zu empfangen und um basierend auf dem klassifizierten Bild (oder dem klassifizierten Bildausschnitt) zumindest einen Flächenparameter 262 bereitzustellen. Die Vorrichtung 200 umfasst ferner einen Gesten-Beschreibungs-Ersteller 270, der ausgelegt ist, um den Konturparameter 252 (oder eine Mehrzahl von Konturparametern) zu empfangen. Der Gesten-Beschreibungs-Ersteller kann optional weiterhin ausgelegt sein, um den optionalen Flächenparameter 262 (oder eine Mehrzahl von Flächenparametern) zu empfangen. Der Gesten-Beschreibungs-Ersteller 272 ist ausgelegt, um basierend auf dem Konturparameter 252 (oder einer Mehrzahl von Konturparametern 252) eine Gesten-Beschreibung 272 zu liefern. Der Gesten-Beschreibungs-Ersteller 272 kann optional ausgelegt sein, um auch den Flächenparameter 262 (oder eine Mehrzahl von Flächenparametern 262) bei der Erstellung der Gesten-Beschreibung 272 zu berücksichtigen, wie im Folgenden noch beschrieben wird.

Die Vorrichtung 260 umfasst ferner einen Gesten-Klassifizierer 280, der ausgelegt ist, um die Gesten-Beschreibung 272 zu empfangen, und um den Gesten-Code 220 einer erkannten Geste basierend auf der Gesten-Beschreibung 272 zu liefern.

Basierend auf der obigen strukturellen Beschreibung wird im Folgenden die Funktion der Vorrichtung 200 im Detail beschreiben.

Die Vorrichtung 200 kann beispielsweise ausgelegt sein, um basierend auf einem gerasterten Bild das klassifizierte Bild 242 zu erzeugen. Dabei kann basierend auf dem gerasterten Bild 210 entschieden werden, welche Bildpunkte bzw. "Pixel" des gerasterten Bildes 210 zu einer Gestenfläche gehören. Es kann also basierend auf dem gerasterten Bild, beispielsweise anhand der Farbwerte, entschieden werden, welche Bildpunkte als zu einer Geste gehörig klassifiziert werden, und welche Bildpunkte als nicht zu einer Geste gehörig klassifiziert werden. Bei einer entsprechenden Verarbeitung kann, beispielsweise durch die Bildausschnitt-Auswahleinrichtung 230, erkannt werden, dass in einem bestimmten Bereich des gerasterten Eingangsbildes 210 keine Bildpunkte liegen, die zu einer Geste gehören. Wird beispielsweise festgestellt, dass in einem bestimmten Teilbereich des gerasterten Bildes 210 keine Bildpunkte liegen, die eine Hautfarbe (oder eine andere vorgegebene Farbe) aufweisen, bzw. dass in einem bestimmten Teilbereich des gerasterten Bildes 210 keine zusammenhängende Fläche von einer vorgegebenen minimalen Größe vorhanden ist, so kann die Bildausschnitt-Auswahleinrichtung entscheiden, dass für die weitere Verarbeitung nur ein oder mehrere Bildausschnitte herangezogen werden, in der bzw. in denen eine entsprechende Gestenfläche (also eine Fläche mit einer bestimmten identifizierten Farbe, oder eine näherungsweise einfarbige Fläche mit einer vorgegebenen minimalen Ausdehnung) vorhanden ist.

In der folgenden Beschreibung wird aus Gründen der Vereinfachung jeweils auf eine Verarbeitung eines Bildes Bezug genommen, wobei eine Weiterverarbeitung eines Bildausschnitts in der gleichen Weise erfolgen kann.

Basierend auf dem klassifizierten Bild 242, das durch den Bildpunkt-Klassifizierer 240 geliefert wird, kann eine Ermittlung einer Beschreibung von Eigenschaften einer Umrisslinie einer Gestenfläche erfolgen. Zu diesem Zweck kann der Konturlinienbestimmer 250 beispielsweise basierend auf dem klassifizierten Bild 242 Konturparameter 252 ermitteln, die einzelne Abschnitte einer Umrisslinie einer Gestenfläche beschreiben, und die als Information über identifizierte Gestenelemente angesehen werden können. Die Konturparameter 252 können beispielsweise beschreiben, wo eine Umrisslinie einer Gestenfläche lokale Extrema in einer vorgegebenen Richtung aufweist. So können die Konturparameter 252 beispielsweise eine Lage von Bögen (zum Beispiel von Kreisbögen oder Ellipsenbögen) beschreiben, die eine Umrisslinie einer Gestenfläche annähern, wie im Folgenden noch detailliert beschreiben wird. Die Konturparameter 252 können ferner, optional, eine Lage von geraden Strecken, die Teil der Umrisslinie der Gestenfläche sind (oder die die Umrisslinie der Gestenfläche annähern), beschreiben, wie im Folgenden auch noch im Detail beschrieben wird. Somit dient der Konturlinienbestimmer insgesamt dazu, basierend auf dem klassifizierten Bild 242 einen Satz von Konturparametern 252 zu liefern, die eine aussagekräftige Beschreibung im Hinblick auf eine in dem gerasterten Bild enthaltene Geste darstellen. Der Gesten-Beschreibungs-Ersteller 270 ist im Übrigen ausgelegt, um die Gesten-Beschreibung 272 unter Verwendung des Satzes von Konturparametern 252 zu erstellen. Der Gesten-Beschreibungs-Ersteller kann dabei verschiedene Strategien verwenden, wie im Folgenden noch detailliert beschrieben wird. So kann der Gesten-Beschreibungs-Ersteller beispielsweise eine Mehrzahl der Konturparameter in veränderter oder unveränderter Form in die Gesten-Beschreibung 272 übernehmen, wie im Folgenden noch detailliert beschrieben wird. Ferner kann der Gesten-Beschreibungs-Ersteller die Konturparameter 252 optional verändern, beispielsweise umordnen, skalieren oder in ein anderes Koordinatensystem transformieren, um die Gestenbeschreibung 272 zu erhalten. Der Gesten-Beschreibungs-Ersteller 270 kann bei der Erstellung der Gestenbeschreibung 272 unter Verwendung der Konturparameter 252 beispielsweise (optional) einen oder mehrere der optionalen Flächenparameter 262 mit berücksichtigen, wie im Folgenden noch detailliert ausgeführt wird. Der Gesten-Beschreibungs-Ersteller 270 kann im Übrigen beispielsweise basierend auf einer vorgegebenen Regel die Gesten-Beschreibung 272 derart erstellen, dass die Gesten-Beschreibung 272 einen geordneten Satz von Parametern umfasst, die Umriss-Abschnitte einer Gestenfläche beschreiben. In anderen Worten, der Gesten-Beschreibungs-Ersteller kann basierend auf den einzelnen Konturparametern 252, die beispielsweise Eigenschaften von einzelnen Umriss-Abschnitten der Gestenfläche beschreiben, eine kombinierte Gesten-Beschreibung 272 erstellen, die eine Mehrzahl von Umriss-Abschnitten der Gestenfläche beschreibt. Die kombinierte Gesten-Beschreibung 272 kann die Mehrzahl von Umriss-Abschnitten der Gestenfläche beispielsweise in einer sortierten Weise beschreiben. Beispielsweise können die Parameter der einzelnen Umrisslinien-Abschnitte danach sortiert sein, in welcher Abfolge die verschiedenen Abschnitte entlang der Umrisslinie auftreten. Alternativ dazu kann die Sortierung auch aufgrund der Parameter der Gestenelemente erfolgen, so dass beispielsweise die Gestenbeschreibung zunächst alle Bögen und anschließend alle geraden Strecken durch entsprechende Parameter beschreibt. Details diesbezüglich werden im Folgenden noch ausführlich erläutert.

Der Gesten-Klassifizierer 280 kann der Gesten-Beschreibung 272, die durch den Gesten-Beschreibung-Ersteller 272 erhalten wird, einen Gesten-Code einer erkannten Geste zuordnen. Dabei kann der Gesten-Klassifizierer beispielsweise basierend auf einer Mehrzahl von Vergleichs-Gesten (beziehungsweise zugehörigen Parametersätzen der Vergleichs-Gesten) entscheiden, welcher der Vergleichs-Gesten die durch die aktuelle Gestenbeschreibung 272 beschriebene Geste am ähnlichsten ist (bzw. welcher oder welchen der Vergleichs-Gesten die durch die aktuelle Geste beschriebene Geste ausreichend ähnlich ist). Somit kann der Gesten-Klassifizier, optional unter Verwendung eines weitergehenden Wissens, entscheiden, welcher Gestentyp einer Mehrzahl von vorbestimmten Gestentypen (beschrieben bzw. repräsentiert durch die Vergleichs-Gesten) in dem gerasterten Bild enthalten ist.

Ferner sei darauf hingewiesen, dass die Vorrichtung 200 gemäß der Fig. 2 im Wesentlichen die gleiche Funktion erfüllt wie die Vorrichtung 100 gemäß der Fig. 1. So kann die Bildvorverarbeitung 170 beispielsweise die Funktion der Bildausschnitt-Auswahleinrichtung 230 und/oder die Funktion des Bildpunkt-Klassifizierers 240 übernehmen. Der Hough-Transformator 130 kann Teil des Konturlinienbestimmers 250 sein oder den Konturlinienbestimmer 250 bilden, wie im Folgenden noch detailliert erläutert wird. Der Gesten-Beschreibungs-Ersteller 140 kann beispielsweise die Funktionalität des Gesten-Beschreibungs-Erstellers 270 aufweisen, und der Gesten-Klassifizierer 150 kann beispielsweise die Funktionalität des Gesten-Klassifizierers 280 aufweisen.

Im Folgenden werden Details der anhand der Fig. 1 und 2 beschriebenen Einrichtungen beschrieben, um mögliche Ausgestaltung der Vorrichtungen 100, 200 zu erläutern. Allerdings ist festzuhalten, dass die im Folgenden beschriebenen Funktionalitäten lediglich als Beispiele anzusehen sind.

### Bildvorverarbeitung

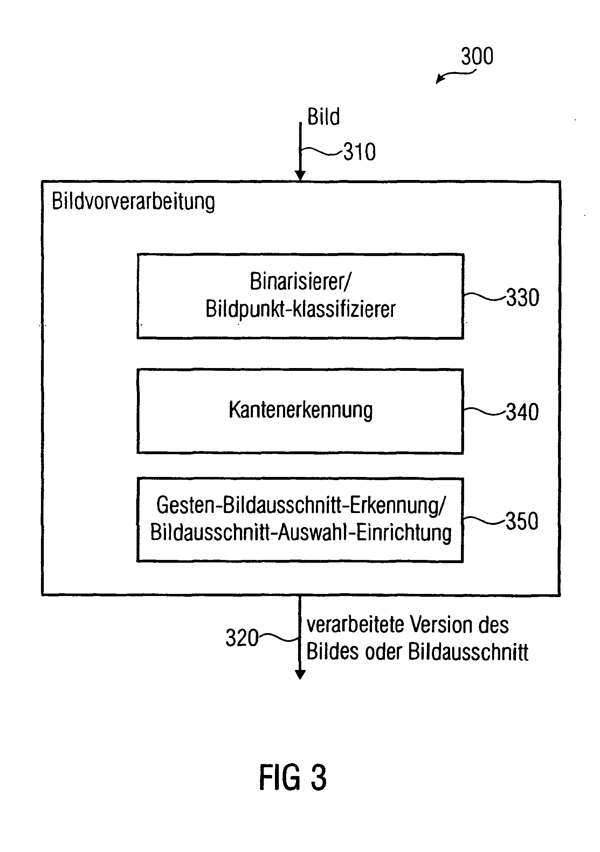

Fig. 3 zeigt ein Blockschaltbild einer Bildvorverarbeitung, gemäß einem Ausführungsbeispiel der vorliegenden Erfindung. Die Bildvorverarbeitung gemäß der Fig. 3 ist in ihrer Gesamtheit mit 300 bezeichnet. Die Bildvorverarbeitung 300 kann beispielsweise an die Stelle der Bildvorverarbeitung 170 treten oder die Funktionalität der Bildausschnitt-Auswahleinrichtung 230 und/oder die Funktionalität des Bildpunkt-Klassifizierers 240 übernehmen. Die Bildvorverarbeitung 300 ist beispielsweise ausgelegt, um ein Bild 310 zu empfangen, und um eine vorverarbeitete Version 320 des Bildes oder einen Bildausschnitt des Bildes 310 oder eine vorverarbeitete Version eines Bildausschnitts des Bildes 310 zu liefern.

Die Bildvorverarbeitung 300 kann beispielsweise einen Binarisierer beziehungsweise Bildpunkt-Klassifizierer aufweisen. Der Binarisierer beziehungsweise Bildpunkt-Klassifizierer 330 kann beispielsweise ausgelegt sein, um die Bildpunkte des Bildes 310 in mehrere Klassen einzuteilen. Beispielsweise kann der Binarisierer ausgelegt sein, um zu entscheiden, ob ein Bildpunkt des Bildes zu der Geste gehörig ist oder nicht. Somit kann der Binarisierer beziehungsweise Bildpunkt-Klassifizierer 330 beispielsweise eine vorverarbeitete Version des Bildes erzeugen, in der Bildpunkten, die zur der Geste bzw. Gestenfläche gehören, ein erster Wert (zum Beispiel Farbwert "schwarz") zugeordnet ist, und in der Bildpunkten, die nicht zu der Gestenfläche gehören, ein zweiter Wert (zum Beispiel Farbwert "weiß") zugeordnet ist.

Der Binarisierer 330 kann beispielsweise ausgelegt sein, um Bildpunkte, die eine Hautfarbe aufweisen, von Bildpunkten, die keine Hautfarbe aufweisen, zu unterscheiden. Die Unterscheidung kann beispielsweise durch Vergleich eines Farbwertes (der durch mehrere einzelne Parameter beschrieben sein kann) eines Bildpunktes mit einem Vergleichs-Farbwert (der wiederum durch mehrere einzelne Parameter beschrieben sein kann) erfolgen.

Weist beispielsweise der Farbwert von dem Vergleichs-Farbwert um nicht mehr als eine vorgegebene zulässige Abweichung ab, so kann der entsprechende Bildpunkt als zu der Geste bzw. Gesten-Fläche gehöriger Bildpunkt klassifiziert werden. Andernfalls kann der entsprechende Bildpunkt als nicht zu der Geste bzw. Gesten-Fläche gehöriger Bildpunkt klassifiziert werden. Eine entsprechende Erkennung von zu der Gesten-Fläche gehörigen Bildpunkten kann in verschiedenen Farb-Beschreibungssystemen (z.B. rot-grün-blau oder cyanmagenta-gelb, oder Chrominanz-Luminanz) erfolgen.

Außerdem ist es natürlich nicht zwingend notwendig, durch den Binarisierer 330 eine Hautfarbe zu erkennen. Vielmehr kann auch eine andere vorgegebene Farbe erkannt werden, wenn beispielsweise die Gesten unter Verwendung einer menschlichen Hand sowie eines farbigen Handschuhs erzeugt werden.

### Kantenerkennung:

Ferner kann die Bildvorverarbeitung 300 beispielsweise eine Kantenerkennung 340 umfassen. Die Kantenerkennung 340 kann beispielsweise ausgelegt sein, um Kanten in dem Bild 310 oder in einer durch den Binarisierer 330 gelieferten Version des Bildes zu erkennen. Beispielsweise kann der Kantenerkenner 340 ausgelegt sein, um Übergänge zwischen einem hellem und einem dunklem Bereich bzw. zwischen Bereichen unterschiedlicher Farbe als Kanten zu erkennen. Da eine Kantenerkennung aus dem Bereich der Bildverarbeitung bekannt ist, wird hier nicht näher auf die Details der Kantenerkennung eingegangen.

### Gesten-Bildauschnitt-Erkennung/Bildausschnitt-Auswahl-Einrichtung

Die Bildvorverarbeitung 300 kann ferner, optional, eine Gesten-Bildausschnitt-Erkennung und/oder eine Bildausschnitt-Auswahl-Einrichtung aufweisen, die zusammen mit 350 bezeichnet sind. Die Gesten-Bildausschnitt-Erkennung kann beispielsweise ausgelegt sein, um einen Bildausschnitt des Bildes 310, oder einer entsprechenden bearbeiteten Version des Bildes 310 zu erkennen, in dem eine Geste vorhanden ist (oder in dem das Vorhandensein einer Geste angenommen wird).

Beispielsweise kann der Gesten-Bildausschnitt-Erkenner 350 ausgelegt sein, um in dem Bild 310 (oder einer vorverarbeiteten Version desselben) einen Bildausschnitt zu identifizieren, der eine zusammenhängende Gesten-Fläche umfasst. Beispielsweise kann der Gesten-Bildausschnitt-Erkenner einen solchen Bildausschnitt des Bildes 310 erkennen und zur Weiterverarbeitung auswählen, in dem eine zusammenhängende Fläche enthalten ist, die (innerhalb eines vorgegebenen Toleranzbereichs) einen näherungsweise konstanten Farbwert aufweist, und deren Ausdehnung eine vorgegebene minimale Ausdehnung erreicht oder überschreitet. Somit werden beispielsweise nur derartige Bildausschnitte als (potentielle) Gesten-Bildausschnitte erkannt, die eine ausreichend große Farbfläche aufweisen, und die daher ein Vorhandensein einer Geste erwarten lassen. Je nach Anwendungsfall kann die Farbe dabei vorgegeben sein oder nicht. Beispielsweise kann der Gesten-Bildausschnitt-Erkenner ausgelegt sein, um solche Bildausschnitte als potentielle Gesten-Bildausschnitte auszuwählen, in denen überhaupt eine zusammenhängende, näherungsweise einfarbige Fläche einer minimalen Ausdehnung vorliegt.

Somit kann der Gesten-Bildausschnitt-Erkenner insgesamt eine Information über mögliche Bildausschnitte, in denen sich grundsätzlich ein ausreichend großes Abbild einer Geste befinden kann, liefern. Andere Bildausschnitte hingegen, in denen erst gar keine zusammenhängende näherungsweise einfarbige Fläche vorhanden ist, können durch den Gesten-Bildausschnitt-Erkenner unterdrückt werden. Somit kann verhindert werden, dass Flächen, in denen überhaupt keine Geste, sondern nur ein farblich ungleichmäßiger Hintergrund vorhanden ist, weiterverarbeitet werden.

Somit kann durch die Bildausschnitt-Auswahl-Einrichtung 350 ein Bildausschnitt zur Weiterverarbeitung ausgewählt werden, von dem mit einiger Wahrscheinlichkeit erwartet werden kann, dass er tatsächlich ein Abbild einer Gesten-Fläche in ausreichender Größe umfasst. Andere Bereiche des Bildes 310 werden somit beispielsweise erst gar keiner weiteren Bearbeitung unterzogen. Werden in einem Bild mehrere potentielle Gesten-Flächen erkannt, so können durch die Bildausschnitt-Auswahl-Einrichtung 350 natürlich mehrere Bildausschnitte zur weiteren Verarbeitung ausgewählt werden.

### Zusammenwirken von Binarisierung, Kantenerkennung und Gesten-Bildausschnitt-Erkennung

Im übrigen ist festzuhalten, dass die verschiedenen Arbeitsschritte der Binarisierung, der Kantenerkennung, der Gesten-Bildausschnitt-Erkennung und der Bildausschnitt-Auswahl in beliebiger Reihenfolge durchgeführt werden können, um so die vorverarbeitete Version des Bildes 310, einen vorverarbeiteten Bildausschnitt des Bildes 310 oder einen ausgewählten Bildausschnitt des Bildes 310 zu erhalten. Der Hough-Transformator, der eine weitere Verarbeitung der vorverarbeiteten Version des Bildes, der vorverarbeiteten Version des Bildausschnitts oder des ausgewählten Bildausschnitts durchführt, kann somit ausgelegt sein, um eine vorverarbeitete Version des Bildes zu verarbeiten, die dem ausgewählten Bildausschnitt entspricht.

### Details im Hinblick auf den Binarisierer

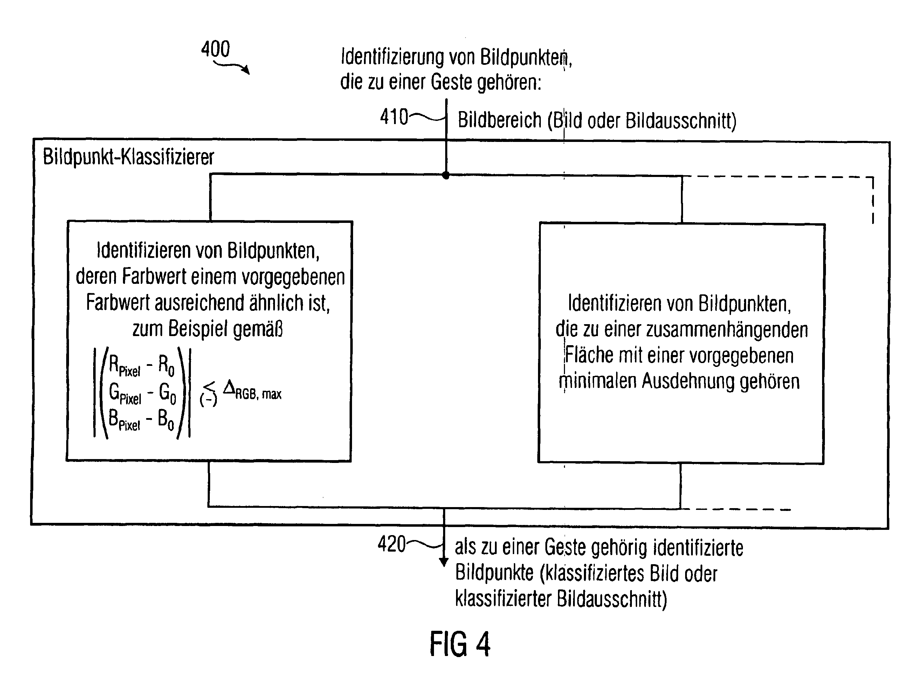

Im Folgenden werden Details im Hinblick auf den Binarisierer 330 anhand der Figur 4 erläutert. Die Figur 4 zeigt ein Blockschaltbild eines Bildpunkt-Klassifizierers, bzw. Binarisierers, gemäß einem Ausführungsbeispiel der Erfindung. Der Bildpunkt-Klassifizierer gemäß der Figur 4 ist in seiner Gesamtheit mit 400 bezeichnet. Der Bildpunkt-Klassifizierer 400 ist ausgelegt, um Bildpunkte zu identifizieren, die zu einer Geste gehören.

Zu diesem Zweck ist der Bildpunkt-Klassifizierer 400 ausgelegt, um einen Bildbereich 410 zu empfangen. Bei dem Bildbereich kann es sich beispielsweise um das Bild 310 oder einen ausgewählten Bildausschnitt des Bildes 310 handeln. Der Bildpunkt-Klassifizierer 400 ist somit ausgelegt, um basierend auf dem Bildbereich 410 eine Information 420 zu liefern, die als zu einer Geste gehörig identifizierte Bildpunkte beschreibt (und von als nicht zu einer Geste gehörig identifizierten Bildpunkten unterscheidet). Die Information 420 kann somit als eine Beschreibung eines klassifizierten Bildes oder eines klassifizierten Bildausschnitts angesehen werden. Beispielsweise kann die Information 420 Bildpunkten des Bildbereichs 410, die als zu einer Geste gehörig identifiziert sind, den ersten Wert (bzw. Farbwert) zuordnen und Bildpunkten, die als nicht zu einer Geste gehörig identifiziert sind, einen davon verschiedenen zweiten Wert (z.B. Farbwert) zuordnen.

Diese Unterscheidung zwischen Bildpunkten, die zu einer Geste bzw. Gesten-Fläche gehören, und Bildpunkten, die nicht zu einer Geste bzw. Gesten-Fläche gehören, kann auf verschiedene Weise erreicht werden. Beispielsweise kann der Bildpunkt-Klassifizierer 400 ausgelegt sein, um in dem Bildbereich 410 solche Bildpunkte zu identifizieren, deren Farbwert einem vorgegebenen Farbwert ausreichend ähnlich ist. Werden beispielsweise die rot-grün-blau Farbwerte eines Bildpunktes mit R_{Pixel}, G_{Pixel} und B_{Pixel} bezeichnet, und wird beispielsweise der vorgegebene Farbwert mit R₀, G₀ und B₀ bezeichnet, beispielsweise in einem rot-grün-blau-Farbsystem, so kann beispielsweise anhand der in der Figur 4 gezeigten Formel bestimmt werden, ob der Farbwert eines Bildpunktes mehr oder weniger als ein vorgegebener Schwellwert Δ_{RGB,max} von dem vorgegebenen Farbwert abweicht. Bildpunkte, deren Farbwert sich um weniger als die vorgegebene Abweichung (Schwellwert) von dem Vergleichs-Farbwert unterscheidet, können als zu der Gesten-Fläche gehörig identifiziert werden, während Bildpunkte, deren Farbwert sich um mehr als der vorgegebene Schwellwert von dem vorgegebenen Farbwert unterscheidet, als nicht zu der Gesten-Fläche gehörig identifiziert werden können.

Alternativ oder ergänzend, kann der Bildpunkt-Klassifizierer 400 ausgelegt sein, um Bildpunkte in dem Bildbereich 410 zu identifizieren, die zu einer zusammenhängenden (näherungsweise einfarbigen) Fläche mit einer vorgegebenen minimalen Ausdehnung gehören. Derartig identifizierte Bildpunkte können als zu einer Geste gehörige Bildpunkte identifiziert werden und durch die Information 420 beschrieben werden, während hingegen andere Bildpunkte (die also nicht Teil einer zusammenhängenden Fläche mit einer vorgegebenen minimalen Ausdehnung gehören) als nicht zu einer Geste bzw. Gesten-Fläche gehörige Bildpunkte identifiziert werden können. Somit kann eine Geste beispielsweise auch dann erkannt werden, wenn nicht genau bekannt ist, welche Farbe die zugehörige Gesten-Fläche aufweist (wenn beispielsweise Handschuhe verschiedener Farbe oder die blanke Hand verwendet werden können).

### Detaillierte Beschreibung der Konturlinienbestimmung

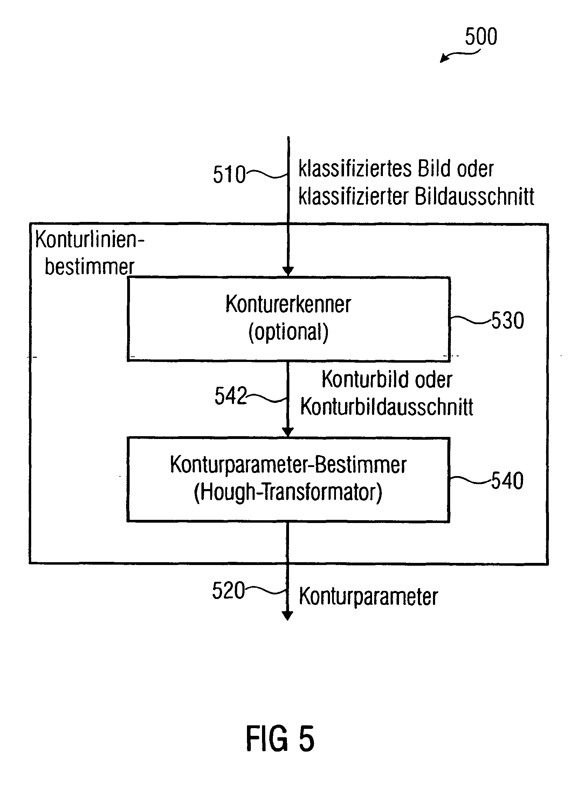

Im Folgenden wird anhand der Figur 5 detailliert beschrieben, wie basierend auf einem klassifizierten Bild oder einem klassifizierten Bildausschnitt Kontur-Parameter bestimmt werden können. Die Figur 5 zeigt zu diesem Zweck ein Blockschaltbild eines Konturlinien-Bestimmers, gemäß einem Ausführungsbeispiel der Erfindung. Der Konturlinien-Bestimmer gemäß der Figur 5 ist in seiner Gesamtheit mit 500 bezeichnet.

Der Konturlinien-Bestimmer 500 kann beispielsweise ausgelegt sein, um ein klassifiziertes Bild oder einen klassifizierten Bildausschnitt 510 zu empfangen, und um basierend darauf Kontur-Parameter 520 zu liefern. Bei dem klassifizierten Bild oder dem klassifizierten Bildausschnitt kann es sich beispielsweise um das klassifizierte Bild bzw. den klassifizierten Bildausschnitt 242 gemäß Fig. 2, um die vorverarbeitete Version 320 des Bildes oder Bildausschnitts oder um Information 420 handeln. Je nachdem, ob das klassifizierte Bild 510 bzw. der klassifizierte Bildausschnitt 510 für eine Kantenerkennung vorverarbeitet wurde, kann der Konturlinien-Bestimmer 500 optional einen Kontur-Erkenner 530 aufweisen. Der Kontur-Erkenner 530 kann beispielsweise dann Teil des Konturlinien-Bestimmers 500 sein, wenn das klassifizierte Bild oder der klassifizierte Bildausschnitt 510 noch nicht durch einen Konturerkenner verarbeitet wurde. Ansonsten kann der Kontur-Erkenner 530 natürlich entfallen.

Ferner umfasst der Konturlinien-Bestimmer 500 einen Konturparameter-Bestimmer 540, der ausgelegt ist, um ein Konturbild 542 oder einen Konturbildausschnitt 542 zu empfangen und basierend darauf die Konturparameter 520 zu liefern. Das Konturbild 542 oder der Konturbildausschnitt 542 kann somit beispielsweise eine Fläche einer Geste durch eine Kontur bzw. eine Umrisslinie beschreiben. In dem Konturbild 542 bzw. Konturbildausschnitt 542 können in manchen Fällen neben der Umrisslinie der Gesten-Fläche auch noch andere parasitäre Linien bzw. Linienstücke enthalten sein, je nachdem wie gut die Vorverarbeitung ist. Im Allgemeinen sind allerdings solche parasitären Linien bzw. Linienstücke gerade aufgrund der Verwendung des im Folgenden noch detailliert beschriebenen Konturparameter-Bestimmers 540 nicht besonders schädlich.

Der Konturlinien-Bestimmer 540 umfasst bei dem bevorzugten Ausführungsbeispiel einen Hough-Transformator, der ausgelegt ist, um das Konturbild 542 bzw. den Konturbildausschnitt 542 zu empfangen und basierend darauf eine Information über die identifizierte Gesten-Elemente in Form der Konturparameter 520 zu liefern. Details im Hinblick auf den Hough-Transformator werden im Folgenden noch erläutert.

### Flächenparameter-Bestimmer

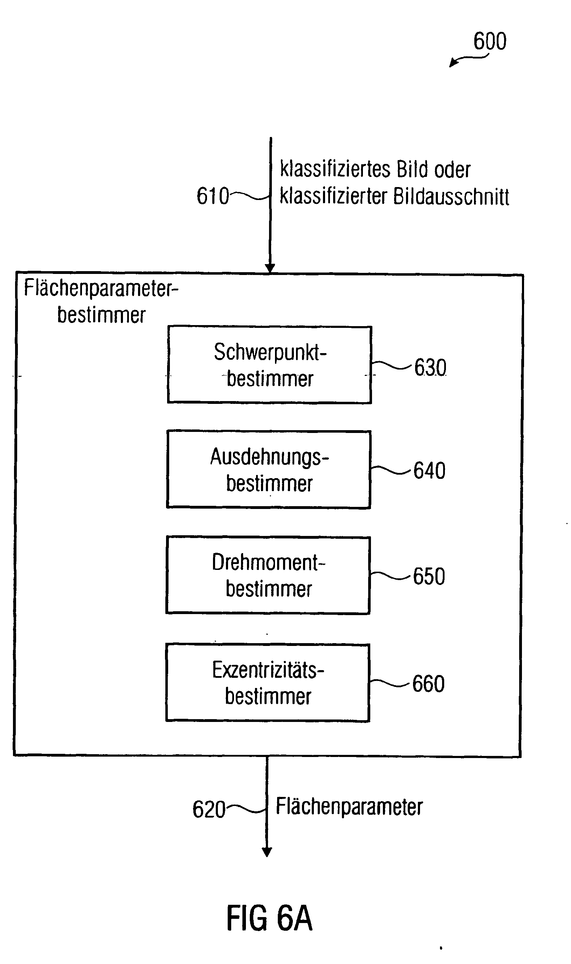

Im Folgenden werden anhand der Figur 6A einige Details im Hinblick auf den optionalen Flächenparameter-Bestimmer 260 gemäß der Figur 2 beschrieben. Die Figur 6A zeigt zu diesem Zweck ein Blockschaltbild eines Flächenparameter-Bestimmers gemäß einem Ausführungsbeispiel der Erfindung. Der in der Figur 6A gezeigte Flächenparameter-Bestimmer ist in seiner Gesamtheit mit 600 bezeichnet und kann an die Stelle des Flächenparameter-Bestimmers 360 treten.

Der Flächenparameter-Bestimmer 600 ist ausgelegt, um ein klassifiziertes Bild 610 oder einen klassifizierten Bildausschnitt 610 zu empfangen. Bei dem klassifizierten Bild oder dem klassifizierten Bildausschnitt 610 kann es sich beispielsweise um das klassifizierte Bild oder den klassifizierten Bildausschnitt 242 gemäß der Figur 2 handeln. Alternativ dazu kann es sich bei dem klassifizierten Bild oder Bildausschnitt 610 um die vorverarbeitete Version des Bildes oder Bildausschnitts 320 oder um die Information 420 handeln. Im Übrigen kann der Flächenparameter-Bestimmer 600 beispielsweise eine Eingangsinformation 610 empfangen, die der Eingangsinformation 510 des Konturlinien-Bestimmers 500 entspricht.

Der Flächenparameter-Bestimmer 600 kann beispielsweise ausgelegt sein, um einen oder mehrere Flächenparameter einer in dem klassifizierten Bild bzw. dem klassifizierten Bildausschnitt 610 enthaltenen Gesten-Fläche zu bestimmen. Somit ist der Flächenparameter-Bestimmer 600 ausgelegt, um einen oder mehrere Flächenparameter 620 zu liefern, die eine in den klassifizierten Bild oder klassifizierten Bildausschnitt 610 enthaltene Gesten-Fläche beschreiben.

Der Flächenparameter-Bestimmer 600 kann beispielsweise ausgelegt sein, um als den Flächenparameter 620 eine Information über einen Flächen-Schwerpunkt einer in dem klassifizierten Bild oder Bildausschnitt 610 enthaltenen Fläche bzw. Gesten-Fläche zu liefern. Alternativ oder zusätzlich kann der Flächenparameter-Bestimmer 600 ausgelegt sein, um eine Information über eine Ausdehnung der Fläche bzw. Gesten-Fläche als Flächenparameter 620 zu liefern, oder um eine Information über ein Moment der Fläche oder Gesten-Fläche als Flächenparameter 620 zu liefern, oder um eine Information über eine Exzentrizität der Fläche oder Gesten-Fläche als der Flächenparameter 620 zu liefern. Der Flächenparameter-Bestimmer kann natürlich auch beliebige Kombinationen der genannten Informationen als Flächenparameter 620 liefern. In einigen Ausführungsbeispielen liefert der Flächenparameter-Bestimmer 600 sogar alle der genannten Flächenparameter (Information über Flächen-Schwerpunkt, Information über Ausdehnung der Gesten-Fläche, Information über Moment der Gesten-Fläche und Information über Exzentrizität der Gesten-Fläche).

Somit kann der Flächenparameter-Bestimmer 600 beispielsweise einen oder mehrere der folgenden Funktionsblöcke enthalten: Flächen-Schwerpunkt-Bestimmer 630; Flächen-Ausdehnungs-Bestimmer 640; Flächen-Drehmoment-Bestimmer 650 und Flächen-Exzentrizität-Bestimmer 660.

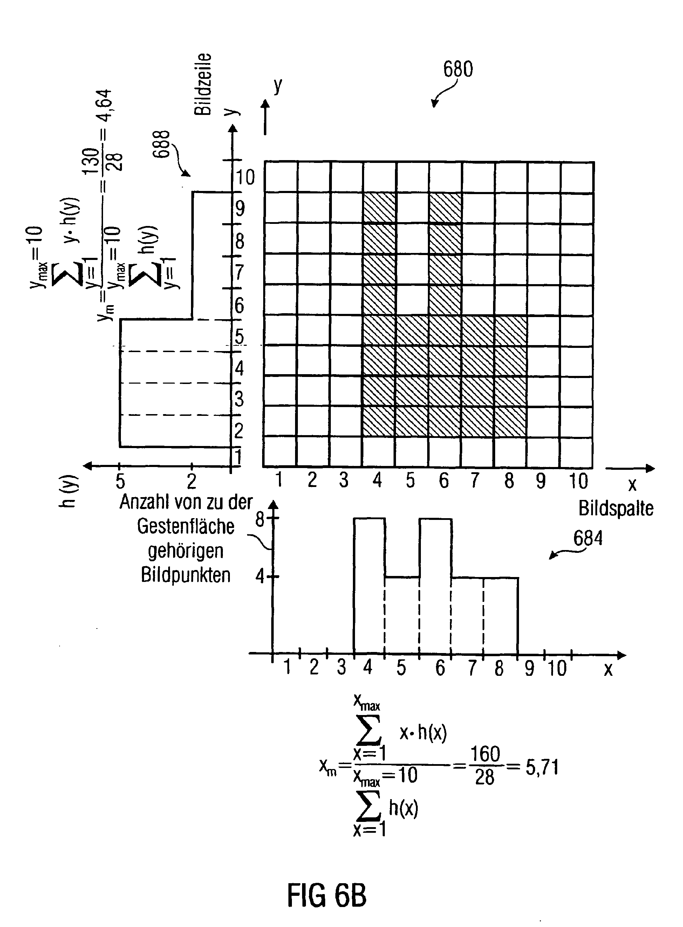

Die Bestimmung der Flächenparameter 620 (oder zumindest einiger der Flächenparameter 620) kann beispielsweise unter Verwendung eines oder mehrerer Histogramme erfolgen. Beispielsweise können Histogramme verwendet werden, wie sie in der Figur 6B gezeigt sind.

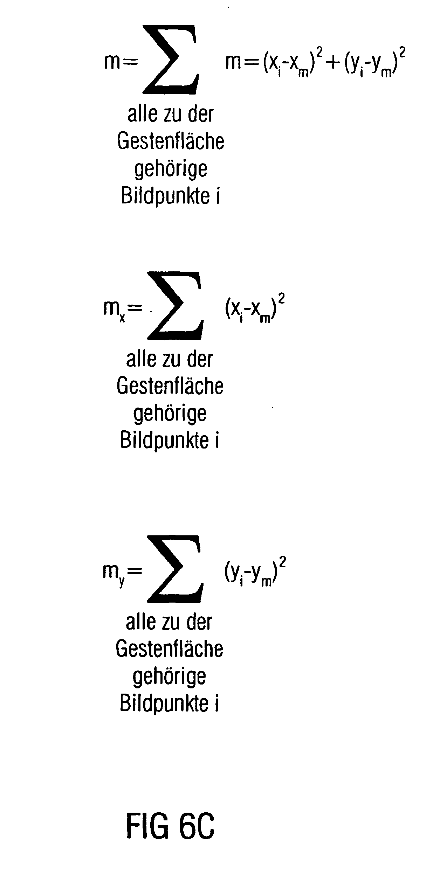

Figur 6B zeigt eine schematische Darstellung eines Bildes bzw. eines Bildausschnitts zusammen mit einem zugehörigen x-Häufigkeits-Histogramm und einem zugehörigen y-Häufigkeits-Histogramm. Das in der Figur 6B gezeigte Bild ist in seiner Gesamtheit mit 680 bezeichnet. Das Bild 680 umfasst beispielsweise eine Mehrzahl von Bildpunkten, die in Bildzeilen und Bildspalten angeordnet sind. Die Bildzeilen verlaufen beispielsweise entlang einer x-Richtung, und die Bildspalten verlaufen entlang einer y-Richtung. Die Bildzeilen sind beispielsweise von 1 bis 10 durchnummeriert. Die Bildspalten sind ebenso von 1 bis 10 durchnummeriert. Das Bild 680 umfasst Bildpunkte, die zu einer Gesten-Fläche gehören (schraffiert dargestellt) und Bildpunkte, die nicht zu einer Gesten-Fläche gehören (ohne Schraffur dargestellt). Ein Spalten-Histogramm 684 beschreibt beispielsweise eine Anzahl von Bildpunkten, die zu der Gesten-Fläche gehören, für verschiedene Spalten. Wie aus dem Spalten-Histogramm 684 ersichtlich ist, umfassen beispielsweise die Spalten 1, 2 und 3 keine zu der Gesten-Fläche gehörigen Bildpunkte. Die vierte Spalte umfasst beispielsweise acht zu der Gesten-Fläche gehörige Bildpunkte, ebenso wie die sechste Spalte. Die fünfte, siebte und achte Spalte umfassen jeweils vier zu der Gesten-Fläche gehörige Bildpunkte. Die Bildspalten 9 und 10 umfassen keine zu der Gesten-Fläche gehörigen Bildpunkte. Die entsprechende Häufigkeitsverteilung in Abhängigkeit von der Spaltennummer (1 bis 10) ist in dem Spalten-Histogramm 684 gezeigt. Die Figur 6 zeigt ferner ein Zeilen-Histogramm, in dem die Anzahl der Bildpunkte, die zu der Gesten-Fläche gehören, für die verschiedenen Zeilen des Bildes 680 eingetragen sind. Beispielsweise umfasst die erste Bildzeile keine zu einer Gesten-Fläche gehörigen Bildpunkte. Die zweite, dritte, vierte und fünfte Zeile umfassen beispielsweise je fünf zu einer Gesten-Fläche gehörige Bildpunkte. Die Zeilen 6, 7, 8 und 9 umfassen jeweils zwei zu der Gesten-Fläche gehörige Bildpunkte. Die Zeile 10 umfasst keinen zu der Gesten-Fläche gehörigen Bildpunkt.

Ein Flächen-Schwerpunkt des Bildes 860 (bzw. der zu der Gesten-Fläche gehörigen Bildpunkte) kann beispielsweise unter Verwendung der Histogramme 684, 688 berechnet werden (oder auch in anderer Weise). Formeln für die Berechnung des Flächen-Schwerpunkts der Gesten-Fläche in x-Richtung sowie in y-Richtung sind in der Figur 6B gezeigt. Ein Flächen-Schwerpunkt in x-Richtung ist beispielsweise mit xₘ bezeichnet. Eine Bildspalte ist mit x bezeichnet. Ein maximaler Spaltenindex ist mit xₘₐₓ bezeichnet. Eine Anzahl von Bildpunkten der Bildspalte x, die zu der Gesten-Fläche gehören, ist mit h (x) bezeichnet. Entsprechende Definitionen gelten auch für die Bildzeilen y.

Unter Verwendung der in der Figur 6B gezeigten Formeln kann beispielsweise der Schwerpunkt des Bildes 680 bzw. der darin dargestellten Gestenfläche in x-Richtung bzw. Bildspalten-Richtung und in y-Richtung bzw. Bildzeilen-Richtung bestimmt werden. Entsprechende Bestimmungen können beispielsweise durch den Schwerpunkt-Bestimmer 630 erfolgen.

Ferner kann alternativ oder zusätzlich eine Ausdehnung des Bildes 680, beispielsweise in Bildspalten-Richtung und/oder in Bildzeilen-Richtung, bestimmt werden. Bei dem Beispielbild gemäß der Figur 6B umfasst die Gesten-Fläche beispielsweise fünf Bildspalten (Bildspalten 4-8) und acht Bildzeilen (Bildzeilen 2-9). Die entsprechende Ausdehnung kann ohne weiteres durch den Ausdehnungs-Bestimmer 640 bestimmt werden.

Figur 6C zeigt Formeln zur Bestimmung eines Gesamtdrehmoments m, eines Drehmoments mₓ in x-Richtung und eines Drehmoments m_{y} in y-Richtung.

Das Gesamt-Drehmoment kann berechnet werden als Summe, über alle zu der Gesten-Fläche gehörigen Bildpunkte mit Index i, des quadrierten Abstands der Bildpunkte von dem Schwerpunkt der Gesten-Fläche mit Koordinaten xₘ und yₘ. Entsprechend kann ein Drehmoment mₓ in x-Richtung und ein Drehmoment m_{y} in y-Richtung bestimmt werden, wie es in der Figur 6C gezeigt ist.

### Beispiel - Gesten

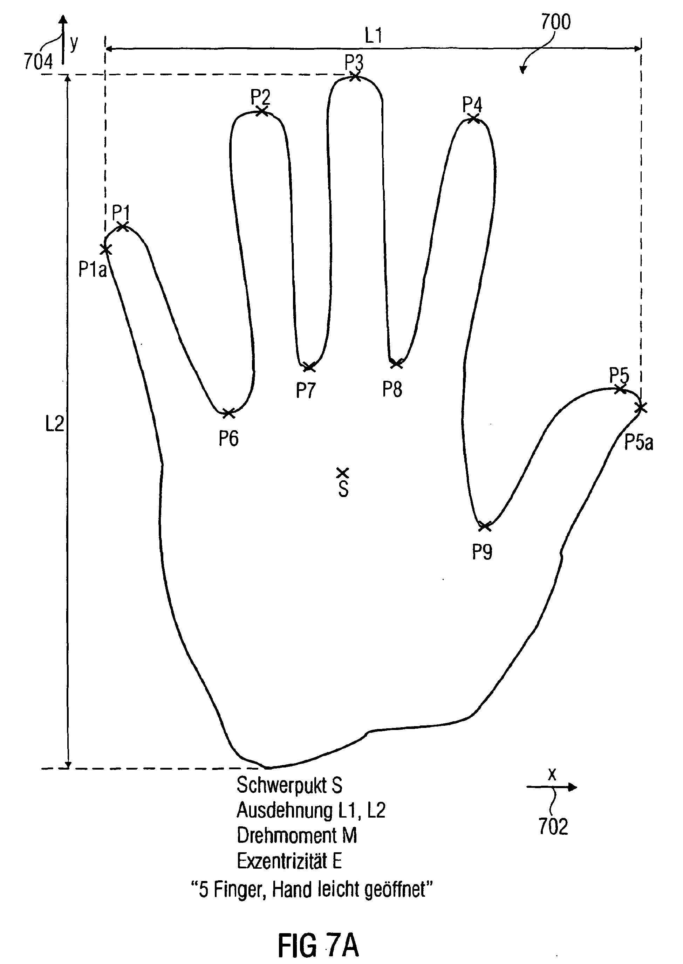

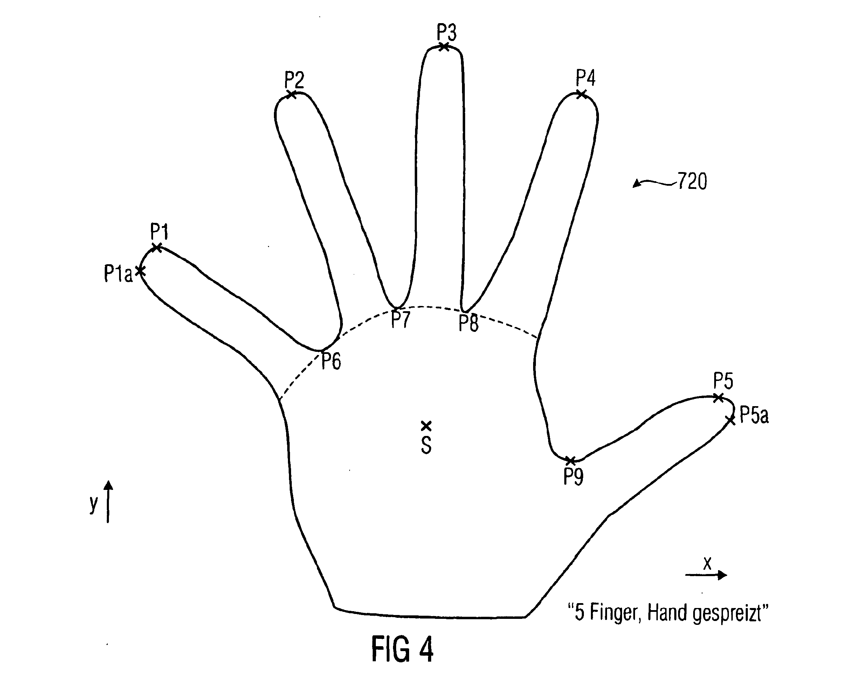

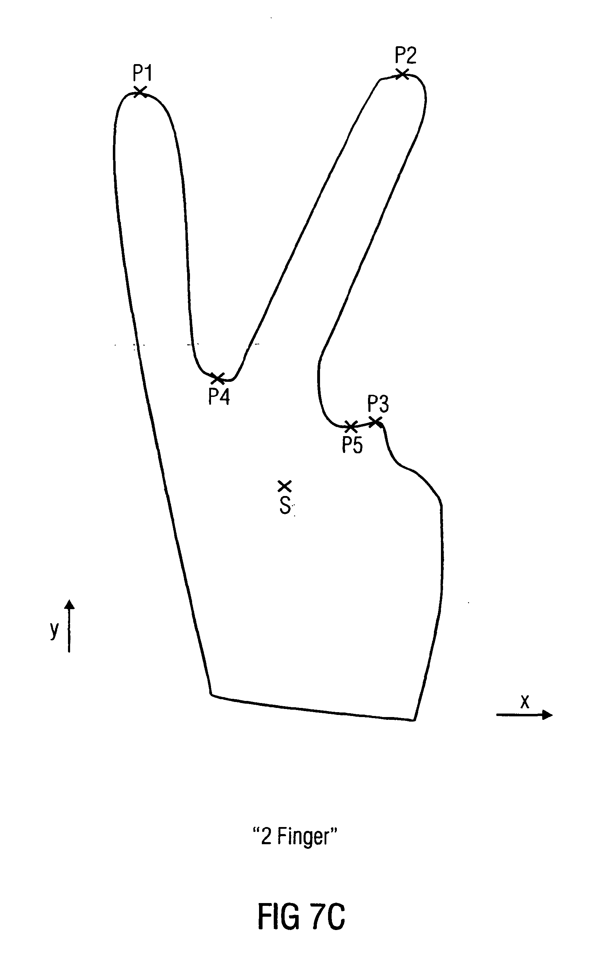

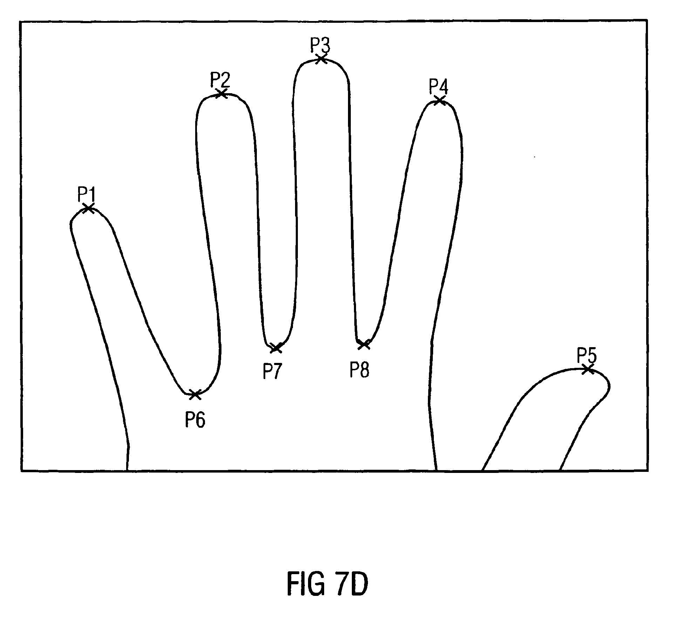

Im Folgenden werden Bezug nehmend auf die Figuren 7a, 7b, 7c und 7d verschiedene Gesten sowie darin identifizierbare Gesten-Elemente beschrieben.

Die Fig. 7a zeigt eine schematische Darstellung einer ersten Geste, die auch als "Fünf Finger, Hand leicht geöffnet" bezeichnet wird. Die Darstellung gemäß der Fig. 7a wird mit 700 bezeichnet. Das Bild der in der Fig. 7a gezeigten Geste umfasst eine Mehrzahl von charakteristischen Gesten-Elementen. Geht man davon aus, dass das Bild in Bezug auf eine x-Richtung 702 und eine dazu eine näherungsweise Orthogonale y-Richtung 704 definiert ist, so weist das Bild der Geste eine Mehrzahl von zumindest lokalen Extrempunkten P1, P2, P3, P4, P5, P6, P7, P8, P9 in y-Richtung auf. Eine Umrisslinie der Gesten-Fläche (Handfläche) wird beispielsweise in einer Umgebung des lokalen Extremums P1 durch einen nach unten geöffneten Ausschnitt aus einem Kreisbogen bzw. Ellipsenbogen angenähert. In ähnlicher Weise wird die Umrisslinie der Gesten-Flächen an den Extrempunkten P2, P3, P4, P5 durch nach unten geöffnete Kreisbögen bzw. Ellipsenbögen (beispielsweise durch Ausschnitte aus Vollbögen bzw. aus vollen Kreisen oder Ellipsen) angenähert. In ähnlicher Weise wird die Umrisslinie der Gesten-Fläche an den Extrempunkten P6, P7, P8, P9 durch nach oben geöffnete Bögen (zum Beispiel Ausschnitte aus Kreisbögen bzw. Ellipsenbögen) angenähert.

Zudem können natürlich auch Extrempunkte in x-Richtung ausgewertet werden. Beispielsweise wird die Umrisslinie der Gesten-Fläche an dem Extrempunkt P1a durch einen nach links geöffneten Bogen (beispielsweise einen Ausschnitt aus einem Kreisbogen bzw. Ellipsenbogen) angenähert. Die Umrisslinie der Gesten-Fläche wird beispielsweise an dem Extrempunkt P5a durch einen nach links geöffneten Bogen (beispielsweise durch einen Abschnitt aus einem Kreisbogen bzw. Ellipsenbogen) angenähert. Weitere Extrempunkte, beispielsweise in x-Richtung oder in y-Richtung, können natürlich ebenso berücksichtigt werden, wurden hier aber aus Gründen der Übersichtlichkeit weggelassen.

Ferner weist die Gesten-Fläche (Handfläche) beispielsweise einen Schwerpunkt S auf, der wie oben beschrieben bestimmt werden kann. Außerdem weist die Gesten-Fläche (Handfläche)beispielsweise eine Ausdehnung L1 in x-Richtung und eine Ausdehnung L2 in y-Richtung auf, wobei die Ausdehnungen L1 und L2 beispielsweise in der oben beschriebenen Art und Weise bestimmt werden können. Ferner weist die Gesten-Fläche, (hier: Handfläche)ein Drehmoment M auf, das auf die oben angegebene Weise berechnet werden kann. Außerdem kann die Gesten-Fläche (Handfläche) auch eine Exzentrizität E aufweisen.

Die in der Fig. 7a gezeigten Geste "5-Finger, Hand leicht geöffnet" kann somit beispielsweise durch die Lage der Extrempunkte P1, P2, P3, P4, P5, P6, P7, P8, P9, P1a, P5a sowie durch die Flächenparameter "Position des Schwerpunkts S", "Ausdehnung L1 in x-Richtung", "Ausdehnung L2 in y-Richtung", "Drehmomente M" und "Exzentrizität E" beschrieben werden. Freilich kann auch nur eine Teilmenge der genannten Parameter verwendet werden, um die in der Fig. 7a gezeigte Geste zu beschreiben.

Fig. 7b zeigt eine schematische Darstellung einer zweiten Geste, die auch als "5-Finger, Hand gespreizt" bezeichnet wird. Die Darstellung der Geste gemäß der Fig. 7b wird mit 720 bezeichnet. Auch die in der Fig. 7 gezeigte Geste kann beispielsweise durch die Extrempunkte P1, P2, P3, P4, P5, P6, P7, P8, P9, P1a, P5a beschrieben werden. Ebenso können auch bei der Geste gemäß der Fig.7b die im Zusammenhang mit der Geste gemäß der Fig. 7a genannten Flächenparameter bestimmt werden.

Wie aus einem Vergleich der Fig. 7a mit der Fig. 7b ohne Weiteres ersichtlich ist, unterscheidet sich beispielsweise die relative Lage der Extrempunkte P1 bis P9 bei den Gesten gemäß der Fig. 7a und 7b, was beispielsweise eine Unterscheidung der Gesten ermöglicht.

Fig. 7c zeigt eine schematische Darstellung einer weiteren Geste, die auch als "2-Finger" bezeichnet ist. Bei der in der Fig. 7c gezeigten Geste sind beispielsweise weniger lokale Extrempunkte ersichtlich als bei den in den Figuren 7a und 7b gezeigten Gesten, nämlich beispielsweise nur die Extrempunkte P1, P2, P3, P4 und P5.

Fig. 7d zeigt eine schematische Darstellung eines Ausschnitts der ersten Geste, wie sie in der Fig. 7a gezeigt ist. Der in der Fig. 7d gezeigte Ausschnitt aus der ersten Geste "5-Finger, Hand leicht geöffnet" lässt erkennen, dass nicht immer alle Extrempunkte, die zu einer Geste gehören, in dem jeweiligen Bildausschnitt erkennbar sein müssen.

### Erstellung einer Gesten-Beschreibung

Im Folgenden wird erläutert, wie anhand einer Information über identifizierte Gesten-Elemente eine Gesten-Beschreibung erstellt werden kann. Eine Information über die identifizierte Gesten-Elemente kann dabei beispielsweise eine Lage von Kreisbögen, Ellipsenbögen, von Kreisbogenausschnitten, von Ellipsenbogenausschnitten oder von näherungsweise geraden Linien beschreiben. Die Information über die identifizierten Gesten-Elemente kann beispielsweise durch einen Hough-Transformator geliefert werden, beispielsweise durch den Hough-Transformator 130 oder durch den Konturlinienbestimmer 250. Die Information über die identifizierten Gesten-Elemente kann beispielsweise in Form von Konturparametern geliefert werden, beispielsweise in Form von Konturparametern 252 bzw. 520. So kann der Hough-Transformator, der im Folgenden noch im Detail erläutert werden wird, ausgelegt sein, um Bögen, beispielsweise Ausschnitte aus Kreisbögen oder Ellipsenbögen, in einem Bild einer Geste (oder in einem daraus resultierten Kantenbild) zu identifizieren. Der Hough-Transformator 130 kann beispielsweise ausgelegt sein, um Ausschnitte aus einem Kreisbogen oder einem Ellipsenbogen zu erkennen, die nach links geöffnet sind, oder die nach rechts geöffnet sind, oder die nach unten geöffnet sind, oder die nach oben geöffnet sind. Der Hough-Transformator kann dabei ausgelegt sein, um Ausschnitte aus einem Kreisbogen, die nach links geöffnet sind, von Ausschnitten aus einem Kreisbogen, die nach rechts geöffnet sind, zu unterscheiden. Ebenso kann der Hough-Transformator ausgelegt sein, um Ausschnitte aus einem Kreisbogen, die nach oben geöffnet sind, von Ausschnitten aus einem Kreisbogen, die nach unten geöffnet sind, zu unterscheiden. Zusammenfassend ist somit festzuhalten, dass der Hough-Transformator insgesamt in der Lage sein kann, Bögen (Ausschnitte aus Kreisbögen bzw. Ellipsenbögen), die in unterschiedlichen Richtungen geöffnet sind, zu unterscheiden.

Somit kann der Hough-Transformator 130 eine Information 132 über identifizierte Gesten-Elemente in Form von Konturparametern liefern.

Beispielsweise kann der Hough-Transformator für identifizierte Kreisbögen oder Ellipsenbögen eine Information über eine Richtung bzw. Orientierung (nach oben orientiert, nach unten orientiert, nach links orientiert, nach rechts orientiert; bzw. nach oben offen, nach unten offen, nach links offen, nach rechts offen) der Kreisbögen oder Ellipsenbögen liefern. Beispielsweise kann der Hough-Transformator ausgelegt sein, um zumindest zwei verschiedene Orientierungen der Kreisbögen oder Ellipsenbögen zu unterscheiden (z.B. in der ersten Richtung orientiert und entgegen der ersten Richtung orientiert; bzw. in der ersten Richtung offen und entgegen der ersten Richtung offen). In einigen Ausführungsbeispielen kann der Hough-Transformator ausgelegt sein, um mehr als zwei verschiedene Orientierungen von Kreisbögen oder Ellipsenbögen zu unterscheiden, wie oben erläutert.

Der Hough-Transformator kann ferner für identifizierte Ausschnitte aus Kreisbögen oder Ellipsenbögen eine Information über ein Extremum liefern. Beispielsweise kann der Hough-Transformator ausgelegt sein, um eine Information über einen am weitesten in einer ersten Richtung (beispielsweise x-Richtung) liegenden Punkt eines identifizierten Ausschnitts aus einem Kreisbogen und Ellipsenbogen oder eine Information über einen am weitesten in einer zweiten Richtung (z.B. y-Richtung) gelegenen Punkt eines identifizierten Ausschnitts aus einem Kreisbogen und Ellipsenbogen liefern. Der Hough-Transformator kann im Hinblick auf die identifizierten Abschnitte aus den Kreisbögen oder Ellipsenbögen beispielsweise Koordinaten eines derartigen Extrempunktes liefern. Beispielsweise kann der Hough-Transformator einen Extrempunkt (beispielsweise in einer ersten Richtung oder x-Richtung, oder einer zweiten Richtung bzw. y-Richtung, oder in einer der ersten Richtung entgegengesetzten Richtung, oder in einer der zweiten Richtung entgegengesetzten Richtung) durch zwei Koordinaten beschreiben. Alternativ dazu kann es ausreichend sein, wenn der Hough-Transformator lediglich beispielsweise einen Mittelpunkt des jeweiligen Kreises oder der jeweiligen Ellipse durch Koordinaten beschreibt, wenn ein Ausschnitt eines betreffenden Kreises oder einer betreffenden Ellipse in dem Bild identifiziert wird.

Ferner kann der Hough-Transformator, optional, eine Information über einen Krümmungsradius eines identifizierten Ausschnitts aus einem Kreisbogen oder einem Ellipsenbogen liefern.

Ein Satz von Kontur-Parametern, der einen identifizierten Bogen (Ausschnitt aus einem Kreisbogen oder Ellipsenbogen) beschreibt, kann somit beispielsweise Informationen über die folgenden Parameter des Kreisbogens oder Ellipsenbogens enthalten:
- Richtung (nach oben offen, nach unten offen, nach links offen, nach rechts offen);
- Position des Extremums (x-Koordinate und y-Koordinate); und
- Krümmungsradius (optional).

Optional kann der Hough-Transformator auch eine Information über identifizierte gerade Strecken, die zu dem Umriss der Gesten-Fläche gehören, liefern. Beispielsweise kann der Hough-Transformator ausgelegt sein, um eine Information über eine Richtung einer identifizierten geraden Strecke zu liefern. Zusätzlich kann der Hough-Transformator weitere Informationen im Hinblick auf die Lage einer identifizierten geraden Strecke liefern. Beispielsweise kann der Hough-Transformator für eine gerade Strecke einen x-Achsenabschnitt und eine Richtung liefern. Dadurch wird beispielsweise ein Verlauf einer Geraden bereits eindeutig festgelegt. In einigen Ausführungsbeispielen kann der Hough-Transformator zusätzliche Informationen über die Lage einer Strecke liefern, wie z.B. eine Information über einen Anfangspunkt und einen Endpunkt der Strecke, oder eine Information über eine Länge und einen Mittelpunkt der Strecke. Allerdings sei darauf hingewiesen, dass es nicht zwingend notwendig ist, eine Information über gerade Strecken zu verwenden. Wird eine Information über gerade Strecken verwendet, so kann diese beispielsweise einen oder mehrere der folgenden Parameter aufweisen:
- Richtung (z.B. Winkel gegen eine Horizontale); und
- Anfangspunkt und Endpunkt, oder Länge und Mittelpunkt.

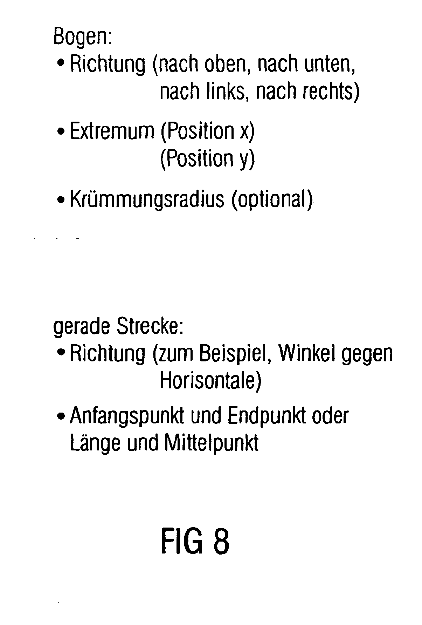

Figur 8 zeigt eine schematische Darstellung von Parametern zur Beschreibung von Bögen oder geraden Strecken, die beispielsweise durch einen Hough-Transformator geliefert werden können.

### Beispiel-Gestenbeschreibungen

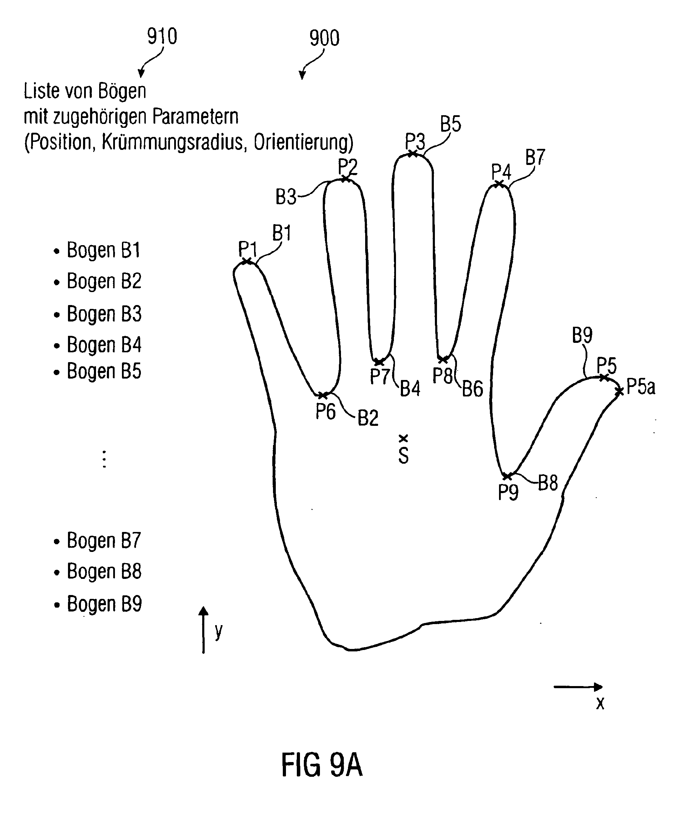

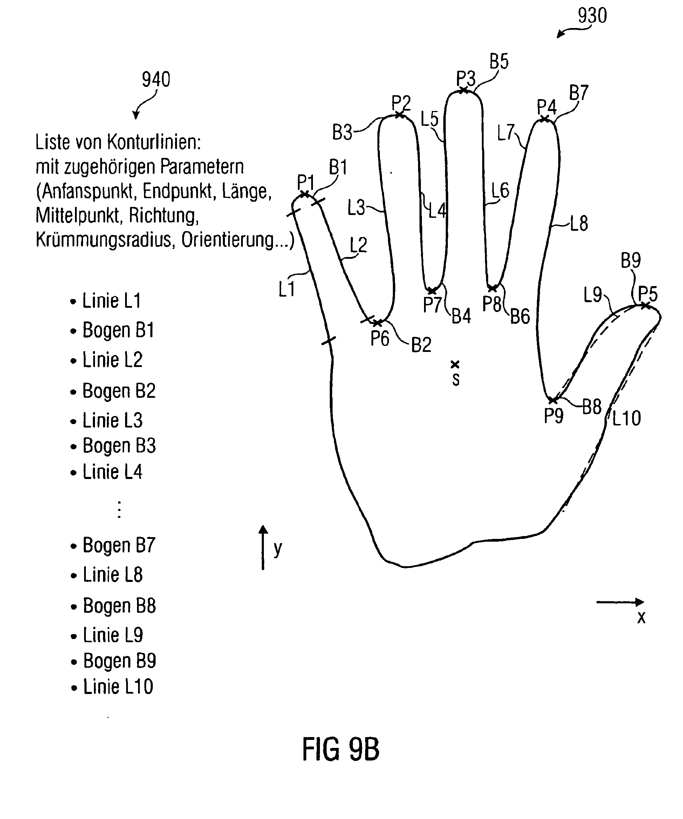

Im Folgenden werden anhand der Figuren 9A und 9B verschiedene Gesten-Beschreibungen der Geste 1 ("5 Finger, Hand leicht geöffnet") beschrieben.

Figur 9A zeigt eine schematische Darstellung der ersten Geste in Verbindung mit einer beispielhaften zugehörigen Gesten-Beschreibung. Die schematische Darstellung gemäß der Figur 9A ist in ihrer Gesamtheit mit 900 bezeichnet. Die schematische Darstellung 900 zeigt eine Liste 910 von Bögen mit zugehörigen Parametern. Dabei wird davon ausgegangen, dass die erste Geste in einer Umgebung des Extrempunkts P1 durch einen Ausschnitt aus einem nach unten (z.B. in negativer y-Richtung) geöffneten Kreisbogen oder Ellipsenbogen B1 angenähert wird. Dieser Ausschnitt aus dem Kreisbogen oder Ellipsenbogen kann im Hough-Transformator erkannt und durch zugehörige Parameter (z.B. Position, Krümmungsradius und Orientierung) beschrieben werden. In ähnlicher Weise wird die erste Geste in einer Umgebung des Extrempunkts P2 durch einen Bogen B3 angenähert, in einer Umgebung des Extrempunkts P3 durch einen Bogen B5, in einer Umgebung des Extrempunkts P4 durch einen Bogen B7, und in einer Umgebung des Extrempunkts P5 durch einen Bogen B9. Zudem wird die Umrisslinie der Gesten-Fläche der ersten Geste in einer Umgebung des Extrempunkts P6 durch einen Bogen B2, in einer Umgebung des Extrempunkts P7 durch einen Bogen B4, in einer Umgebung des Extrempunkts P8 durch einen Bogen B6 und in einer Umgebung des Extrempunkts P9 durch einen Bogen B8 angenähert.

Die Liste 910 von Bögen kann somit beispielsweise die Bögen B1 bis B9 durch zugehörige Parameter, wie beispielsweise Position, Orientierung und -optional- Krümmungsradius beschreiben. Die Umrisslinie der Gesten-Fläche der ersten Geste wird somit beispielsweise durch eine Liste von Parametern von Bögen bzw. von Ausschnitten aus vollen Bögen (z.B. Kreisbögen oder Ellipsenbögen) beschrieben.

Die Liste 910 kann beispielsweise gemäß einer vorgegebenen Regel geordnet sein. Beispielsweise können die durch ihre Parameter beschriebenen Bögen gemäß einer Anordnung entlang einer ersten Richtung (z.B. x-Richtung) sortiert sein. So sind beispielsweise die Bögen B1, B2, B3, B4, B5, B6, B7, B8, B9 in aufsteigender x-Richtung angeordnet. Dementsprechend kann auch die Liste 910 geordnet sein. Alternativ oder zusätzlich kann beispielsweise auch als Sortierkriterium gefordert werden, dass jeweils abwechselnd ein nach unten geöffneter Bogen und ein nach oben geöffneter Bogen (bzw. Bogen-Ausschnitt) in der Liste 910 enthalten sind, wobei zusätzlich noch die Anordnung entlang einer bestimmten Richtung, z.B. entlang x-Richtung, herangezogen werden kann.

Somit ist festzuhalten, dass basierend auf den entlang einer Umrisslinie einer Gesten-Fläche identifizierten Bögen (bzw. Bogen-Ausschnitten) eine Liste von durch Parameter beschriebenen Bögen erzeugt werden kann, wie dies in der Figur 9A gezeigt ist. Die Liste 910 von durch Parameter beschriebenen Bögen kann beispielsweise als Gesten-Beschreibung 142 bzw. als Gesten-Beschreibung 271 angesehen werden.

Im Folgenden wird anhand der Figur 9B eine weitere Gesten-Beschreibung erläutert. Figur 9B zeigt zu diesem Zweck eine schematische Darstellung der ersten Geste, zusammen mit einer weiteren beispielhaften zugehörigen Gesten-Beschreibung. Eine Umrisslinie der ersten Geste, wie sie in der Figur 9B gezeigt ist, kann beispielsweise zumindest näherungsweise als eine Folge von geraden Strecken und Bogenabschnitten (beispielsweise in Form von Ausschnitten aus Kreisbögen oder Ellipsenbögen) dargestellt werden. Betrachtet man den Finger-Abschnitt der ersten Geste, wie sie in der Figur 9B gezeigt ist, so kann die Umrisslinie dieses Finger-Abschnitts beispielsweise näherungsweise durch eine Folge der Strecken L1 bis L10 und der Bogenabschnitte B1 bis B9 dargestellt werden. Beispielsweise kann die Umrisslinie des Finger-Abschnitts durch die Strecken und Bogenabschnitte L1, B1, L2, B2, L3, B3, L4, B4, L5, B5, L6, B6, L7, B7, L8, B8, L9, B9, L10 angenähert werden. Beispielsweise können jeweils abwechselnd ein Streckenabschnitt und ein Bogenabschnitt auftreten. Allerdings gibt es auch andere Ausführungsbeispiele, bei denen mehrere Streckenabschnitte ohne einen dazwischenliegenden Bogenabschnitt auftreten können.

Die schematische Darstellung 930 zeigt eine Liste 940 von Konturlinien-Abschnitten, die beispielsweise durch zugehörige Parameter beschrieben werden können. BogenAbschnitte können beispielsweise durch ihre Position, durch ihre Orientierung und ggf. ihren Krümmungsradius beschrieben werden. Gerade Strecken können beispielsweise durch ihre Länge und Richtung oder durch andere Parameter (z.B. durch Anfangspunkt und Endpunkt oder Mittelpunkt) beschrieben werden.

Die Liste 940 kann beispielsweise gemäß einem vorgegebenen Kriterium sortiert sein. Beispielsweise kann die Liste entsprechend einer "natürlichen" Reihenfolge der Bogen-Ausschnitte und Strecken sortiert sein, so dass die Liste die einzelnen Abschnitte der Umrisslinie der Gesten-Fläche in einer "natürlichen" Reihenfolge beschreibt.

Eine Sortierung kann aufgrund verschiedener Kriterien erfolgen. Beispielsweise kann vorgegeben sein, dass jeweils zwischen einem lokalen Maximum (z.B. einem nach unten offenen Bogen-Ausschnitt) und einem lokalen Minimum (z.B. einem nach oben offenen Bogenausschnitt) eine gerade Strecke liegt. Beispielsweise liegt die gerade Strecke L2 zwischen dem ersten Bogenausschnitt B1 und dem zweiten Bogenausschnitt B2. Benachbarte Bogenausschnitte können dabei beispielsweise basierend auf ihrem Abstand sowie aufgrund der Orientierung identifiziert werden. Eine Linie kann beispielsweise als zwischen zwei Bogenausschnitten verlaufend identifiziert werden, indem der Abstand der Linie von den beiden Extrempunkten, die zu den Bogen-Ausschnitten gehören (z.B. P1 und P6), bestimmt wird. Betrachtet man beispielsweise die Punkte P1 und P6, so lässt sich feststellen, dass die Linie L2 diejenige gerade Strecke in dem Bild ist, die P1 und P6 am nächsten kommt. Somit kann beispielsweise diese Lage-Relation ausgewertet werden, um die einzelnen Bogen-Ausschnitte und geraden Strecken zu ordnen.

Allerdings kommen auch andere Anordnungsschemata in Frage. Beispielsweise kann die Liste auch so geordnet werden, dass zunächst alle Bogenausschnitte (sowie die dazugehörigen Parameter) in der Liste enthalten sind, dass anschließend die geraden Strecken (sowie ihre Parameter) aufgelistet sind. Natürlich ist auch eine umgekehrte Reihenfolge in der Liste 940 möglich.

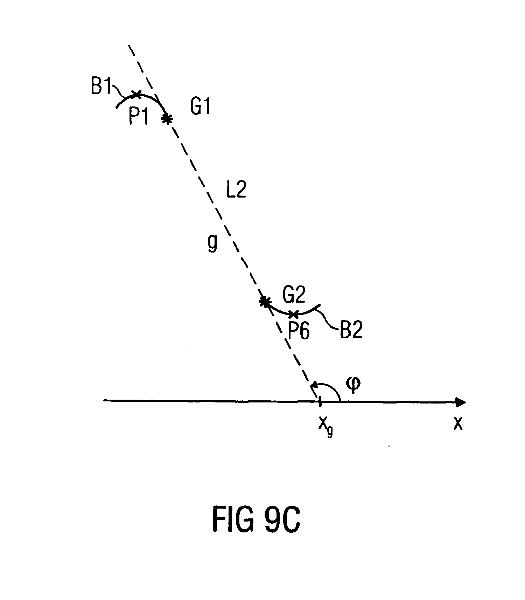

Im Folgenden wird noch kurz anhand der Figur 9C erläutert, wie die Lage-Details im Hinblick auf eine gerade Strecke bestimmt werden können, die zwei Bogen-Ausschnitte verbindet. Beispielsweise kann durch eine Hough-Transformation eine Information erhalten werden, die die Lage sowie den Krümmungsradius des ersten Bogen-Ausschnitts B1 sowie die Lage und den Krümmungsradius des zweiten Bogen-Ausschnitts B2 beschreibt, und die zudem die Orientierungen (nach unten offen bzw. nach oben offen) der Bogen-Ausschnitte B1, B2 beschreibt. Ferner kann durch eine Hough-Transformation relativ einfach eine Information erhalten werden, die eine Gerade in einem Bild durch zwei Lage-Parameter beschreibt. So kann eine Gerade beispielsweise durch zwei Parameter beschrieben werden, nämlich beispielsweise durch eine Koordinate, bei der sie die x-Achse schneidet (hier mit x_{g} bezeichnet), und durch eine Richtungsangabe (beispielsweise einen Winkelwert ϕ). Dies ist in der Figur 9C gezeigt. Wird also eine Gerade beispielsweise durch den Schnittpunkt mit der x-Achse und durch eine Richtungs-Angabe ϕ, definiert, und sind ferner die genannten Lage-Parameter der Bögen B1 und B2 bekannt, so kann beispielsweise anhand einfacher geometrischer Überlegungen ermittelt werden, an welchen Punkten G1, G2 die Gerade g die Bögen B1 und B2 tangiert bzw. schneidet. Somit ist der Anfangspunkt G1 und der Endpunkt G2 einer Strecke L2, die den ersten Bogen B1 mit dem zweiten Bogen B2 verbindet, bekannt.

In anderen Worten wird durch eine Hough-Transformation eine Information erhalten, die eine Lage einer Geraden in dem Bild (oder einer vorverarbeiteten Version desselben) beschreibt, so kann bei Kenntnis der Bögen B1, B2 beispielsweise eine Information über den Anfangspunkt G1 und den Endpunkt G2 einer Strecke, die die Bögen verbindet, erhalten werden. Alternativ kann auch eine Information über die Länge der entsprechenden Strecke erhalten werden, je nachdem welche Information gewünscht ist. Natürlich kann es in einigen Ausführungsbeispielen auch ausreichend sein, eine Information über die Gerade zu verwenden.

### Gesten-Beschreibungs-Ersteller

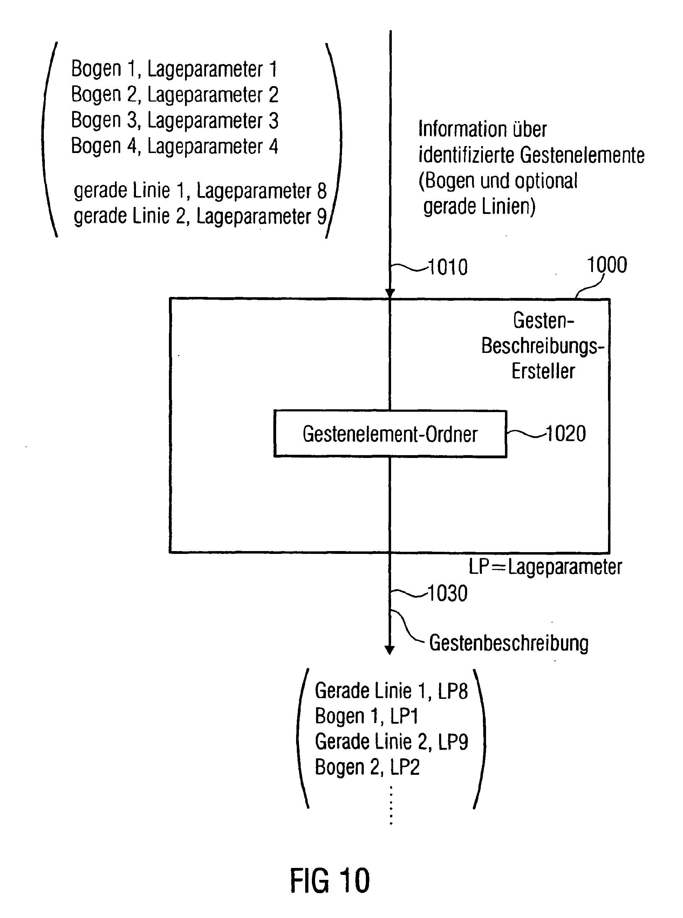

Im Folgenden werden Bezug nehmend auf die Fig. 10, 11 und 12 verschiedene Details eines Gesten-Beschreibungs-Erstellers erläutert.

### Gesten-Beschreibungs-Ersteller-erstes Ausführungsbeispiel

Fig. 10 zeigt ein Blockschaltbild eines Gesten-Beschreibungs-Erstellers, gemäß einem Ausführungsbeispiel der Erfindung. Der Gesten-Beschreibungs-Ersteller gemäß der Fig. 10 ist in seiner Gesamtheit mit 1000 bezeichnet. Der Gesten-Beschreibungs-Ersteller 1000 ist ausgelegt, um eine Information über identifizierte Gestenelemente zu empfangen, die mit 1010 bezeichnet ist. Die Information 1010 kann beispielsweise eine ungeordnete Auflistung von Parametern verschiedener in dem Bild oder einer vorverarbeiteten Version des Bildes identifizierter Bögen (z.B. Kreisbögen oder Ellipsenbögen) umfassen. Die Information über die Parameter der identifizierten Kreisbögen oder Ellipsenbögen kann beispielsweise durch den Hough-Transformator erhalten werden.

Optional kann die Information 1010 ferner eine (beispielsweise ungeordnete) Auflistung von Parametern einer oder mehrerer in dem Bild oder einer vorverarbeiteten Version des Bildes identifizierter gerader Linien umfassen. Bögen können beispielsweise durch entsprechende Lage-Parameter und (optional) Größenparameter beschrieben werden, wie diese oben erläutert wurden (z.B. Orientierung und/oder Extrempunkt-Koordinaten und/oder MittelpunktsKoordinaten und/oder Krümmungsradius und/oder andere Parameter). Gerade Linien können ebenso durch verschiedene Parameter beschrieben werden (z.B. Richtung und/oder Schnittpunkt mit einer Koordinatenachse und/oder Abstand von einem Ursprung und/oder Länge und/oder Anfangspunkt und/oder Endpunkt und/oder Mittelpunkt).

Der Gesten-Beschreibungs-Ersteller 1000 kann beispielsweise einen Gestenelement-Ordner 1020 aufweisen, der ausgelegt ist, um als die Gesten-Beschreibung 1030 eine geordnete Beschreibung der identifizierten Gestenelemente zu erhalten. Beispielsweise kann der Gestenelement-Ordner 1020 ausgelegt sein, um die einzelnen Gestenelemente (also z.B. Bögen und dazwischenliegende gerade Linien) in der Gesten-Beschreibung 1030 so zu ordnen, dass die geordneten identifizierten Gestenelemente in der Gesten-Beschreibung 1030 eine durchgehende Umrisslinie einer Gestenfläche beschreiben.

In anderen Worten, der Gestenelement-Ordner 1020 kann beispielsweise, wie oben unter anderem anhand der Fig. 9 erläutert, basierend auf einer Anordnungsregel die durch die Informationen 1010 beschriebenen Gestenelemente anordnen, um die Gesten-Beschreibung 1030 so zu erhalten, dass die Gesten-Beschreibung aufeinanderfolgende Abschnitte der Umrisslinie in entsprechender (aufeinanderfolgender) Reihenfolge beschreibt. In anderen Worten, die Gesten-Beschreibung 1030 kann so erzeugt werden, dass die einzelnen Gestenelemente (beispielsweise Bögen und gerade Strecken) in der Gesten-Beschreibung 1030 entsprechend ihrer tatsächlichen Folge entlang der Umrisslinie der Gestenfläche geordnet sind. Damit entsteht eine besonders aussagekräftige und gut weiterverarbeitbare Gesten-Beschreibung 1030. Die Gesten-Beschreibung 1030 kann somit beispielsweise besonders leicht im Hinblick auf Drehungen verarbeitet werden, wie im Folgenden noch erläutert wird.

Im Übrigen kann der Gesten-Beschreibungs-Ersteller 1000 optional ausgelegt sein, um die Gesten-Beschreibung 1030 so zu erstellen, dass die Gesten-Beschreibung 1030 eine Beschreibung einer relativen Lage von zu einer Umrisslinie einer Gestenfläche gehörigen Gestenelementen (z.B. Bögen und optional auch geraden Strecken) umfasst. In anderen Worten, die Lage eines nachfolgenden Gestenelements kann beispielsweise Bezug nehmend auf die Lage des vorhergehenden Gestenelements beschrieben werden. Folgt beispielsweise ausgehend von einem Bogen eine gerade Strecke, so kann beispielsweise die gerade Strecke dadurch definiert werden, dass sie sich ausgehend von dem Bogen in einer bestimmten Richtung und in einer bestimmten Länge erstreckt. Dadurch ist die Strecke ausreichend, relativ zu der Lage des vorhergehenden Bogens, definiert.

Eine relative Beschreibung kann aber auch dann erzielt werden, wenn beispielsweise die Information über die identifizierten Gestenelemente verschiedene Bögen bzw. Bogenausschnitte beschreibt. So kann beispielsweise in der Gesten-Beschreibung 1030 durch den Gesten-Beschreibungs-Ersteller 1000 eine Information hinzugefügt werden, die einen Abstand von Mittelpunkten von entlang der Umrisslinie der Gestenfläche aufeinanderfolgenden Bögen bzw. Bogenausschnitten beschreibt. Alternativ dazu kann der Gesten-Beschreibungs-Ersteller 1000 der Gesten-Beschreibung 1030 natürlich auch eine Information über einen Abstand zwischen entlang der Umrisslinie aufeinanderfolgenden Extrempunkten hinzufügen.

Somit kann also die Gesten-Beschreibung 1030 so erstellt werden, dass die Gesten-Beschreibung 1030 eine relative Lage von entlang der Umrisslinie aufeinanderfolgenden identifizierten Gestenelementen beschreibt.

### Gesten-Beschreibungs-Ersteller-zweites Ausführungsbeispiel

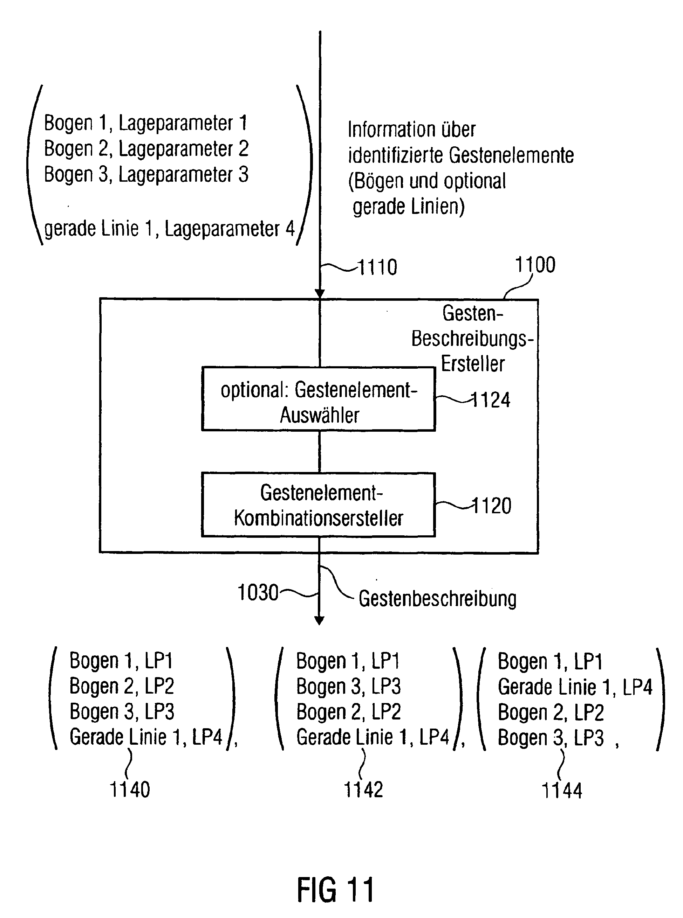

Fig. 11 zeigt ein Blockschaltbild eines Gesten-Beschreibungs-Erstellers gemäß einem weiteren Ausführungsbeispiel der Erfindung. Der Gesten-Beschreibungs-Ersteller gemäß der Fig. 11 ist in seiner Gesamtheit mit 1100 bezeichnet. Der Gesten-Beschreibungs-Ersteller 1100 ist ausgelegt, um eine Information 1110 über die identifizierte Gestenelemente (Bögen und optional gerade Linien) zu empfangen, die der Information 1010 entspricht.

Der Gesten-Beschreibungs-Ersteller 1100 kann beispielsweise einen Gestenelement-Kombinationsersteller 1120 aufweisen, der ausgelegt ist, um als die Gesten-Beschreibung 1130 eine Mehrzahl von verschiedenen Kombinationen der durch die Information 1110 beschriebenen Gestenelemente zu liefern. Umfasst die Information 1110 über die identifizierten Gestenelemente beispielsweise eine Information über drei identifizierte Bögen ("Bogen 1", "Bogen 2", "Bogen 3") mit zugehörigen Lage-Parametern und ferner eine Information über eine identifizierte gerade Linie ("gerade Linie 1") mit dazugehörigen Lage-Parametern, so kann der Gestenelement-Kombinationsersteller 1120 beispielsweise die Gesten-Beschreibung 1130 so erstellen, dass diese verschiedene Kombinationen der Gestenelemente aufweist. Drei mögliche Kombinationen sind in der Fig. 11 mit 1140, 1142 und 1144 bezeichnet. In den verschiedenen Kombinationen 1140, 1142, 1144 können die einzelnen Gestenelemente verschiedene Reihenfolgen annehmen, wie aus der Fig. 11 ohne Weiteres ersichtlich ist. Die Gestenelement-Kombinationen 1140, 1142, 1144, die durch die Gesten-Beschreibung 1130 beschrieben werden, können beispielsweise gemäß einer vorgegebenen Regel ausgewählt werden. Dabei ist es allerdings nicht zwingend notwendig, die Anordnung genau so zu wählen, dass die verschiedenen Gestenelemente entsprechend ihrer Reihenfolge entlang der Umrisslinie angeordnet sind. In manchen Fällen kann es nämlich recht schwierig sein, eine derartige Anordnung von vornherein zu bestimmen. In diesem Fall kann es im Hinblick auf die Rechenleistung effizienter sein, ohne Nutzung des Wissens über die Reihenfolge der Gestenelemente entlang der Umrisslinie verschiedene Kombinationen der Gestenelemente (in unterschiedlicher Anordnung bzw. Reihenfolge) zu erstellen und erst bei einer darauffolgenden Klassifizierung der verschiedenen Kombinationen 1140, 1142, 1144 zu ermitteln, welche der Kombinationen einer tatsächlich möglichen Geste entspricht.

Der Gesten-Beschreibungs-Ersteller 1100 kann im Übrigen optional ein Gestenelement-Auswähler 1124 aufweisen, der beispielsweise ausgelegt sein kann, um eine Teilmenge der durch die Information 1110 beschriebenen Gestenelemente auszuwählen. Dies ist insbesondere dann zweckmäßig, wenn die Information 1110 fälschlich als zu einer Geste gehörig identifizierte "falsche" Gestenelemente beschreibt.

Zusammenfassend ist festzuhalten, dass der Gesten-Beschreibungs-Ersteller 1110 beispielsweise als Gesten-Beschreibung 1130 eine Mehrzahl von verschiedenen (echten) Teilmengen der durch die Information 1110 beschriebenen Gestenelemente liefern kann, wobei die Gestenelemente einer gegebenen (echten) Teilmenge in verschiedenen der Kombinationen in verschiedenen Reihenfolgen auftreten können.

### Gesten-Beschreibungs-Ersteller-drittes Ausführungsbeispiel

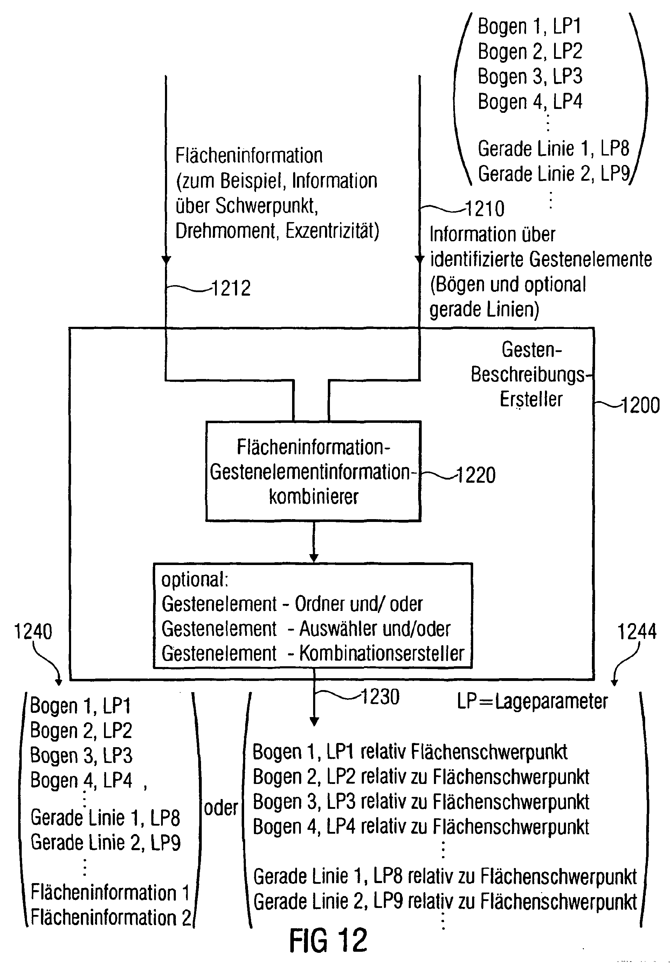

Fig. 12 zeigt ein Blockschaltbild eines Gesten-Beschreibungs-Erstellers gemäß einem weiteren Ausführungsbeispiel der Erfindung. Der Gesten-Beschreibungs-Ersteller gemäß der Fig. 12 ist in seiner Gesamtheit mit 1200 bezeichnet.

Der Gesten-Beschreibungs-Ersteller 1200 ist ausgelegt, um eine Information 1210 über identifizierte Gestenelemente und eine Flächeninformation 1212 zu empfangen. Die Information 1210 über identifizierte Gestenelemente kann beispielsweise der Information 1110 oder der Information 1010 oder der Information 132 oder der Information 252 entsprechen. Die Information 1212 kann beispielsweise der Information 262 oder der Information 620 entsprechen. Die Information 1212 kann somit eine in einem Bild (oder einer davon abgeleiteten Version des Bildes) vorhandene Gestenfläche beschreiben. Beispielsweise kann die Information 1212 eine Information über einen Schwerpunkt der Gestenfläche, eine Information über eine räumliche Ausdehnung der Gestenfläche, eine Information über ein Drehmoment der Gestenfläche und/oder eine Information über eine Exzentrizität der Gestenfläche aufweisen.

Der Gesten-Beschreibungs-Ersteller 1200 kann ferner einen Flächeninformation-Gestenelementinformation-Kombinierer 1220 aufweisen, der ausgelegt ist, um die Information 1210 und die Flächeninformation 1212 zu empfangen und basierend darauf eine kombinierte Gesten-Beschreibung 1230 zu erzeugen. Optional kann der Gesten-Beschreibungs-Ersteller 1200 auch einen Gestenelement-Ordner (beispielsweise entsprechend dem Gestenelement-Ordner 1020) und/oder einen Gestenelement-Auswähler (beispielsweise entsprechend dem Gestenelement-Auswähler 1124) und/oder einen Gestenelement-Kombinationsersteller (beispielsweise entsprechend dem Gestenelement-Kombinationsersteller 1120) aufweisen. Die Gesten-Beschreibung 1230 wird daher von dem Gesten-Beschreibungs-Ersteller 1200 beispielsweise basierend auf der Flächeninformation 1212 und der Information 1210 über identifizierte Gestenelemente so bereitgestellt, dass die Flächeninformation mit berücksichtigt ist.

Bei einem Ausführungsbeispiel ist der Gesten-Beschreibungs-Ersteller 1200 ausgelegt, um als die Gesten-Beschreibung 1230 einen Satz von Parametern bereitzustellen, so dass die Gesten-Beschreibung 1230 einen Satz von Parametern, die Umriss-Abschnitte der Gestenfläche beschreiben, sowie zumindest einen Flächenparameter, der eine Eigenschaft der Gestenfläche als Ganzes beschreibt, aufweist.

In anderen Worten, bei einigen Ausführungsbeispielen kann die Gesten-Beschreibung 1230 separat voneinander erste Parameter, die Umriss-Abschnitte der Gestenfläche beschreiben (Lageparameter LP1 bis LP9), und zweite Parameter, die Eigenschaften der Gestenfläche beschreiben ("Flächeninformation1", "Flächeninformation2"), aufweisen. Ein Beispiel einer derartigen Gesten-Beschreibung ist in der Fig. 12 mit 1240 bezeichnet.

Alternativ dazu kann der Gesten-Beschreibungs-Ersteller 1200 ausgelegt sein, um die Information 1210 über identifizierte Gestenelemente mit der Flächeninformation 1212 zu verknüpfen, und um eine Gesten-Beschreibung 1230 zu erhalten, in der Parameter der identifizierten Gestenelemente mit einem oder mehreren Flächenparametern verknüpft sind. Beispielsweise kann der Gesten-Beschreibungs-Ersteller 1200 ausgelegt sein, um als die Gesten-Beschreibung 1230 einen Satz von Parametern bereitzustellen, die Umriss-Abschnitte der Gestenfläche beschreiben. Dabei kann der Gesten-Beschreibungs-Ersteller 1200 ausgelegt sein, um die Gesten-Beschreibung 1230 unter Verwendung zumindest eines Flächenparameters zu normieren. Beispielsweise kann der Gesten-Beschreibungs-Ersteller 1200 ausgelegt sein, um einen Krümmungsradius von Kreisbögen und/oder eine Länge von geraden Strecken unter Verwendung einer Information über eine Gesamt-Ausdehnung der Gestenfläche zu normieren. Andere Normierungen sind natürliche ebenso anwendbar.

Bei einem weiteren Ausführungsbeispiel kann der Gesten-Beschreibungs-Ersteller 1200 ausgelegt sein, um einen Flächenparameter von dem Flächenparameter-Bestimmer zu erhalten, der eine Information über eine Lage eines Flächen-Schwerpunktes der Gestenfläche beschreibt. Der Gesten-Beschreibungs-Ersteller 1200 kann ferner ausgelegt sein, um die Gesten-Beschreibung 1230 so bereitzustellen, dass Lage-Parameter der Umriss-Abschnitte der Gestenfläche auf die Lage des Flächen-Schwerpunktes der Gestenfläche bezogen sind. Somit kann in der Gesten-Beschreibung 1230 die Lage der Umriss-Abschnitte relativ zu dem Flächen-Schwerpunkt der Gestenfläche beschrieben werden, was zu einer Vereinheitlichung der Gesten-Beschreibung führt. Eine derartige Gesten-Beschreibung ist in der Fig. 12 mit 1244 bezeichnet.

Bei einem weiteren Ausführungsbeispiel kann der Gesten-Beschreibungs-Ersteller 1200 ausgelegt sein, um von dem Flächenparameter-Bestimmer eine Information über eine Abmessung der Gestenfläche zu erhalten. Der Gesten-Beschreibungs-Ersteller 1200 kann ferner ausgelegt sein, um die Gesten-Beschreibung so bereitzustellen, dass Lage-Parameter oder Abmessungs-Parameter der Umriss-Abschnitte größenmäßig basierend auf der Information über die Abmessungen der Gestenfläche definiert bzw. normiert sind.

Bei einigen Ausführungsbeispielen können mehrere verschiedene Flächenparameter berücksichtigt werden. Beispielsweise kann die Gesten-Beschreibung 1230 so erstellt werden, dass die Lage der einzelnen Gestenelemente auf einen charakteristischen Punkt der Gestenfläche (z.B. auf einen Flächen-Schwerpunkt, oder auf einen linken unteren Punkt der Gestenfläche oder eines einschließenden Rechtecks derselben) bezogen sind. Ferner kann die Gesten-Beschreibung 1230 gleichzeitig so erzeugt werden, dass Abmessungen der Gestenelemente bezogen auf Abmessungen der gesamten Gestenfläche normiert sind. Durch die entsprechende Vorgehensweise kann erreicht werden, dass eine Geste unabhängig davon erkannt werden kann, wie groß die Geste in einem bestimmten Bild dargestellt wird, so lange die Geste nur ausreichend groß ist. Außerdem kann so erreicht werden, dass eine Geste unabhängig davon erkannt wird, wo genau sich die Geste in dem Bild befindet. Es wird also eine Gesten-Beschreibung 1230 erhalten, die im Wesentlichen unabhängig davon ist, wo die Geste in Bezug auf eine Kamera, die das Eingangsbild aufnimmt, wiedergegeben wird.

Zusammenfassend ist somit festzuhalten, dass Bezug nehmend auf die Fig. 10, 11 und 12 verschiedene Möglichkeiten beschrieben wurden, basierend auf der Information über die identifizierten Gestenelemente, eine Gesten-Beschreibung zu erhalten. Eine Gesten-Beschreibung kann dabei beispielsweise eine gemäß einer vorgegebenen festen Regel geordnete Liste von Gestenelementen aufweisen. Eine Gesten-Beschreibung kann alternativ dazu aber auch mehrere verschiedene Kombinationen von Gestenelementen (beispielsweise in unterschiedlichen Reihenfolgen) aufweisen. Flächenparameter können optional bei der Erstellung der Gesten-Beschreibungen berücksichtigt werden, beispielsweise für eine größenmäßige Normierung der einzelnen Elemente der Gesten-Beschreibung, oder für eine Positions-Normierung der Positionen der Gestenelemente. Die Flächenparameter können aber auch als selbständige Parameter dienen.

### Gesten-Klassifizierung

Im Folgenden wird beschrieben, wie basierend auf einer Gesten-Beschreibung ein Gesten-Code erhalten werden kann. Das Erhalten eines Gesten-Codes basierend auf einer Gesten-Beschreibung kann als eine Klassifizierung verstanden werden.

### Gesten-Klassifizier - erstes Ausführungsbeispiel

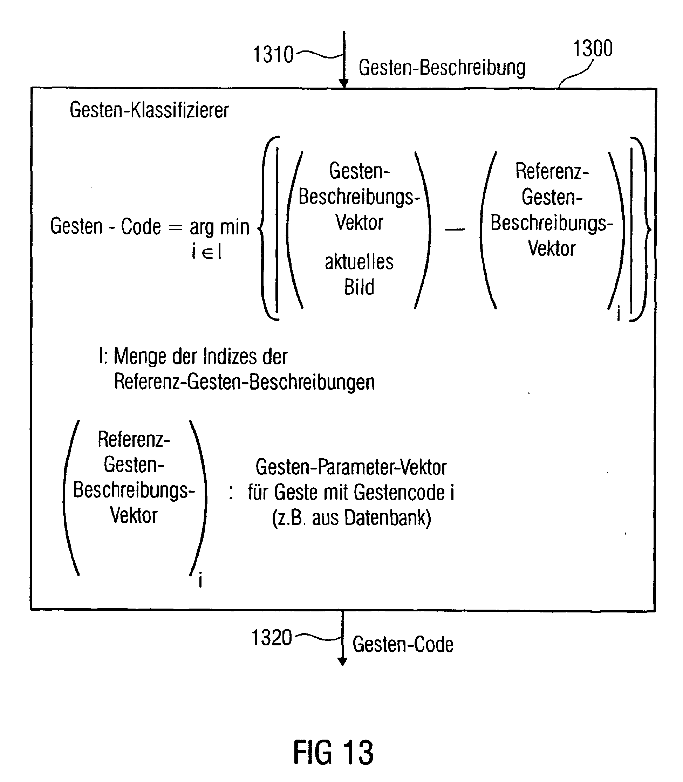

Fig. 13 zeigt ein Blockschaltbild eines Gesten-Klassifizierers gemäß einem Ausführungsbeispiel der Erfindung. Der Gesten-Klassifizierer gemäß der Fig. 13 ist in seiner Gesamtheit mit 1300 bezeichnet. Der Gesten-Klassifizierer 1300 ist ausgelegt, um eine Gesten-Beschreibung 1310 zu empfangen und um basierend auf der Gesten-Beschreibung 1310 einen Gesten-Code 1320 bereitzustellen. Der Gesten-Klassifizierer 1300 kann beispielsweise die Gesten-Beschreibung 1310 als einen Vektor von Parametern verschiedener Gestenelemente ansehen. Der Gesten-Klassifizierer kann ferner beispielsweise ausgelegt sein, um auf einen Datenbank zuzugreifen, die Parametersätze von Gestenelementen von Vergleichs-Gesten umfasst. Beispielsweise kann der Gesten-Klassifizierer ausgelegt sein, um zu bestimmen, wie ähnlich ein Parametersatz, der durch die Gesten-Beschreibung 1310 beschriebene Gestenelemente beschreibt, einem Parametersatz, der zu einer Vergleichs-Geste gehörige Gestenelemente beschreibt, ist. Der Gesten-Klassifizierer 1300 kann beispielsweise den Parametersatz der durch die Gesten-Beschreibung 1310 beschriebenen Gestenelemente mit Parametersätzen, die zu verschiedenen Vergleichs-Gesten gehören, vergleichen, um zu entscheiden, für welche der Vergleichs-Gesten eine maximale Ähnlichkeit bzw. Übereinstimmung besteht. Dabei kann ein Unterschied zwischen einem Satz von Parametern von Gestenelementen, der zu der Gesten-Beschreibung 1310 gehört, und einem Satz von Parametern, der zu Gestenelementen einer Vergleichs-Geste gehört, beispielsweise unter Verwendung eines mathematischen Abstandsmaßes bestimmt werden. Beispielsweise können zu diesem Zweck die verschiedenen Parametersätze als Vektoren aufgefasst werden, deren Unterschied mit einer Vektornorm bewertet wird. Dabei kann ein Index derjenigen Vergleichs-Geste bestimmt werden, deren zugehöriger Parametersatz sich am wenigsten von dem durch die Gesten-Beschreibung beschriebenen Parametersatz unterscheidet. Eine mögliche Formel zur Bestimmung des Gesten-Codes ist aus der Fig. 13 zu ersehen. Gemäß der dort angegebenen Formel wird ein Abstandsmaß, beispielsweise in Form einer Vektor-Norm, berechnet, wobei ein Unterschied zwischen dem Parametervektor der Gesten-Beschreibung eines aktuellen Bildes und Parametervektoren verschiedener Vergleichs-Gesten (mit Vergleichs-Gesten-Codes i) bestimmt wird, wobei die Vergleichs-Gesten durch unterschiedliche Indizes bzw. Vergleichs-Gesten-Codes i unterschieden werden. Es wird somit beispielsweise der Vergleichs-Gesten-Index i derjenigen Vergleichs-Geste bestimmt, die (im Hinblick auf den Parametervektor) der durch die Gesten-Beschreibung 1310 beschriebenen Geste am ähnlichsten ist. Der entsprechende Gesten-Index i der Vergleichs-Geste kann beispielsweise als Gesten-Code 1320 dienen.

Zusammenfassend ist somit festzuhalten, dass der Gesten-Klassifizierer 1300 als Gesten-Code 1320 eine Information darüber liefern kann, welcher Vergleichs-Geste aus einer Mehrzahl von verschiedenen Vergleichs-Gesten die durch die Gesten-Beschreibung 1310 beschriebene Geste am ähnlichsten ist. Dabei können beispielsweise die Parameter der einzelnen Gestenelemente zusammen als ein Vektor von Parametern aufgefasst werden. Ein Unterschied zwischen Vektoren von Gesten-Parametern kann quantitativ unter Verwendung einer mathematischen Vektor-Norm bestimmt bzw. angegeben werden.

Natürlich sind auch andere Verfahren zur Gesten-Klassifizierung einsetzbar.

Im Folgenden werden verschiedene Erweiterungen im Hinblick auf die Gesten-Klassifizierung beschrieben.

### Gesten-Klassifizier - zweites Ausführungsbeispiel

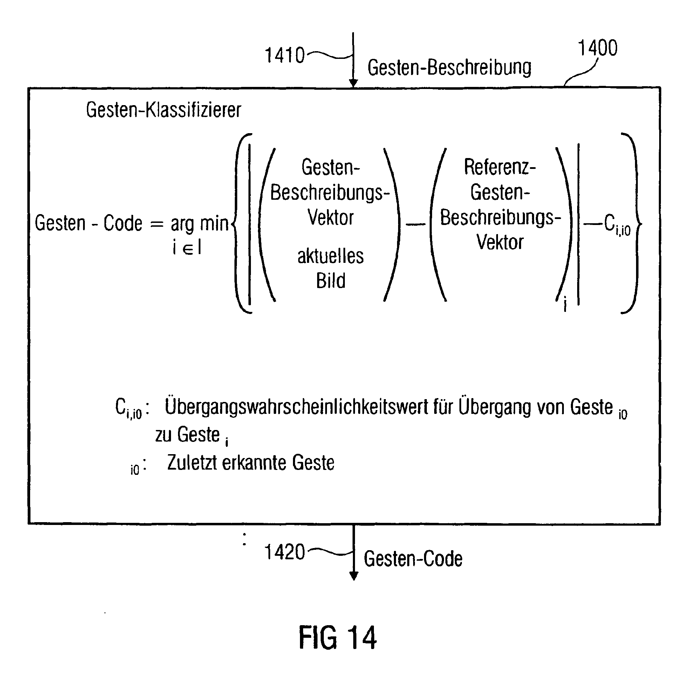

Fig. 14 beschreibt ein Blockschaltbild eines Gesten-Klassifizierers gemäß einem weiteren Ausführungsbeispiel der Erfindung. Der Gesten-Klassifizierer gemäß der Fig. 14 ist in seiner Gesamtheit mit 1400 bezeichnet.

Der Gesten-Klassifizierer 1400 kann beispielsweise dem Gesten-Klassifizierer 1300 sehr ähnlich sein. Der Gesten-Klassifizierer 1400 kann beispielsweise ausgelegt sein, um eine Gesten-Beschreibung 1410 zu empfangen, die der Gesten-Beschreibung 1310 entsprechen kann. Der Gesten-Klassifizierer 1400 ist ausgelegt, um basierend auf der Gesten-Beschreibung 1410 einen Gesten-Code 1420 zu liefern, der dem Gesten-Code 1320 entsprechen kann. Der Gesten-Klassifizierer 1400 kann beispielsweise ausgelegt sein, um, entsprechend dem Gesten-Klassifizierer 1300, einen Unterschied zwischen einem Merkmalsvektor (bzw. Parametervektor) der durch die Gesten-Beschreibung 1410 beschriebenen Gestenelemente und einem Merkmalsvektor (bzw. Parametervektor) von Vergleichs-Gesten zu bestimmen und beispielsweise unter Verwendung einer mathematischen Vektornorm größenmäßig zu bewerten. Der Gesten-Klassifizierer 1400 kann aber ferner zusätzlich ausgelegt sein, um eine Übergangswahrscheinlichkeit für einen Übergang von einer vorher ermittelten Geste zu einer aktuellen Geste zu berücksichtigen. Die Übergangswahrscheinlichkeit ist in der Fig. 14 beispielsweise mit C_{i, i0} bezeichnet. i0 bezeichnet dabei die zuletzt erkannte Geste.

Die Übergangswahrscheinlichkeit kann basierend auf verschiedenen Kriterien gebildet sein. Soweit beispielsweise verschiedene aufeinanderfolgende Gesten verschiedene Instruktionen oder "Worte" darstellen, so kann es für verschiedene Folgen von Instruktionen bzw. Worten unterschiedliche Wahrscheinlichkeiten geben. Repräsentieren die Gesten beispielsweise verschiedene Steuerbefehle einer Maschine, so kann das Aufeinanderfolgen verschiedener Befehle beispielsweise unterschiedliche Wahrscheinlichkeiten aufweisen. Beispielsweise kann die Wahrscheinlichkeit dafür, dass ein Befehl "B" auf einen Befehl "A" folgt, 25 % betragen. Zudem kann eine Wahrscheinlichkeit, dass ein Befehl "C" auf den Befehl "A" folgt, nur etwa 10 % betragen. Wird der erste Befehl "A" durch eine erste Geste, der Befehl "B" durch eine zweite Geste und der Befehl "C" durch eine dritte Geste dargestellt, so beträgt beispielsweise die Wahrscheinlichkeit, dass auf die erste Geste die zweite Geste erfolgt, etwa 25 %. Im Gegensatz dazu beträgt die Wahrscheinlichkeit, dass auf die erste Geste die dritte Geste folgt, nur etwa 10 %. Die entsprechenden Übergangswahrscheinlichkeiten können beispielsweise durch die Größe C_{i, i0} dargestellt werden.

Zudem kann für die Bestimmung der Übergangswahrscheinlichkeiten C_{i, i0} ein physikalisches Modell verwendet werden. Wird beispielsweise davon ausgegangen, dass die Gesten durch eine menschliche Hand erzeugt werden, so kann beispielsweise ein physikalisches Modell einer menschlichen Hand herangezogen werden. Wird davon ausgegangen, dass Bilder in einem bestimmten zeitlichen Abstand aufgenommen werden, der ausreichend klein gewählt ist, so kann man davon ausgehen, dass sich zwischen der Aufnahme zweier aufeinanderfolgender Bilder eine durch die Hand gebildete Geste im Regelfall nicht beliebig stark verändert, wenn man berücksichtigt, dass ein Mensch im Regelfall nicht vollkommen ruckartigen Bewegungen macht. Geht man also davon aus, dass aufeinanderfolgende Bilder in ausreichender Häufigkeit aufgenommen werden, bzw. dass keine vollkommen abrupten Bewegungen erfolgen, so kann man davon ausgehen, dass in zwei aufeinanderfolgenden Bildern nur "ähnliche" Gesten auftreten. Zudem kann davon ausgegangen werden, dass das Auftreten vollkommen verschiedener Gesten in aufeinanderfolgenden Bildern sehr unwahrscheinlich bzw. eventuell sogar unmöglich ist. Die Übergangswahrscheinlichkeit C_{i, i0} beschreibt daher, wie wahrscheinlich das Auftreten der Geste mit dem Gestenindex i ist, wenn in einem vorherigen Bild die Geste mit dem Gestenindex i0 erkannt wurde.

Die entsprechende Übergangswahrscheinlichkeit kann auf verschiedene Art und Weise berücksichtigt werden. Beispielsweise können Gesten, deren Übergangswahrscheinlichkeit (ausgehend von der aktuellen Geste) unterhalb eines vorgegebenen Schwellwerts liegt, für eine Bestimmung des Gesten-Codes vollständig vernachlässigt werden. In anderen Worten, für die Bestimmung eines aktuellen Gesten-Codes einer aktuellen Geste können beispielsweise nur solche Gesten herangezogen werden, deren Übergangswahrscheinlichkeit (ausgehend von der aktuellen Geste) ausreichend groß (z.B. größer als ein vorbestimmter Wert) ist.

Alternativ dazu können für die Bestimmung des Gesten-Codes einer aktuellen Geste alle Vergleichs-Gesten herangezogen werden, wobei allerdings die verschiedenen Übergangswahrscheinlichkeiten mit in Erwägung gezogen werden können.

Somit ist es möglich, bei der Gesten-Klassifizierung sowohl eine semantische Wahrscheinlichkeit des aufeinanderfolgenden Auftretens zweiter verschiedener Gesten als auch, alternativ oder zusätzlich, eine Wahrscheinlichkeit im Rahmen eines physikalischen Modells zu berücksichtigen.

### Gesten-Beschreibungs-Überprüfung

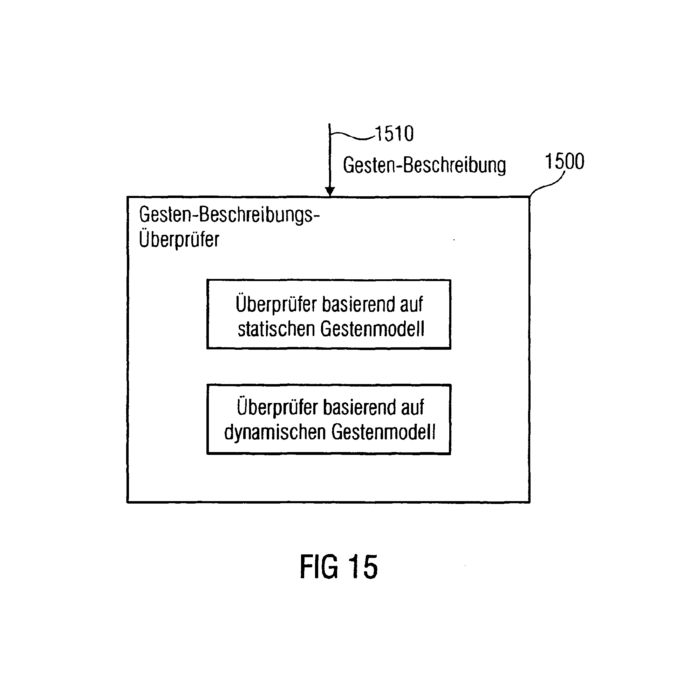

Fig. 15 zeigt ein Blockschaltbild eines Gesten-Beschreibungs-Überprüfers, gemäß einem Ausführungsbeispiel der Erfindung. Der Gesten-Beschreibungs-Überprüfer gemäß der Fig. 15 ist in seiner Gesamtheit mit 1500 bezeichnet. Der Gesten-Beschreibungs-Überprüfer 1500 ist ausgelegt, um eine Gesten-Beschreibung 1510 zu empfangen und um zu überprüfen, ob die Gesten-Beschreibung 1510 eine zulässige Kombination von durch Parameter beschriebenen Gestenelementen darstellt. Der Gesten-Beschreibungs-Überprüfer 1500 kann dabei in den Vorrichtungen 100 gemäß Fig. 1 bzw. 200 gemäß Fig. 2 eingesetzt werden.

Wird erkannt, dass eine Gesten-Beschreibung eine unzulässige Kombination von Merkmalen von Gestenelementen beschreibt, so kann der Gesten-Beschreibungs-Überprüfer beispielsweise ein entsprechendes Signal ausgeben, durch das beispielsweise eine Ausgabe eines Gesten-Codes verhindert wird, oder durch das beispielsweise ein Fehler signalisiert wird.

Der Gesten-Beschreibungs-Überprüfer 1500 kann die Gesten-Beschreibung 1510 in verschiedener Weise überprüfen. Beispielsweise kann der Gesten-Beschreibungs-Überprüfer 1500 ausgelegt sein, um ein statisches Gesten-Modell auszuwerten. Ein statisches Gesten-Modell kann dabei definieren, welche verschiedenen relativen Lagen von einzelnen Gestenelementen zueinander überhaupt zulässig sind. Geht man beispielsweise davon aus, dass eine Geste durch eine menschliche Hand abgegeben wird, so ist unschwer nachvollziehbar, dass die einzelnen Gelenke der menschlichen Hand jeweils nur in einem bestimmten Bereich Bewegungen ausführen können. Während beispielsweise die Scharniergelenke der Finger im Wesentlichen nur entlang einer Achse gebeugt werden können, bieten die Fingergrundgelenke, die als Kugelgelenke gebildet sind, mehr Freiheitsgrade. Im Übrigen bieten beispielsweise Gelenke des Daumens besonders große Bewegungsfreiheit. Ganz allgemein kann man aber sagen, dass das physikalische Modell einer Geste, das beispielsweise die Bewegungs-Freiheitsgrade berücksichtigt, gewisse Einschränkungen im Hinblick auf die möglichen Gesten definiert. So liefert ein physikalisches Modell eines Körperteils, das zur Erzeugung einer Geste verwendet wird (zum Beispiel einer Hand), eine Information darüber, welche Gesten aufgrund der Bewegungs-Freiheitsgrade überhaupt möglich sind, und welche Gesten nicht erreichbar sind.

Definiert die Gesten-Beschreibung 1510 eine Anordnung von Gestenelementen, die basierend auf dem physikalischen Bewegungsmodell nicht erreichbar ist, so kann der Gesten-Beschreibungs-Überprüfer beispielsweise ein Fehlersignal liefern.

Alternativ oder zusätzlich kann der Gesten-Beschreibungs-Überprüfer ausgelegt sein, um die Lage der durch die Gesten-Beschreibung 1510 beschriebenen Gestenelemente unter Verwendung eines dynamischen Gestenmodells zu überprüfen.

Bei dem dynamischen Gestenmodell kann es sich beispielsweise um ein physikalisches Modell von Gesten (bzw. des die Gesten erzeugenden Körperteils) handeln. Das dynamische physikalische Modell kann beispielsweise definieren, welche Bewegungsabläufe möglich sind, welche Übergänge also zwischen zwei aufeinanderfolgenden Gesten (bzw. aufeinanderfolgenden Gesten-Beschreibungen 1510) möglich sind. Beispielsweise kann das dynamische Modell beschreiben, welche Lage der einzelnen Gestenelemente ausgehend von einer Anfangs-Lage der Gestenelemente (bzw. ausgehend von einer Anfangs-Geste) innerhalb eines bestimmten Zeitraums erreicht werden kann. Der Gesten-Beschreibungs-Überprüfer kann zu diesem Zweck beispielsweise eine Information über eine vorherige Lage der Gestenelemente oder eine Information über eine vorher erkannte Geste erhalten. Der Gesten-Beschreibungs-Überprüfer kann ferner basierend auf dem physikalischen Modell (beispielsweise des die Geste erzeugenden Körperteils) eine Entscheidung darüber treffen, ob die durch die Gesten-Beschreibung 1510 beschriebene aktuelle Lage der Gestenelemente tatsächlich erreichbar ist. Ist die durch die Gesten-Beschreibung 1510 beschriebene aktuelle Lage der Gestenelemente ausgehend von der Anfangs-Lage bzw. der Anfangs-Geste nicht erreichbar, so kann der Gesten-Beschreibungs-Überprüfer eine entsprechende Signalisierung (z.B. in Form eines Fehlersignals) liefern.

### Gesten-Klassifizierung durch Datenbankvergleich

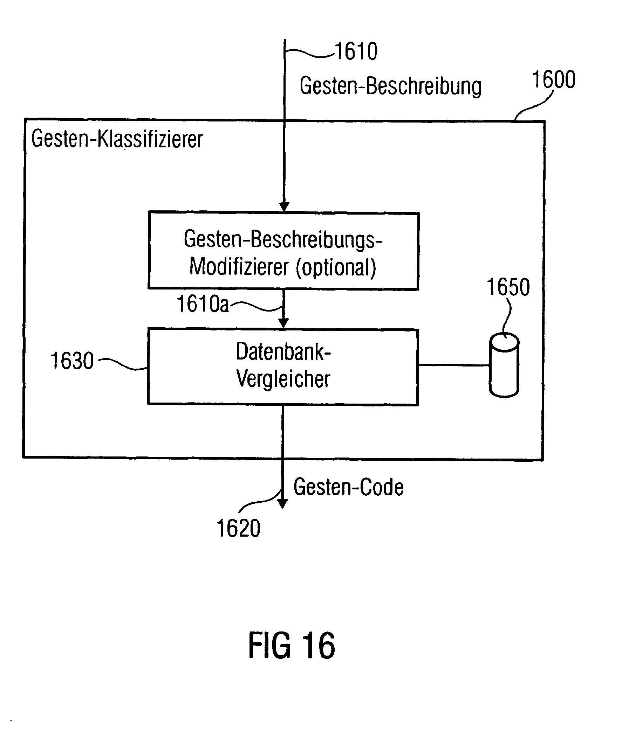

Im Folgenden wird kurz beschrieben, wie basierend auf einer Gesten-Beschreibung ein Gesten-Code erhalten werden kann. Fig. 16 zeigt zu diesem Zweck ein Blockschaltbild eines Gesten-Klassifizierers gemäß einem Ausführungsbeispiel der Erfindung. Der Gesten-Klassifizierer gemäß der Fig. 16 ist in seiner Gesamtheit mit 1600 bezeichnet. Der Gesten-Klassifizierer 1600 ist ausgelegt, um eine Gesten-Beschreibung 1610 zu empfangen und um basierend darauf einen Gesten-Code 1620 zu liefern. Der Gesten-Klassifizierer 1600 umfasst einen Datenbank-Vergleicher 1630, der ausgelegt ist, um die Gesten-Beschreibung 1610 oder, optional, eine modifizierte Gesten-Beschreibung 1610a zu empfangen. Der Datenbank-Vergleicher ist ferner ausgelegt, um die empfangene Gesten-Beschreibung 1610 bzw. die modifizierte Gesten-Beschreibung 1610a mit einer Mehrzahl von in einer Datenbank 1650 enthaltenen Vergleichs-Gesten-Beschreibungen zu vergleichen. Sind den Vergleichs-Gesten-Beschreibungen in der Datenbank 1650 beispielsweise Gesten-Codes zugeordnet, so kann der Datenbank-Vergleicher 1630 beispielsweise als den identifizierten Gesten-Code 1620 den Gesten-Code derjenigen Vergleichs-Geste aus der Datenbank 1650 liefern, deren Vergleichs-Gesten-Beschreibung mit der aktuell verarbeiteten Gesten-Beschreibung 1610 bzw. modifizierten Gesten-Beschreibung 1610a übereinstimmt, oder eine maximale Ähnlichkeit aufweist.

Somit ist der Gesten-Klassifizierer 1600 insgesamt in der Lage, zu einer aktuell verarbeiteten Geste, die durch die Gesten-Beschreibung 1610 beschrieben wird, durch einen Datenbank-Vergleich einen zugehörigen Gesten-Code zu liefern.

### Berücksichtigung von Bewegungen

Bei einigen Ausführungsbeispielen gemäß der Erfindung kann der Gesten-Beschreibungs-Ersteller ausgelegt sein, um eine Gesten-Beschreibung bereitzustellen, die eine Information über eine Bewegung der Geste umfasst. Alternativ dazu kann der Gesten-Klassifizierer ausgelegt sein, um aus der von dem Gesten-Beschreibungs-Ersteller gelieferten Gesten-Beschreibung eine Information über eine Bewegung der Geste zu extrahieren.

In beiden Fällen kann der Gesten-Klassifizierer ausgelegt sein, um eine Bewegung einer Gestenfläche bei einer Ermittlung des Gesten-Codes zu berücksichtigen. Der Gesten-Klassifizierer kann somit ausgelegt sein, um verschiedene Bewegungszustande einer Geste zu unterscheiden.

Eine Ermittlung der Bewegungszustände kann in verschiedener Weise erfolgen, und kann beispielsweise durch eine eigens dafür vorgesehene Bewegungsbestimmungseinrichtung, oder durch den Gesten-Beschreibungs-Ersteller, oder durch den Gesten-Klassifizierer erfolgen.

Bei einem Ausführungsbeispiel kann ein Bewegungszustand der Geste beispielsweise basierend auf einem Vergleich von Lageparametern einander entsprechender Gestenelemente zu verschiedenen Zeitpunkten erfolgen. Beispielsweise können zunächst die Lageparameter einander entsprechender Gestenelemente zu mindestens zwei verschiedenen Zeitpunkten ermittelt werden. Somit kann zu einem ausgewählten Gestenelement, das zu dem ersten Zeitpunkt identifiziert wurde, ein zugehöriges Gestenelement zu dem zweiten Zeitpunkt identifiziert werden. Dabei wird für den zweiten Zeitpunkt ein Gestenelement identifiziert, dessen Lage der Lage des ausgewählten Gestenelements ausreichend nahe kommt. Somit wird angenommen, dass das ausgewählte Gestenelement und das für den zweiten Zeitpunkt identifizierte Gestenelement einander entsprechend. Folglich kann ein Lageunterschied zwischen der Lage des ausgewählten Gestenelements und der Lage des für den zweiten Zeitpunkt identifizierten entsprechenden Gestenelements als Information über eine Lageänderung und damit als Information über eine Bewegung gewertet werden.

Eine Information über die Bewegung zwischen zwei Zeitpunkten kann für verschiedene Gestenelemente bestimmt werden. Somit steht eine Information über Bewegungen verschiedener Gestenelemente zur Verfügung. Basierend darauf kann beispielsweise eine durchschnittliche Bewegung der verschiedenen Gestenelemente bestimmt werden. Diese durchschnittliche Bewegung der Gestenelemente kann als Information über eine Bewegung der Gesamtgeste aufgefasst werden.

Alternativ oder zusätzlich kann bestimmt werden, ob sich verschiedene Gestenelemente in unterschiedliche Richtungen bewegen. Ist dies der Fall so kann dies beispielsweise einen Rückschluss auf eine Drehbewegung geben.

Insgesamt kann somit festgehalten werden, dass die von dem Hough-Transformator gelieferte Information über die Lage von Gestenelementen ausgewertet werden kann, um eine Information über eine Bewegung der Geste zu erhalten.

Alternativ oder zusätzlich kann eine Flächeninformation ausgewertet werden, um eine Information über eine Bewegung der Geste zu erhalten. Beispielsweise kann eine zeitliche Entwicklung einer Lage eines Flächen-Schwerpunkte der Gesten Fläche ausgewertet werden, um eine Bewegungsinformation zu erhalten.

Alternativ oder zusätzlich kann das Moment der Gestenfläche in verschiedenen Richtungen (oder entlang verschiedener Richtungen) ermittelt werden, wie dies beispielsweise anhand der Fig. 6a - 6c erläutert wurde. Beispielsweise kann das Moment der Gestenfläche in einer ersten Richtung (beispielsweise x-Richtung bzw. entlang den Bildzeilen) und in einer zweiten Richtung (beispielsweise y-Richtung bzw. entlang den Bildspalten) ermittelt werden. Somit können beispielsweise Momente mₓ und m_{y} gemäß den Fig. 6a - 6c ermittelt werden. Weicht die Gestenfläche von einer runden Form ab, so unterscheiden sich mₓ und m_{y} typischerweise. Außerdem verändert sich das Verhältnis von mₓ und m_{y} bei einer Drehung der Gestenfläche üblicherweise. Die Veränderung des Verhältnisses von mₓ und m_{y} über der Zeit (oder eine Veränderung einer Differenz von mₓ und m_{y} über der Zeit, oder eine Veränderung einer anderen von mₓ und m_{y} abgeleiteten Größe über der Zeit) kann beispielsweise verwendet werden, um eine Bewegungsinformation zu erhalten.

Die Bewegungsinformation (die beispielsweise eine Information über eine lineare Geschwindigkeit der Gestenfläche oder eines Flächenschwerpunktes derselben, und/oder eine Information über eine Drehgeschwindigkeit und/oder eine Information über eine zeitliche Veränderung der Gestenfläche umfassen kann) kann optional ausgewertet werden, um verschiedene Gesten bei der Gesten-Klassifizierung zu unterscheiden. So kann die Bewegungsinformation beispielsweise in den Gesten-Beschreibungs-Vektor mit aufgenommen und bei einem Datenbank-Vergleich berücksichtigt werden.

Optional kann im Übrigen sogar ein zeitlicher Verlauf der Bewegungsinformation in den Gesten-Beschreibungs-Vektor aufgenommen werden (beispielsweise in Form von zu verschiedenen Zeitpunkten ermittelten Bewegungsinformationen). Folglich kann der zeitliche erlauf der Bewegung bei der Gesten-Klassifizierung berücksichtigt werden.

### Hough-Transformation

Im Folgenden wird eine Vorgehensweise bei der Durchführung einer Hough-Transformation zur Identifizierung von Bögen, beispielsweise von Kreisbögen oder Ellipsenbögen, beschrieben. Diesbezüglich sei darauf hingewiesen, dass verschiedene Arten der Hough-Transformation verwendet werden können.

Beispielsweise können mit Hilfe der Hough-Transformation ganz allgemein parametrisierte Kurvenverläufe in einem Bild identifiziert werden, und es können weiterhin Parameter der parametrisierbaren Kurve bestimmt werden. Wird beispielsweise ein Ausschnitt aus einem Kreisbogen oder Ellipsenbogen mit bestimmten Parametern betrachtet, so gibt es verschiedene Möglichkeiten, wo beispielsweise ein Mittelpunkt eines derartigen Kreisbogens mit einem bestimmten Radius liegen kann, der durch einen vorgegebenen Punkt verläuft. Umgekehrt kann man sagen, dass ein bestimmter Punkt auf verschiedenen Kreisbögen (verschiedener Radien und verschiedener Mittelpunkte) liegen kann.

Durch die Durchführung einer Hough-Transformation kann man in der bekannten Weise sowohl volle Kreise bzw. Ellipsen als auch Ausschnitte aus Kreisbögen oder Ellipsenbögen in einem Bild identifizieren. Dabei kann beispielsweise ein Ausschnitt aus einem Kreisbogen (z.B. ein linksseitig offener Ausschnitt aus einem Kreisbogen, oder ein rechtsseitig offener Ausschnitt aus einem Kreisbogen, oder ein nach oben offener Ausschnitt aus einem Kreisbogen, oder ein nach unten offener Ausschnitt aus einem Kreisbogen) als eine parametrisierte Kurve angesehen werden.

Bei der Durchführung der Hough-Transformation wird dann beispielsweise jedem Bildpunkt eine Information darüber zugeordnet, ob dieser Bildpunkt auf einem rechtsseitig offenen (oder linksseitig offenem, oder nach oben offenem, oder nach unten offenem) Ausschnitt eines Kreisbogens mit entsprechenden Parametern liegt. Dementsprechend können die Gestenelemente, z.B. in Form von Kreisbögen (beispielsweise Ausschnitten aus vollen Kreisen) oder Ellipsenbögen (beispielsweise Ausschnitte aus vollen Ellipsen) verschiedener Orientierung, erkannt, unterschieden und durch Parameter beschrieben werden.

Bei der Durchführung einer herkömmlichen Hough-Transformation kann beispielsweise einem Bildpunkt eine Mehrzahl von Sätzen von Parametern zugeordnet werden. Bei der Durchführung einer Hough-Transformation zur Identifizierung eines Halbkreises stellt man sich beispielsweise für jeden Bildpunkt die folgende Frage: auf welchen Halbkreisen (zum Beispiel einer vorgegebenen Orientierung) liegt der Punkt? In anderen Worten, es ist die Frage zu lösen, wo Mittelpunkte von Halbkreisen (zum Beispiel der vorgegebenen Orientierung)liegen können, die durch den gegebenen Bildpunkt verlaufen. Gibt man einen ersten Halbkreis-Radius vor, so können Mittelpunkte von Halbkreisen (der vorgegebenen Orientierung), die durch den vorgegebenen Punkt verlaufen, ebenso auf einem Halbkreis liegen (wobei dieser Halbkreis den ersten Radius aufweist). Gibt man einen weiteren Halbkreis-Radius vor, so können Mittelpunkte von Halbkreisen (der vorgegebenen Orientierung) auf einem weiteren Halbkreis liegen (wobei dieser weitere Halbkreis den weiteren Radius aufweist). Die verschiedenen Möglichen Parameterkombinationen (Halbkreis-Radius und Mittelpunktskoordinaten) können akkumuliert werden, wie dies von der Hough-Transformation bekannt ist. Die Verarbeitung kann im Übrigen für alle Bildpunkte erfolgen, wie dies von der Hough-Transformation wohlbekannt ist. Somit können unter Verwendung der Hough-Transformation ohne Weiteres auch Halbkreise (oder andere Ausschnitte aus kreisförmigen oder ellipsenförmigen Kurven) identifiziert werden.

### Hough-Transformation- Parallele Hough-Transformation

Im Folgenden wird eine Vorgehensweise zur Durchführung einer sogenannten "parallelen Hough-Transformation" beschrieben, wie sie beispielsweise zur Erkennung von Ausschnitten von Kreisbögen und Ellipsenbögen zum Einsatz kommen kann.

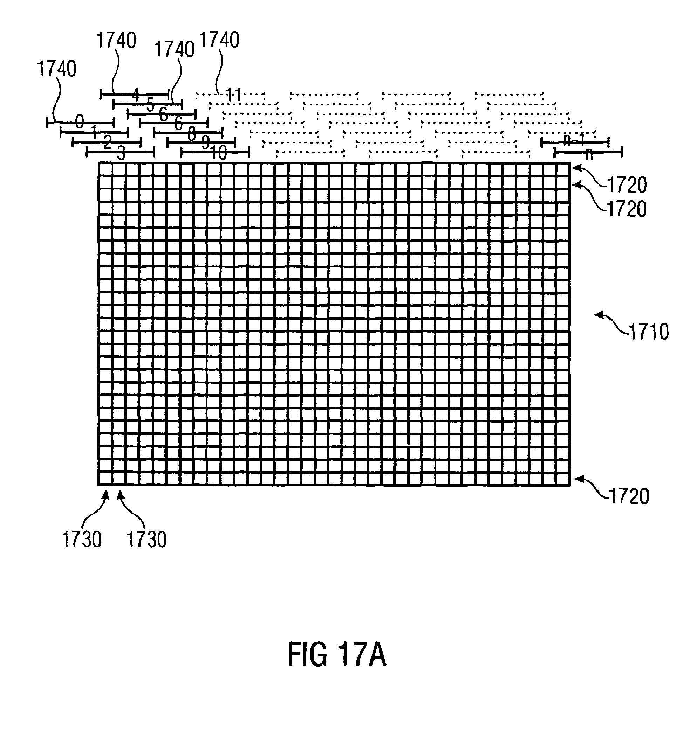

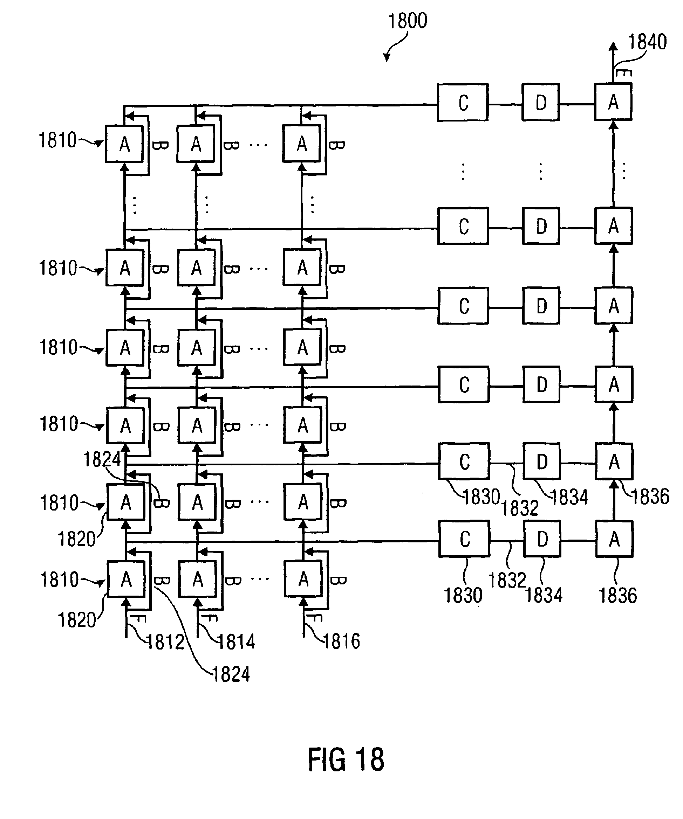

Zu diesem Zweck zeigt die Fig. 17a eine grafische Darstellung einer Vorgehensweise zum Durchschieben eines grafischen Bildes durch eine Mustererkennungseinrichtung. Im speziellen zeigt die Fig. 17a ein' spaltenweises Durchschieben eines Bildes bzw. eines Rasterbildes, durch die später noch anhand der Fig. 18 gezeigte Hough-Transformationseinrichtung 1800 (auch als Hough-Feld oder Hough-Array bezeichnet).

Die Fig. 17a zeigt hierbei ein Rasterbild 1710, bestehend aus einer Mehrzahl von Rasterzeilen 1720 sowie einer Mehrzahl von Rasterspalten 1730. Bei dem Bild 1710 kann es sich beispielsweise um das Bild 110, das Bild 210, eine vorverarbeitete Version 232 des Bildes 110 oder eine klassifizierte Version 242 des Bildes handeln.

Gezeigt sind ferner Gruppen 1740 von jeweils beispielsweise fünf Rasterspalten 1730, wobei davon ausgegangen wird, dass jeweils fünf Rasterspalten gleichzeitig der Hough-Transformationseinrichtung 1800 parallel in Form von Signalen 1812, 1814, 1816 zugeführt werden (wie im Folgenden erläutert wird).

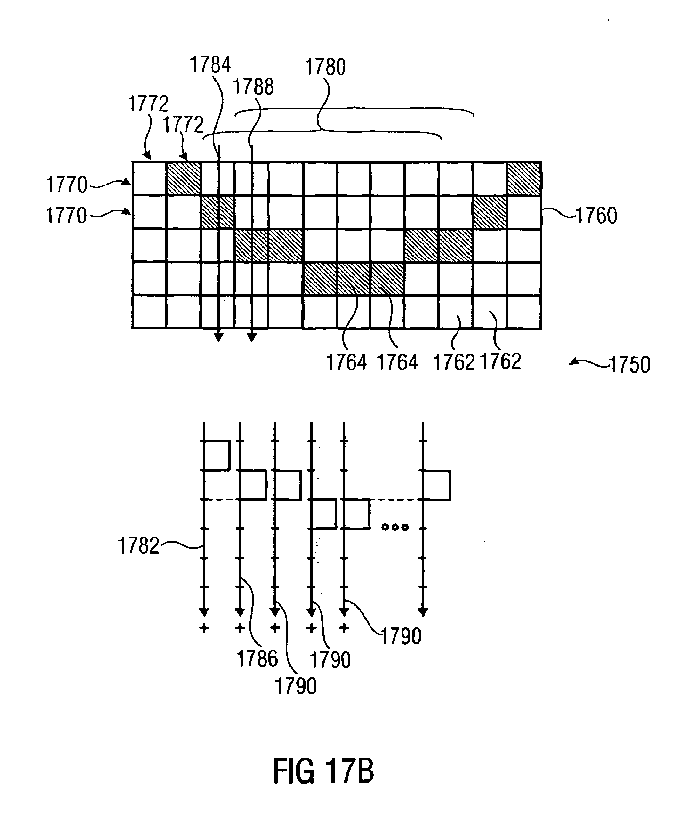

Fig. 17b zeigt eine grafische Darstellung von bei einer Umwandlung eines Rasterbilds in parallele Teilsignale entstehenden Zeitsignalen. Die grafische Darstellung der Fig. 17b ist ihrer Gesamtheit mit 1750 bezeichnet. Die grafische Darstellung 1750 zeigt ein Rasterbild 1760, das eine Mehrzahl von inaktiven Rasterpunkten bzw. Bildpunkten 1762 sowie eine Mehrzahl von durch Schraffierung gekennzeichneten aktiven Rasterpunkten bzw. Bildpunkten 1764 aufweist. Die aktiven Rasterpunkte bzw. Bildpunkte 1764 beschreiben beispielsweise einen Kurvenverlauf, beispielsweise einen "nach oben offenen" Ausschnitt aus einem Kreisbogen oder Ellipsenbogen. Wie bereits oben beschrieben umfasst das Rasterbild 1760 hierbei eine Mehrzahl von Rasterzeilen 1770 sowie eine Mehrzahl von Rasterspalten 1772. Es wird ferner davon ausgegangen, dass Zeitsignale basierend auf dem Bildausschnitt 1780, der eine Gruppe von beispielsweise sieben Rasterspalten umfasst, gebildet werden. So ist beispielsweise ein erstes Zeitsignal 1782 einer ersten in der Gruppe 1780 von Rasterspalten enthaltenen Rasterspalte 1784 zugeordnet. Das Zeitsignal 1782 entsteht hierbei durch zeilenweises Abtasten des Rasterbildes 1760 entlang einer zugeordneten Rasterspalte 1784. In ähnlicher Weise besteht ein zweites Zeitsignal 1786 durch zeilenweises Abtasten der zweiten Rasterspalte 1788 aus der Gruppe 1780 von Rasterspalten. Es zeigt sich bei Betrachtung der Zeitverläufe deutlich, dass bei der beschriebenen Abtastrichtung aktive Rasterpunkte, die in der gleichen Rasterzeile des Rasterbildes 1760 liegen, in gleichzeitigen Aktivitätsimpulsen auf den Zeitsignalen 1782, 1786, 1790 resultieren. Eine waagrechte Linie, d.h., eine Linie, die innerhalb einer Rasterzeile verläuft, macht sich somit in den Zeitsignalen 1782, 1786, 1790 durch gleichzeitige Impulse auf den Zeitsignalen 1782, 1786, 1790 bemerkbar. Ein gekrümmter Verlauf einer Linie hingegen macht sich in zeitlich versetzten Impulsen auf den Zeitsignalen 1782, 1786, 1790 bemerkbar.

Die Fig. 18 zeigt eine besonders vorteilhafte Einrichtung zur Durchführung einer Hough-Transformation. Die Einrichtung 1800 zur Hough-Transformation umfasst hierbei eine Mehrzahl von hintereinander geschalteten Stufen 1810, durch die mehrere Signale 1812, 1814, 1814 parallel weitergeleitet werden. Eine Stufe enthält dabei für jedes Signal entweder ein Verzögerungselement 1820, das auch mit A bezeichnet ist, oder einen Bypass 1824, der auch mit B bezeichnet ist. Ferner werden die Signale an dem Ausgang einer Stufe einem Summierglied 1830 zugeführt, das auch mit C bezeichnet ist. Das Summierglied ist hierbei bevorzugt ausgelegt, um festzustellen, wie viele Signale an dem Ausgang der betreffenden Stufe gleichzeitig aktiv sind. An einem Ausgang 1832 eines Summiergliedes 1830 liegt somit eine sog. Zeilensumme an, die angibt, wie viele Signale an dem Ausgang der betreffenden Stufe gleichzeitig aktiv sind. Die Zeilensumme 1832 kann dann einem Komparator 1834 zugeführt werden, der die Zeilensumme 1832 mit einem vorgegeben Schwellwert vergleicht. Überschreitet die Zeilensumme 1832 den vorgegeben Schwellwert, so bedeutet dies, dass in der jeweiligen Stufe mindestens eine vorgegebene Anzahl von Signalen aktiv sind. Mit anderen Worten, in der jeweiligen Stufe liegt, zumindest näherungsweise, eine "gerade Linie" vor, die dadurch gekennzeichnet ist, dass mindestens eine vorgegebene Anzahl von Signalen der jeweiligen Stufe gleichzeitig aktiv sind. Ein Ausgangssignal des Komparators 1834 wird darauf einem Verzögerungselement 1836 zugeführt. Mehrere Verzögerungselemente 1836, die jeweils mit einem Ausgang eines Komparators 1834 einer Stufe 1810 verbunden sind, sind hierbei in einer Kette derart verschaltet, dass das Ausgangssignal eines Verzögerungselements 1836 dem Eingang eines darauffolgenden Verzögerungselements 1836 zugeführt wird.

Es sei ferner darauf hingewiesen, dass die Verzögerungselemente 1820, 1836, getaktet arbeiten, so dass sowohl die Signale 1812, 1814, 1816 als auch die Ausgangssignale der Komparatoren 1834 getaktet weitergeleitet werden. Die Signale 1812, 1814, 1816 und die Ausgangssignale der Komparatoren 1834 werden von der Struktur her parallel und in gleicher Richtung weitergeleitet, wobei jedoch die Signale 1812, 1814, 1816 in den einzelnen Stufen unterschiedlich stark verzögert werden, je nach dem, ob bei der Weiterleitung des Signals 1812, 1814, 1816 in einer Stufe 1810 ein Verzögerungselement 1820 oder ein Bypass 1824 verwendet wird. Es wird allerdings bevorzugt, das ein zentrales Signal der Mehrzahl von Signalen 1812, 1814, 1816 genauso schnell durch die Mehrzahl von Stufen weitergeleitet wird wie die Signale von den Ausgängen der Komparatoren 1834. Das zentrale Signal wird dabei bevorzugt in jeder der Stufen gleich verzögert, und auch die Ausgangssignale der Komparatoren 1834 werden bevorzugt mit konstanter Verzögerung durch die Stufen weitergeleitet. Das zentrale Signal befindet sich dabei bevorzugt näherungsweise in der Mitte zwischen dem ersten Signal 1812 und dem letzten Signal 1814, beschreibt also einen Rasterzeile in der Mitte des der Hough-Transformationseinrichtung 1800 zugeführten Bildausschnitts, oder ist von der Mitte des Bildausschnitts höchstens 25% einer Breite des Bildausschnitts entfernt. Die Breite des Bildausschnitts ist hierbei durch die Anzahl an Rasterzeilen oder Rasterspalten definiert, die der Hough-Transformationseinrichtung 1800 gleichzeitig zugeführt werden.

Basierend auf der strukturellen Beschreibung wird im Folgenden die Funktionsweise der Mustererkennungseinrichtung 1800 näher beschrieben. Es wird dabei davon ausgegangen, dass ein Bildausschnitt in Form von parallelen Zeitsignalen 1812, 1814, 1816 der Hough-Transformationseinrichtung 1800 zugeführt wird. Die Verzögerungselemente 1820 oder die Bypässe 1824 sind dabei so konfiguriert, dass verschiedene Zeitsignale 1812, 1814, 1816 bei einem Durchlaufen der einzelnen Stufen verschieden stark verzögert werden. Die Verzögerungen sind durch Einschalten von Verzögerungselementen 1820 oder Bypässen 1824 so eingestellt, dass ein gebogener Kurvenverlauf (bevorzugt ein kreisförmiger gebogener Kurvenverlauf, oder ein ellipsenförmig gebogener Kurvenverlauf) nach Durchlaufen von einer Stufe oder von mehreren Stufen 1810 gerade gebogen wird. Mit anderen Worten, ein gebogener Kurvenverlauf in dem von der Hough-Transformationseinrichtung verarbeiteten Bildausschnitt resultiert darin, dass die einzelnen Signale 1812, 1814, 1816 zu unterschiedlichen Zeitpunkten aktiv sind. Durch eine geeignete Einstellung der Verzögerungselemente 1820 bzw. der Bypässe 1824 kann allerdings erreicht werden, dass Signale 1812, 1814, 1816 die einzelnen Stufen unterschiedlich schnell durchlaufen, so dass nach dem Durchlaufen einer bestimmten Anzahl von Stufen 1810 idealer Weise alle auf den Signalen 1812, 1814, 1816 beruhenden weitergeleiteten Signale an dem Ausgang einer Stufe gleichzeitig aktiv sind. In diesem Fall tritt in der bestimmten Stufe eine besonders große Zeilensumme auf, die von der entsprechenden Summiereinrichtung 1830 berechnet wird. Ein Auftreten einer derartig großen Zeilensumme kann dann dazu führen, dass der Komparator 1834 der betreffenden Stufe ein aktives Signal ausgibt, das wiederum über die Kette von Verzögerungselementen 1836 zu dem Ausgang 1840 der Hough-Transformationseinrichtung weitergeleitet wird. Aus einer zeitlichen Lage einer Aktivität auf dem Ausgangssignal an dem Ausgang 1840 der Hough-Transformationseinrichtung 1800 kann damit auf eine Lage eines Kurvenverlaufs in dem in Form von Zeitsignalen 1812, 1814, 1816 an die Hough-Transformationseinrichtung 1800 eingegebenen Bildausschnitt geschlossen werden.

Es wird ferner darauf hingewiesen, dass es bevorzugt wird, dass ein vorbestimmtes Signal (auch als zentrales Signal bezeichnet) aus den Signalen 1812, 1814, 1816 die Stufen 1810 der Hough-Transformationseinrichtung 1800 genauso schnell durchläuft, wie ein Ausgangssignal von den Ausgängen der Komparatoren 1834, das von der Kette von Verzögerungselementen 1836 weitergeleitet wird. In anderen Worten, zumindest eines der Eingangssignale 1812, 1814, 1816 breitet sich parallel und in gleicher Geschwindigkeit wie die Ausgangssignale der Komparatoren 1834 aus. Dadurch kann erzielt werden, dass das an dem Ausgang 1840 der Hough-Transformationseinrichtung 1800 anliegende Ausgangssignal, das auf den in der Kette von Verzögerungselementen 1836 weitergeleiteten Signalen der Komparatoren 1834 basiert, eine direkte Aussage über den Zeitpunkt bzw. Ort des Auftretens eines gebogenen Liniensegments in den Eingangssignalen 1812, 1814, 1816 trägt. Hierbei gibt der Zeitpunkt des Auftretens einer Aktivität auf dem Ausgangssignal an dem Ausgang 1840 der Hough-Transformationseinrichtung 1800 eine Aussage darüber, zu welchem Zeitpunkt bzw. an welchem Ort ein gebogener Linienverlauf in Form von Eingangssignalen 1812, 1814, 1816 in die Hough-Transformationseinrichtung eingegeben wurde. Der Zeitpunkt des Vorliegens eines gerade-gebogenen Kurvenverlaufs in den Signalen 1812, 1814, 1816 erlaubt dabei freilich einen direkten Rückschluss auf eine räumliche Lage des gebogenen Kurvenverlaufs in dem Rasterbild, das den Signalen 1812, 1814, 1816 zugrunde liegt.

Weiterhin wird darauf hingewiesen, dass bei der angegebenen Auslegung, bei der sich mindestens eines der Signale 1812, 1814, 1816 genauso schnell durch die Stufen 1810 ausbreitet, wie die Ausgangssignale der Komparatoren 1834, die genaue Form der Krümmung, beispielsweise also der Krümmungsradius, in einer gebogenen Kurve, lediglich einen Einfluss darauf hat, in welcher der Stufen 1810, ein Komparator 1834 aktiv wird. Die genaue Form des gebogenen Kurvenverlaufs hat bei der gezeigten Auslegung allerdings keinen Einfluss auf den Zeitpunkt, zu dem eine Aktivität an dem Ausgang 1840 der Hough-Transformationseinrichtung 1800 auftritt.

Es kann somit festgehalten werden, dass die in Fig. 18 gezeigte Hough-Transformationseinrichtung 1800 geeignet ist, um in einer sehr effizienten Weise die Lage eines gebogenen Kurvenverlaufs in einem Rasterbild festzustellen, indem das Rasterbild (oder ein Ausschnitt daraus) in eine Mehrzahl von parallelen Signalen umgewandelt wird, die dann mehrere Stufen der Hough-Transformationseinrichtung 1800 mit unterschiedlicher Geschwindigkeit durchlaufen. Durch die Bildung einer Spaltensumme an dem Ausgängen der Stufen 1810 kann erkannt werden, wenn mindestens eine vorgegebene Anzahl von Signalen an den Ausgängen der Stufen gleichzeitig aktiv sind, was wiederum darauf hinweist, dass der ursprünglich gekrümmt (beispielsweise näherungsweise kreiförmig, oder näherungsweise ellipsenförmig) verlaufende Kurvenverlauf "gerade gebogen" worden ist.

Bevorzugter Weise ist die Hough-Transformationseinrichtung 1800 durch geeignete Auswahl von Verzögerungselementen 1820 oder Bypässen 1824 ausgelegt, um durch Signale 1812, 1814, 1816 beschriebene Kurvenverläufe gerade zu biegen, die eine Ellipse an einem ersten Ellipsenpunkt (zum Beispiel Extrempunkt in einer ersten Richtung), einem zweiten Ellipsenpunkt (zum Beispiel Extrempunkt in einer der ersten Richtung entgegengesetzten Richtung), einem dritten Ellipsenpunkt (zum Beispiel Extrempunkt in einer zweiten Richtung) oder einem vierten Ellipsenpunkt (zum Beispiel Extrempunkt in einer der zweiten Richtung entgegengesetzten Richtung) annähern können. Ferner werden bevorzugter Weise eben nur solche Kurvenverläufe, die eine Ellipse an dem ersten Ellipsenpunkt, dem zweiten Ellipsenpunkt, dem dritten Ellipsenpunkt oder dem vierten Ellipsenpunkt annähern können, gerade gebogen. Damit ist die Hough-Transformationseinrichtung 1800 gemäß Fig. 18 geeignet, um ein gebogenes Liniensegment (kurz als "Bogen" bezeichnet) mit einer ersten Orientierung (zum Beispiel "nach links offen"), ein gebogenes Liniensegment mit einer zweiten Orientierung (zum Beispiel "nach rechts offen"), ein gebogenes Liniensegment mit einer dritten Orientierung (zum Beispiel "nach unten offen") oder ein gebogenes Liniensegment mit einer vierten Orientierung (zum Beispiel "nach oben offen") zu identifizieren. Der Zeitpunkt, zu dem ein Ausgangssignal an dem Ausgang 1840 der Hough-Transformationseinrichtung 1800 anliegt, beschreibt dabei eine Lage des identifizierten Kurvenverlaufs (oder Liniensegments, oder Bogens) in dem Rasterbild, auf dem die Signale 1812, 1814, 1816 basieren, also einen Parameter der gebogenen Liniensegmente mit verschiedenen Orientierungen.

Wird nunmehr davon ausgegangen, dass die Zeitsignale 1782, 1786, 1790 einer Hough-Transformationseinrichtung 1800 als Eingangssignale 1812, 1814, 1816 zugeführt werden, und dass die Signale 1812, 1814, 1816 in einzelnen Stufen 1810 der Hough-Transformationseinrichtung 1800 verschieden stark verzögert werden, so wird klar, dass die verschieden starke Verzögerung der Zeitsignale 1782, 1786, 1790 einer Verzerrung des Rasterbildes 1760 entspricht, wodurch ein gebogener Kurvenverlauf ("Bogen") zu einer geraden Linie verbogen werden kann. Eine gerade Linie aber, die mit einer gleichzeitigen Aktivität von mehreren der Zeitsignale 1782, 1786, 1790 korrespondiert, kann in der Hough-Transformationseinrichtung 1800, wie oben beschrieben, erkannt werden.

### Hough-Transformation - Referenzkurven

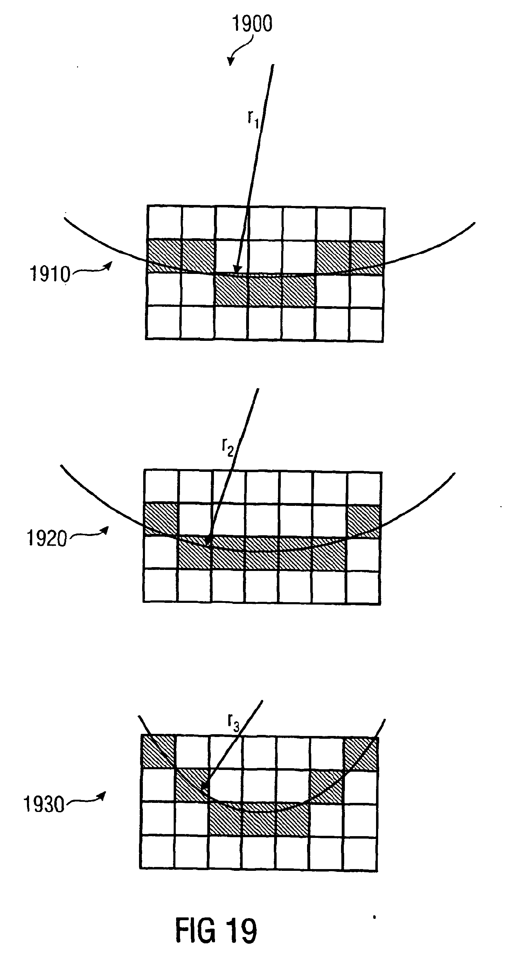

Fig. 19 zeigt eine graphische Darstellung von beispielhaften Referenzkurven zur Verwendung in einer Mustererkennungseinrichtung gemäß einem Ausführungsbeispiel der Erfindung. In anderen Worten, Fig. 19 zeigt eine graphische Darstellung von zwei Beispielen für Referenzkurvenverläufe zur Verwendung in einer erfindungsgemäßen Mustererkennungseinrichtung. Die graphische Darstellung der Fig. 19 ist in ihrer Gesamtheit mit 1900 bezeichnet.

Eine erste graphische Darstellung 1910 beschreibt dabei in Form eines Rasterbildes einen ersten Referenzkurvenverlauf, der einen Abschnitt (oder Ausschnitt) aus einer kreisförmigen (oder ellipsenförmigen) Kurve mit einem ersten Krümmungsradius r₁ annähert. Eine zweite graphische Darstellung 1920 beschreibt in Form eines Rasterbildes einen zweiten Referenzkurvenverlauf, der einen Abschnitt (oder Ausschnitt) aus einer kreisförmigen (oder ellipsenförmigen) Linie mit einem zweiten Krümmungsradius r₂ annähert, wobei der zweite Krümmungsradius r₂ größer ist als der erste Krümmungsradius r₁. Eine dritte graphische Darstellung 1930 zeigt ferner in Form eines Rasterbildes den dritten Referenzkurvenverlauf, der ebenso einen Abschnitt oder Ausschnitt aus einer kreisförmigen (oder ellipsenförmigen) Linie mit einem dritten Krümmungsradius r₃ beschreibt. Der dritte Krümmungsradius r₃ ist dabei kleiner als der erste Krümmungsradius r₁. Die drei graphischen Darstellungen 1910, 1920, 1930 der Fig. 19 beschreiben also drei mögliche Referenzkurvenverläufe zur Verwendung in der Mustererkennungseinrichtung, beispielsweise in dem Hough-Transformator 130 oder in dem Konturlinienbestimmter 250. In anderen Worten, der Hough-Transformator 130 bzw. der Konturlinienbestimmer 250 kann beispielsweise ausgelegt sein, um einen oder mehrere der drei in den graphischen Darstellungen 1910, 1920, 1930 der Fig. 19 gezeigten Referenzkurvenverläufe in dem gerasterten Bild bzw. in der vorverarbeiteten Version des gerasterten Bildes (z. B. in dem Bild 110 oder in dem Bild oder Bildausschnitt 142) zu erkennen und beispielsweise als ein Gestenelement (bogen bzw. gebogenes Liniensegment) zu identifizieren. Ferner kann die Mustererkennungseinrichtung bzw. der Hough-Transformator ausgelegt sein, um die Lage eines in dem gerasterten Bild oder Bildausschnitt erkannten Referenzkurvenverlaufs durch Lageparameter zu beschreiben, und diese Lageparameter beispielsweise unter Verwendung der Information 132 über die identifizierten Gestenelemente oder in Form der Konturparameter 252 zur weiteren Verarbeitung zur Verfügung zu stellen.

Die anhand der Fig. 19 beschriebenen Referenzkurven können sowohl als Grundlage einer herkömmlichen Hough-Transformation mit Parameter-Akkumulation dienen als auch bei einer parallelen Hough-Transformation eingesetzt werden.

### Hough-Transformation - Beispiel Fingerkuppe 1

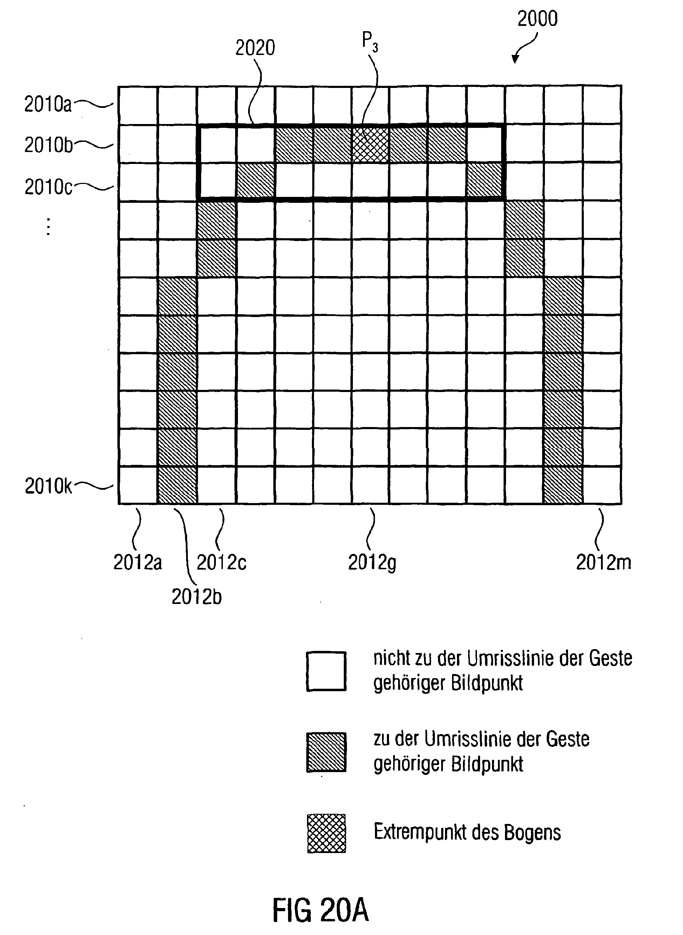

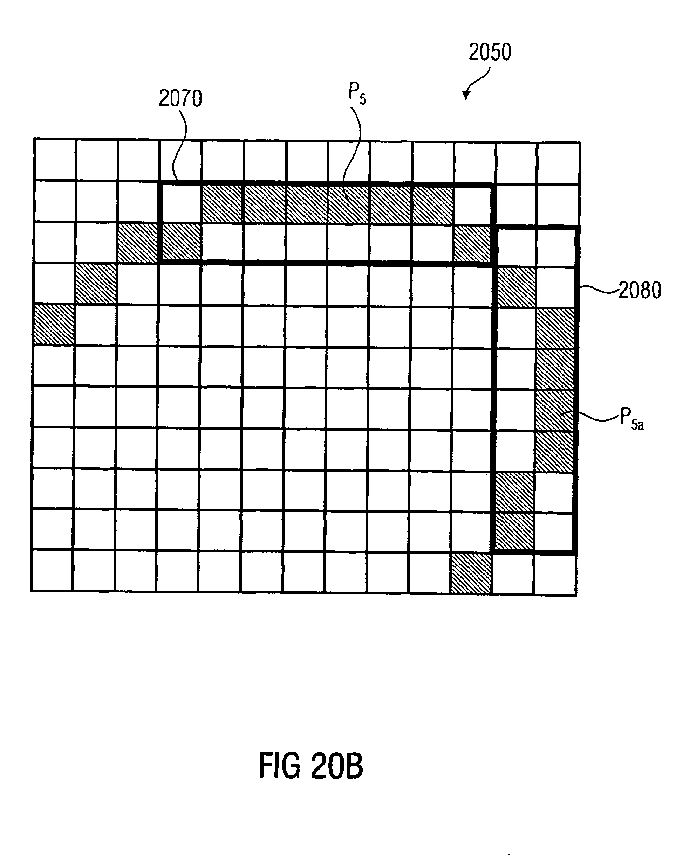

Fig. 20 a zeigt eine schematische Darstellung eines beispielhaften Bildausschnitts, der eine Umrisslinie einer nach oben orientierten Fingerspitze umfasst. Der Bildausschnitt gemäß der Fig. 20a in seiner Gesamtheit mit 2000 bezeichnet.

Das gerasterte Bild 2000 umfasst eine Mehrzahl von Rasterzeilen 2010a bis 2010k sowie eine Mehrzahl von Rasterspalten 2012a bis 2012m. Bildpunkte (Pixel), die zu der Umrisslinie der Fingerspitze gehören, sind schraffiert dargestellt, und andere Pixel sind ohne Schraffur dargestellt. Das Bild 2000 kann als Ausschnitt aus dem Bild 110 bzw. aus dem Bild 210 angesehen werden, oder ein Ausschnitt aus einer vorverarbeiteten Version eines derartigen Bildes sein. Der Hough-Transformator (zum Beispiel der Hough-Transformator 130 oder der Konturlinienbestimmer 250) kann das Bild 2000 verarbeiten, um darin beispielsweise einen nach oben geöffneten Bogen (beispielsweise einen entsprechenden Ausschnitt aus einem vollen Kreisbogen oder Ellipsenbogen), einen nach unten geöffneten Bogen, einen nach links geöffneten Bogen und/oder einen nach rechts geöffneten Bogen zu identifizieren.

Die Identifizierung eines derartigen Bogenausschnitts kann beispielsweise unter Verwendung des parallelen Hough-Transformators erfolgen, dessen Funktionsweise und Struktur anhand der Fig. 17a, 17b, 18 und 19 erläutert wurde. Alternativ dazu können die entsprechenden Bögen auch mit anderen Konzepten der Hough-Transformation identifiziert werden.

In anderen Worten, der Hough-Transformator kann beispielsweise ausgelegt sein, um festzustellen, ob in dem Bild 2000 eine der Vergleichskurven 1910, 1920, 1930 vorhanden sind. Dabei kann der Hough-Transformator das Bild in verschiedenen Orientierungen verarbeiten oder Vergleichskurven verschiedener Orientierungen heranziehen, um beispielsweise Bögen verschiedener Orientierungen zu unterscheiden.

In dem vorliegenden Beispiel kann der Hough-Transformator erkennen, dass in dem Bild 2000 ein nach unten geöffneter Bogen vorliegt, der, abgesehen von der Richtung der Öffnung, dem Referenzbogen 1920 entspricht. Der Hough-Transformator kann somit den in dem Bildbereich 2020 vorhandenen Bogen identifizieren und durch einen oder mehrere Lageparameter beschreiben. Beispielsweise kann der Hough-Transformator eine Information darüber liefern, dass ein Extrempunkt P3 des in dem Bildbereich 2020 liegenden Bogens in der zweiten Zeile 2010b und der siebten Spalte 2012g gelegen ist.

Somit kann der Hough-Transformator insgesamt eine Information über das identifizierte Gestenelement - den in dem Bildbereich 2020 gelegenen, nach unten offenen Bogen - liefern, nämlich beispielsweise eine Information über die Orientierung (nach unten offen) und über die Lage des Extrempunktes (beispielsweise ausgedrückt, durch eine Bildzeile und/oder der Bildspalte) oder des Mittelpunktes.

Somit kann der Hough-Transformator insgesamt eine Information über die Lage der in dem Bild 2000 dargestellten Fingerkuppe liefern.

### Hough-Transformation - Beispiel Fingerkuppe 2

Fig. 20b zeigt eine schematische Darstellung eines Bildausschnitts, der einen nach rechts oben weisenden Finger zeigt. Der Bildausschnitt gemäß der Fig. 20b ist in seiner Gesamtheit mit 2050 bezeichnet. In einem Bildbereich 2070 ist beispielsweise ein nach unten geöffneter Bogen mit Extrempunkt P5 enthalten und in einem Bildbereich 2080 ist ein nach links geöffneter Bogen vorhanden. Die Bögen können wiederum durch den Hough-Transformator erkannt werden. Entsprechend kann der Hough-Transformator eine Information über die Lage des Extrempunktes P5a des in dem Bildbereich 2080 vorhandenen Bogens liefern.

Aus den Fig. 20a ist 20b ist somit ersichtlich, wie der Hough-Transformator in dem Bild bzw. in dem Bildausschnitt und bzw. in der vorverarbeiteten Version des Bildes Bögen (zum Beispiel Ausschnitte aus Voll-Bögen) erkennen und durch entsprechende Parameter, die beispielsweise die Orientierung und die Lage eines Extrempunktes angeben, beschreiben kann. Somit kann der Hough-Transformator die Information 132 über die identifizierte Gestenelemente bzw. die Konturparameter 252 bereitstellen.

### Symbolische affine Abbildungen

Im Folgenden wird beschrieben, wie durch den Gesten-Beschreibungs-Ersteller 140 oder durch den Gestenklassifizierer 150 (bzw. durch den Gesten-Beschreibungs-Ersteller 270 oder durch den Gesten-Klassifizierer 280) eine symbolische affine Abbildung durchgeführt werden kann.

Im Wesentlichen sind drei verschiedene Typen von symbolischen affinen Abbildungen denkbar:
- Verschiebung;
- Drehung;
- Skalierung.

Der Gesten-Beschreibungs-Ersteller 140 oder der Gesten-Klassifizierer 150 kann beispielsweise mehrere Gestenbeschreibungen erzeugen (zum Beispiel für den Vergleich mit den Vergleichs-Gestenbeschreibungen 162 aus der Datenbank 160), die zueinander im geometrischen Sinne ähnliche Umrisslinien beschreiben und gegeneinander durch eine affine Abbildung verändert sind.

### Symbolische affine Abbildungen - Verschiebung

Im Folgenden wird zunächst eine Verschiebung beschrieben. Aus einer Ausgangs-Gestenbeschreibung kann beispielsweise eine verschobene Gesten-Beschreibung erzeugt werden, indem sämtliche Lageparameter, beispielsweise eine x-Koordinate und eine y-Koordinate, für einzelne Gestenelemente jeweils in der gleichen Weise verändert werden. Mit anderen Worten, es wird beispielsweise zu den Lageparametern aller Gestenelemente (die bei der Erstellung der Gestenbeschreibung berücksichtigt werden, weil sie zu einer Umrisslinie gehören) ein bestimmter vorgegebener Wert hinzu addiert oder davon subtrahiert. Beispielsweise kann ein bestimmter Wert zu den Lageparametern in x-Richtung addiert werden. Alternativ oder zusätzlich kann ein (weiterer) bestimmter Wert zu den Lageparametern in y-Richtung hinzu addiert werden bzw. davon abgezogen werden. Somit kann durch eine einfache Änderung der Lageparameter der Gestenelemente eine Verschiebung bewirkt werden.

Bei einigen Ausführungsbeispielen kann im Übrigen eine Normierung der Position erfolgen. Dabei können ein oder mehrere der optionalen Flächenparameter ausgewertet werden.

### Symbolische affine Abbildungen - Rotation

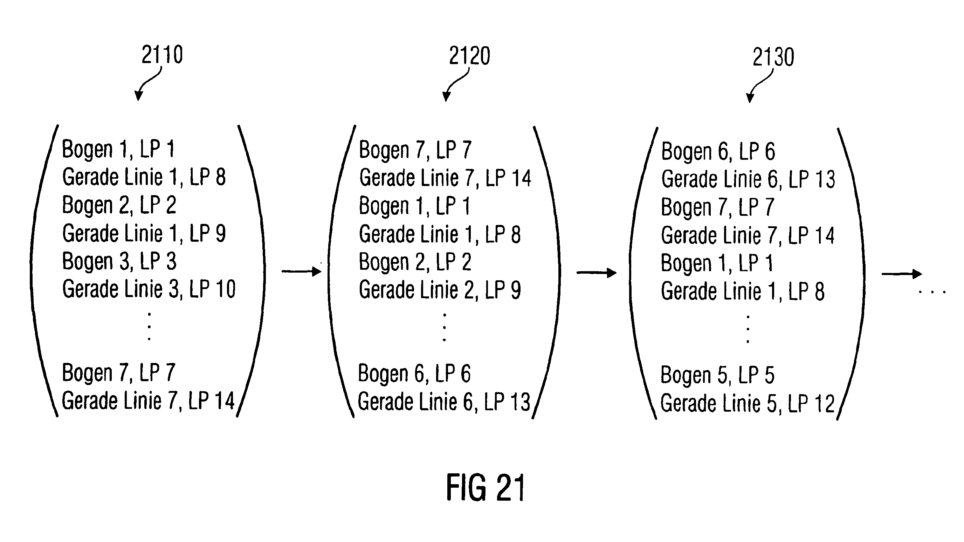

Im Folgenden wird die Durchführung einer Rotation beschrieben. Dabei wird auf die Fig. 21 Bezug genommen. Fig. 21 zeigt eine schematische Darstellung einer Vorgehensweise bei einem zyklischen Durchrotieren einer Gesten-Beschreibung. Eine Ausgangs-Gestenbeschreibung ist in der Fig. 21 mit 2110 bezeichnet. Daraus wird bei dem ersten zyklischen Durchrotieren eine einmal-rotierte Gestenbeschreibung 2120 erhalten. Durch ein weiteres zyklisches Rotieren wird eine zweimal rotierte Gestenbeschreibung 2130 erhalten. Die einzelnen Gestenelemente werden zyklisch durchrotiert, wie dies aus der Fig. 21 ersichtlich ist. Die Richtung des zyklischen Durchrotierens kann dabei verschieden gewählt werden. Auch kann es im Grunde beliebig gewählt werden, um wie viele Gestenelemente die Gestenbeschreibung jeweils weiter rotiert werden soll. Die zyklisch durchrotierten Gestenbeschreibungen 2120, 2130 beschreiben dabei Gesten, die gegenüber der durch die ursprüngliche Gestenbeschreibung 2110 beschriebenen Geste gedreht sind. Bei einem Ausführungsbeispiel können sowohl die ursprüngliche Gestenbeschreibung 2110 als auch die (eine oder mehreren) zyklisch durchrotierten Gestenbeschreibungen 2120, 2130, mit den der Datenbank gespeicherten Vergleichs-Gestenbeschreibungen verglichen werden.

Zur Festlegung einer geeigneten Rotation können im Übrigen optional ein oder mehrere der Flächenparameter herangezogen werden. Beispielsweise kann ein Flächenparameter beschreiben, in welcher Richtung eine Gestenfläche eine maximale Ausdehnung aufweist. Diese Information kann verwende werden, um festzulegen, um welchen Winkel (beispielsweise beschrieben durch eine Anzahl von Gestenelementen) die Ausgangs-Gestenbeschreibung rotiert werden soll.

### Symbolische affine Abbildungen - Skalierung

Im Folgenden wird eine Skalierung der Gestenbeschreibung beschrieben. Bei einer Skalierung der Gestenbeschreibung werden beispielsweise, ausgehend von der Ausgangs-Gestenbeschreibung, die Größen-bestimmenden Parameter skaliert, während hingegen die Form-bestimmenden Parameter unverändert blieben.

Beispielsweise werden bei geraden Linien die Längenparameter skaliert, während Richtungsparameter unverändert bleiben können. Bei einer Beschreibung eines Kreises oder Kreisausschnitts hingegen wird nur der Radiusparameter variiert, während hingegen der Winkelparameter oder der Orientierungsparameter unverändert bleibt.

Im Übrigen können auch die Positionsparameter (Anfangspunkt an die Gerade, Endpunkt einer Gerade, Mittelpunkt eines Kreises oder Extrempunkt eines Kreises) entsprechend skaliert werden, beispielsweise im Sinne einer Streckung weg von dem Streckungszentrum oder hin zu einem Streckungszentrum.

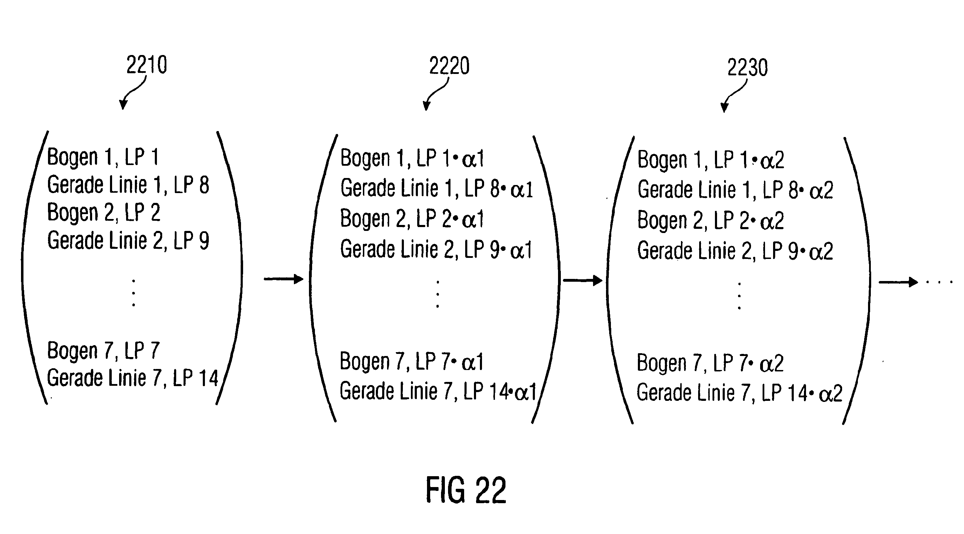

Fig. 22 zeigt eine schematische Darstellung einer Vorgehensweise bei einer Skalierung einer Gestenbeschreibung. Eine ursprüngliche Gestenbeschreibung ist mit 2210 bezeichnet. Eine einmal-skalierte Gestenbeschreibung ist mit 2220 bezeichnet. Eine Zweimalskalierte Gestenbeschreibung (oder eine anders skalierte Gestenbeschreibung) ist mit 2230 bezeichnet. Die skalierten Gestenbeschreibungen 2220, 2230 unterscheiden sich beispielsweise von der ursprünglichen Gestenbeschreibung 2210 darin, dass, wie oben beschrieben, die Radiusparameter von Kreisen und die Längenparameter von Strecken mit einem Skalierungsfaktor (zum Beispiel α1, α2) skaliert sind. Sowohl die ursprüngliche Gestenbeschreibung 2210 als auch die skalierte Gestenbeschreibung 2220, 2230, können durch den Gestenklassifizierer mit den Vergleichs-Gestenbeschreibungen aus der Datenbank verglichen werden.

### Anwendung 1

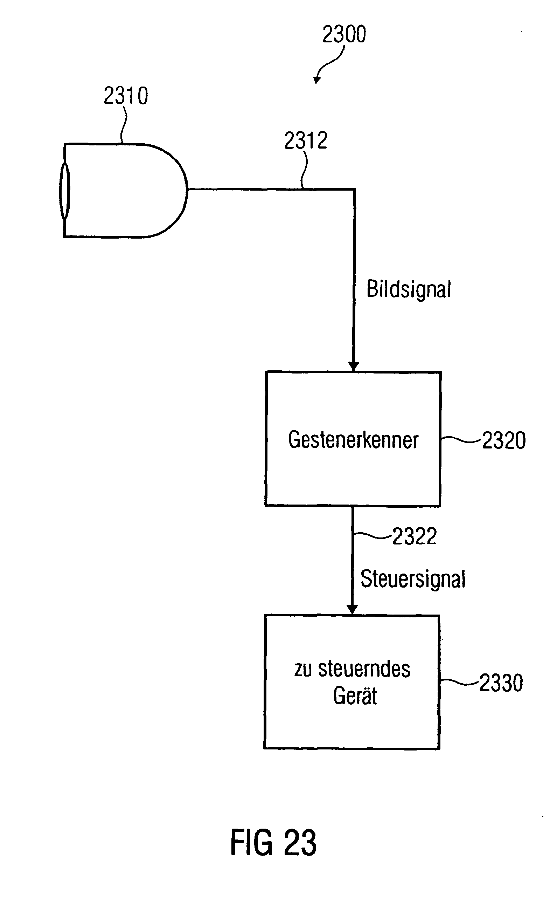

Im Folgenden wird anhand der Fig. 23 eine mögliche Anwendung der erfindungsgemäßen Vorrichtung zur Gestenerkennung beschrieben. Die Anordnung gemäß der Fig. 23 ist in ihrer Gesamtheit mit 2300 bezeichnet.

Die Anordnung 2300 umfasst einen Bildaufnehmer, beispielsweise in Form einer Kamera, der mit 2310 bezeichnet ist. Der Bildaufnehmer 2310 liefert ein Bildsignal 2312, dass das von dem Bildaufnehmer aufgenommene Bild beschreibt. Die Anordnung 2300 umfasst ferner einen Gestenerkenner 2310, bei dem es sich beispielsweise um einen der hierin beschriebenen Gestenerkenner handeln kann. Der Gestenerkenner 2310 ist ausgelegt, um basiert auf dem Bildsignal 2312, dass das Bild beschreibt, eine Information 2322 zu liefern, die eine in dem Bild erkannte Geste, beispielsweise in Form eines Gesten-Codes, beschreibt. Die Information 2320 kann zu einem zu steuernden Gerät 2330 geliefert werden, um als Steuerinformation für das zu steuernde Gerät 2330 zu dienen.

Somit kann das zu steuernde Gerät 2330 beispielsweise basierend auf der durch den Gestenerkenner 2320 erkannte Geste in verschiedene Zustände versetzt werden. Wird eine erste Geste erkannt, so kann dies, basierend auf dem Steuersignal 2322, durch das zu steuernde Gerät 2330 als ein erstes Kommando verstanden werden. Wird hingegen eine zweite Geste erkannt, die von der ersten Geste verschieden ist, so kann dies durch das zu steuernde Gerät 2330 als ein zweites Kommando verstanden werden. Somit ist insgesamt festzuhalten, dass die Funktionen des zu steuerndes Gerätes 2330, basierend auf der durch den Gestenerkenner 2320 erkannten Geste gesteuert werden, wobei verschiedene Gesten unterschiedliche Kommandos für das zu steuernde Gerät 2330 darstellen.

### Anwendung 2

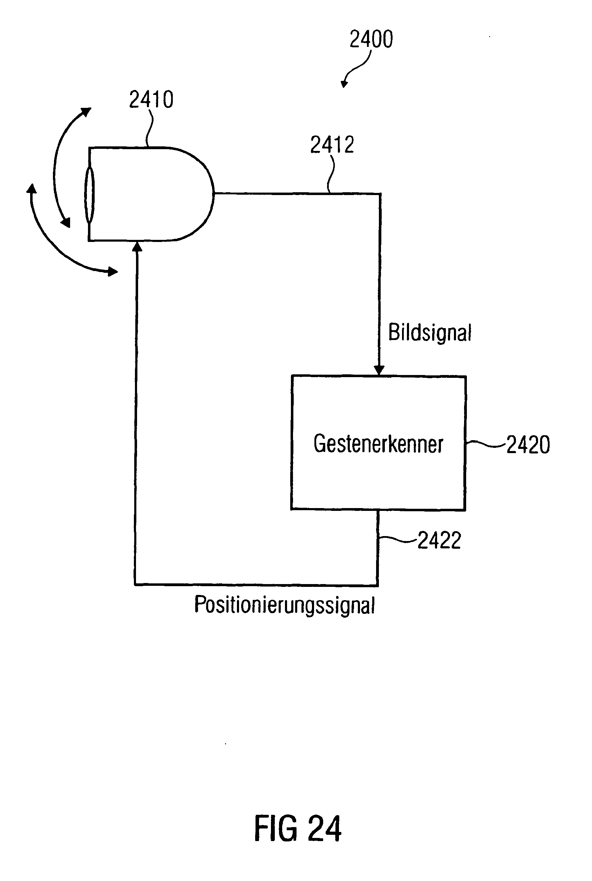

Im Folgenden wird ein weiteres Ausführungsbeispiel gemäß der Erfindung Bezug nehmend auf die Fig. 24 beschrieben. Fig. 24 zeigt ein Blockschaltbild einer Vorrichtung zur Steuerung einer Kamera, gemäß einem Ausführungsbeispiel der Erfindung. Die Vorrichtung gemäß der Fig. 24 ist in ihrer Gesamtheit mit 2400 bezeichnet. Die Vorrichtung 2400 umfasst eine Kamera 2410, die ausgelegt ist, um ein Bildsignal 2412 zu liefern. Die Vorrichtung 2400 umfasst ferner einen Gestenerkenner 2420, der dem hierin beschriebenen Gestenerkenner entspricht. Der Gestenerkenner 2420 ist beispielsweise ausgelegt, um basierend auf dem Bildsignal 2412 einen Gestencode zu liefern, der beispielsweise als Positionierungssignal 2422 dienen kann. Das Positionierungssignal 2422 kann beispielsweise genutzt werden, um eine Neigung und/oder eine Schwenkung der Kamera 2410 zu bewirken. Somit kann beispielsweise in Abhängigkeit davon, welche Geste in dem durch das Bildsignal 2412 beschriebenen Bild erkannt wird, eine Neigung und/oder Schwenkung der Kamera 2410 erfolgen. Somit können insgesamt Gesten benutzt werden, um die Ausrichtung der Kamera 2410 zu steuern. Alternativ oder zusätzlich können weitere Funktionen der Kamera gesteuert werden, beispielsweise eine Aufnahme eines Schnappschusses, Zoom-Funktionen, Einstellungen von Belichtungsparametern und ähnliches.

### Verfahren 1

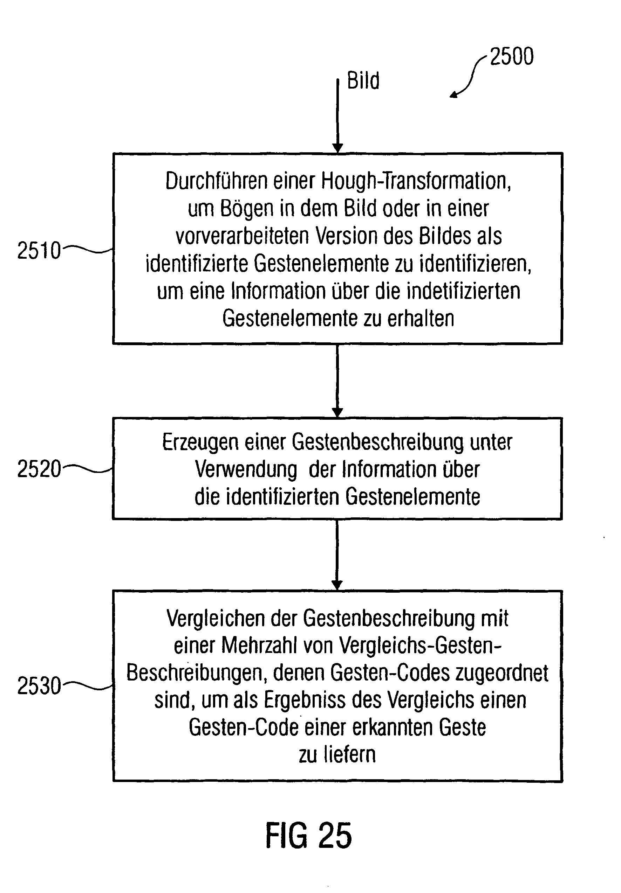

In Folgenden wird ein Verfahren beschrieben. Fig. 25 zeigt ein Flussdiagramm eines Verfahrens zur Identifizierung einer Geste in einem Bild, gemäß einem Ausführungsbeispiel der Erfindung. Das Verfahren gemäß der Fig. 25 ist in seiner Gesamtheit mit 2500 bezeichnet.

Das Verfahren 2500 umfasst ein Durchführen 2510 einer Hough-Transformation, um Bögen in dem Bild oder in einer vorverarbeiteten Version des Bildes als identifizierte Gestenelemente zu identifizieren, um eine Information über die identifizierten Gestenelemente zu erhalten.

Das Verfahren umfasst zudem ein Erzeugen 2520 einer Gestenbeschreibung unter Verwendung der Information über die identifizierten Gestenelemente.

Das Verfahren 2500 umfasst zudem ein Vergleichen 2530 der Gesten-Beschreibung mit einer Mehrzahl von Vergleichs-Gesten-Beschreibungen, denen Gesten-Codes zugeordnet sind, um als Ergebnis des Vergleichs einen Gesten-Code einer erkannten Geste zu liefern.

Das Verfahren 2500 kann optional um alle Merkmale und Funktionalitäten ergänzt werden, die hierin im Hinblick auf die erfindungsgemäßen Vorrichtungen beschrieben wurden.

### Verfahren 2

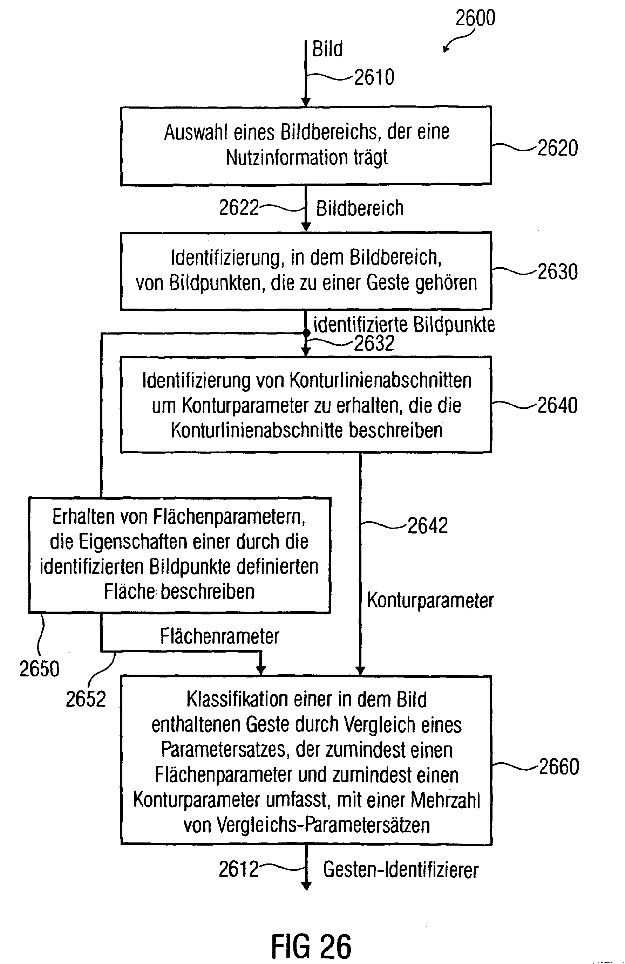

Im Folgenden wird anhand der Fig. 26 noch kurz ein weiteres Verfahren zur Identifizierung einer Geste beschrieben. Das Verfahren gemäß der Fig. 24 ist in seiner Gesamtheit mit 2600 bezeichnet. Das Verfahren 2600 ist insgesamt ausgelegt, um basierend auf einem Bild 2610 einen Gesten-Identifizierer 2612 zu liefern. Das Verfahren 2600 umfasst in einem ersten (optionalen) Schritt 2620 ein Auswählen eines Bildbereichs, der eine Nutzinformation trägt. Somit kann beispielsweise ein Bildbereich 2622 identifiziert werden. Das Verfahren 2600 umfasst ferner in einem weiteren Schritt 2630 ein Identifizieren von Bildpunkten in dem Bildbereich 2622 (oder in dem Bild 2610), die zu einer Geste gehören. Somit steht der Information 2632 zur Verfügung, die identifizierte Bildpunkte beschreibt. Basierend auf der Information 2632 über identifizierte Bildpunkte können in einem weiteren Schritt 2640 Konturlinienabschnitte einer vorgegebenen Form (zum Beispiel Bögen verschiedener Öffnungsrichtungen) identifiziert werden, um Konturparameter zu erhalten, die die Konturlinienabschnitte beschreiben. Somit werden beispielsweise Konturparameter 2642 erhalten, die die Konturlinienabschnitte beschreiben. Ferner können in einem weiteren Schritt 2650 ein oder mehrere Flächenparameter erhalten werden, die Eigenschaften einer durch die identifizierten Bildpunkte definierten Fläche beschreiben. Somit stehen also Flächenparameter 2652 zur Verfügung. In einem weiteren Schritt 2660 kann beispielsweise eine in dem Bild enthaltene Geste identifiziert werden. Die Klassifizierung kann beispielsweise durch Vergleich eines Parametersatzes, der zumindest einen Flächenparameter und zumindest einen Konturparameter umfasst, mit einer Mehrzahl von Vergleichs-Parametersätzen erfolgen. Dabei kann einer der Vergleichs-Parametersätze identifiziert werden, zu dem eine bestmögliche Übereinstimmung, oder zumindest eine ausreichende Übereinstimmung, existiert. Der Gesten-Identifizierer 2612 kann somit in Abhängigkeit davon bereitgestellt werden, welcher der Vergleichsparametersätze dem aktuellen Parametersatz am besten entspricht.

Ferner kann das Verfahren 2600 um all diejenigen Funktionalitäten ergänzt wurden, die hier beschrieben sind.

### Implementierungsalternativen

Die erfindungsgemäße Vorrichtung und das erfindungsgemäße Verfahren können in Hardware oder in Software implementiert werden. Die Implementation kann auf einem digitalen Speichermedium, beispielsweise einer Diskette, einer CD, einer DVD, einem ROM, einem PROM, einem EPROM, einem EEPROM, oder einem FLASH-Speicher, mit elektronisch auslesbaren Steuersignalen erfolgen, die so mit einem programmierbaren Computersystem zusammenwirken können, dass das entsprechende Verfahren ausgeführt wird.

Allgemein besteht die vorliegende Erfindung somit auch in einem Computer-Programm-Produkt mit auf einem maschinenlesbaren Träger gespeicherten Programmcode zur Durchführung des erfindungsgemäßen Verfahrens, wenn das Computerprogramm-Produkt auf einem Rechner abläuft.

In anderen Worten ausgedrückt, die Erfindung kann als ein Computer-Programm mit einem Programmcode zur Durchführung des erfindungsgemäßen Verfahrens realisiert werden, wenn das Computer-Programm auf einem Computer abläuft.

Im Folgenden werden einige weitere Ausführungsbeispiele gemäß der Erfindung beschrieben.

### Weiteres Ausführungsbeispiel 1

Bei einem Ausführungsbeispiel ist die Erfindungsidee ein Verfahren und eine Vorrichtung zur Aufzeichnung von Bildern oder Videos, der Extraktion von Informationen aus dem Datenstrom und der Interpretation der gefundenen Muster. Beispielsweise dient das Verfahren und die Vorrichtung dazu, Zeichen zu erkennen. Die Zeichen können in einem besonderen Anwendungsfall Gesten sein, die durch unterschiedliche Handstellungen erzeugt werden. Eine Stellung der Hand (oder der Hände) wird beispielsweise von einer Kamera aufgezeichnet. Das Verfahren und die Vorrichtung bearbeitet die vorliegenden Videosequenzen (Rahmen bzw. "Frames") oder Einzelbilder und extrahiert daraus Gesten in einem mehrstufigen Verarbeitungsprozess. Eine Vorverarbeitungsstufe ist beispielsweise die Segmentierung des Bildes und die Klassifikation von Bildpunkten bzw. "Pixel", die einer Hautfarbe zugeordnet werden. Das Bild wird beispielsweise in hautfarbene Bildpunkte bzw. Pixel und nicht-hautfarbene Bildpunkte bzw. Pixel separiert.

Das Verfahren wird beispielsweise in einem nächsten Schritt mit Konturlinienextraktionsalgorithmen kombiniert. Damit liegt die Information sowohl als Flächeninformation als auch als Konturparameter vor. Aus der Fläche werden beispielsweise Flächenparameter, wie Schwerpunkt, Elongation bzw. Ausdehnung in horizontaler und vertikaler Richtung, Drehmoment und/oder Exzentrizität bestimmt. Auf diese Parameter wird beispielsweise ein Klassifikationsalgorithmus angewandt, mit dem die Gesten bestimmten Gestenklassen zugeordnet werden (dies wird auch als "Auffinden einer Übereinstimmung" bzw. "Matching" bezeichnet).

Als Konturlinienextraktoren werden beispielsweise Form-Extraktoren (auch als "Shape-Extraktoren" bezeichnet), wie beispielsweise eine als "WinDelayLine" bezeichnete Vorrichtung bzw. ein als "WinDelayLine" bezeichnetes Computerprogramm, oder Lauflängencodierungsverfahren ("Run Lenght Coding-Verfahren") eingesetzt. Die gefundenen Lauflängencodes ("Run Lenght Codes") bzw. der Tupelsatz der gefundenen Liniensegmente, die jeweils durch die Ortsposition x_i, y_i, gegeben sind, und der lokalen Steigung bzw. Krümmung werden beispielsweise durch Klassifikationsalgorithmen mit den hinterlegten Musterdatensätzen abgeglichen "gematcht".

### Anwendungsmöglichkeiten

Einige Ausführungsbeispiele gemäß der Erfindung können beispielsweise für eine Fernbedienung verschiedener Geräte, z. B. von Radios oder TV-Geräten, eingesetzt werden. Ausführungsbeispiele gemäß der Erfindung können im Übrigen beispielsweise zur Unterstützung von Behinderten oder Senioren ("ältere Generation") eingesetzt werden. Sämtliche Ausführungsbeispiele gemäß der Erfindung können zur Ansteuerung von Industriegeräten eingesetzt werden. Ganz allgemein können Ausführungsbeispiele gemäß der Erfindung zur Verbesserung der Mensch-Maschine-Interaktion ("Human-Machine-Inter-Action") eingesetzt werden.

Einige Ausführungsbeispiele gemäß der Erfindung schaffen somit ein universell einsetzbares Verfahren und eine universell einsetzbare Vorrichtung zur Zeichen- und/oder Gestenerkennung.

### Weitere Erfindungsgedanken

Bei einigen Ausführungsbeispielen gemäß der Erfindung kommt es besonders auf die Anwendung der hierin beschriebenen Kantendetektionsverfahren zur Gestenerkennung an.

Bei anderen Ausführungsbeispielen hingegen können etwas modifizierte Kantendetektionsverfahren eingesetzt werden.

Bei einigen Ausführungsbeispielen gemäß der Erfindung können grafische Modelle (beispielsweise ein grafisches Modell, das eine Umrisslinie einer Hand beschreibt) eingesetzt werden. Die graphischen Modelle können beispielsweise ein Bildobjekt durch eine Aufzählung von Einzelobjekten bzw. deren Parametern beschreiben. Für Details im Hinblick auf die Möglichkeiten zum Einsatz von graphischen Modellen wird beispielsweise auf die Veröffentlichungen "Object Detection by Contour Segment Networks" von V. Ferrari u.a. und "Robust Object Recognition with Cortex-Like Mechanisms" von L. Wolf u.a. (veröffentlicht in: IEEE Transactions on Pattern Analysis and Machine Intelligence. Vol. 29, Nr. 3 March 2007) verwiesen, in denen diese Themen beschrieben sind.

Bei einigen Ausführungsbeispielen wird im Rahmen der Gestenerkennung ein Hautfarbenerkenner und danach eine Hough-Transformation eingesetzt. Details im Hinblick auf eine mögliche Implementierung eines Hough-Transformators sind beispielsweise in der US 2005/117781 AA und in der US 2006/210116 AA beschrieben. In den genannten Schriften sind Beispiele im Hinblick auf die Durchführung der Hough-Transformation beschrieben, wie sie heutzutage in Fahrzeugen und in ASIMO eingesetzt wird. Eine Verwendung der in den genannten Schriften beschriebenen Konzepte im Rahmen der erfindungsgemäßen Vorrichtung bzw. des erfindungsgemäßen Verfahrens ist möglich.

In einigen Ausführungsbeispielen gemäß der Erfindung können zur Bestimmung einer Geste bzw. einer Handstellung Konzepte verwendet werden, wie sie beispielsweise in der Veröffentlichung "Visual Hand Tracking using Nonparametric Belief Propagation" von E.B. Sudderth u.a. (veröffentlicht in: MIT Laboratory for Information & Decision Systems Technical Report P-2603, May 2004, presented at the 2004, IEEE CVPR Workshop on Generative Model based Vision") beschrieben sind. Alternativ oder zusätzlich können im Rahmen der Gestenerkennung Konzepte eingesetzt werden, wie sie beispielsweise in der Veröffentlichung "Hand Gesture Extraction by Active Shape Models" von N. Liu und B.C. Lovell (veröffentlicht in: Proceedings of the Digital Imaging Computing: Techniques and Applications (DICTA 2005)) beschrieben sind. Ferner können Konzepte eingesetzt werden, wie sie beispielsweise in der Veröffentlichung "Graphical Knowledge Representation for Human Detection" von C. Schnörr u.a. (veröffentlicht in: International Workshop on The Representation and Use of Prior Knowledge in Vision, May 2006) beschrieben sind. Alternativ oder zusätzlich können bei der Gestenerkennung die Konzepte verwendet werden, wie sie in der Veröffentlichung "Learning of Graphical Models and Efficient Inference for Object Class Recognition" von C. Schnörr u.a. (veröffentlicht: 28th Annual Symposium of the German Assication for Pattern Recognition, September 2006) beschrieben sind.

Alternativ oder zusätzlich können bei der Gestenerkennung die Konzepte verwendet werden, wie sie beispielsweise in der Veröffentlichung: "Spine Detection and Labeling Using a Parts-Based Graphical Model" von C. Schörr u.a. (veröffentlicht in: Information Processing in Medical Imaging 2007, Springer, 2007 Pages 122-133) beschrieben sind.

Alternativ oder zusätzlich können zu der Gestenerkennung die Konzepte eingesetzt werden, wie sie in der Veröffentlichung "MAP-Interference for Highly-Connected Graphs with DC-Programming" von C. Schnörr u.a. (veröffentlicht: 30th Annual Symposium of the German Association for Pattern Recognation, June 2008) beschrieben sind.

Bei einigen Ausführungsbeispielen gemäß der Erfindung können zur Gestenerkennung auch die Konzepte eingesetzt werden, die in der Veröffentlichung "Representing Directions for Hough-Transforms" von F. Wenzel u.a. (veröffentlicht in VISAPP 2006; 1st International Conference on Computer Vision Theory and Applications, Proceedings) beschrieben sind.

Bei einigen Ausführungsbeispielen gemäß der Erfindung können zur Gestenerkennung auch die Konzepte, wie sie in der Veröffentlichung "Using Deficits of Convexity to Recognized Hand Gestures from Silhouettes" von Ed Lawson und Z. Duric (veröffentlicht in: VIASPP 2006; 1st International Conference on Computer Vision Theory and Applications, Proceedings) beschrieben sind.

Eine Gestenerkennung kann beispielsweise unter Verwendung einer Hardware oder Software, die als "WinDelayLine" bezeichnet ist, durchgeführt werden. Beispielsweise können bei dem Ausführungsbeispiel gemäß der Erfindung 800 mal pro Sekunde alle Konturelemente erfasst werden. Basierend darauf, kann die entsprechende Weiterverarbeitung erfolgen.

Bei einigen Ausführungsbeispielen gemäß der Erfindung können graphische Modelle verwendet werden. Dabei können Konzepte zur Gestenerkennung eingesetzt werden, wie sie beispielsweise in der Veröffentlichung "MAP-Inference for Highly-Connected Graphs with DC-Programming" von C. Schnorr beschrieben sind. Entsprechende Konzepte können beispielsweise an die Gestenerkennung angepasst werden, wobei eine Erkennung von Gestenelementen unter Verwendung einer Hough-Transformation eingesetzt werden kann. Mit anderen Worten, das Konzept "WinDelayLine" kann zum Einsatz kommen.

Bei einigen Ausführungsbeispielen gemäß der Erfindung können auch die Konzepte zum Einsatz kommen, wie sie beispielsweise in den Veröffentlichungen "Real-Time Object Detetion for "Smart" Vehicles" von D.M. Gavrila und Cassandra, "Audio-Video Sensor Fusion for agression Detection" von W. Zajdel u.a. (veröffentlicht: IEEE International Conference on Advanced Video and Signal based Surveillance (AVSS), London, (UK) 2007) beschrieben sind.

Bei einigen Ausführungsbeispielen kann im Übrigen das Konzept, wie es in der Veröffentlichung "Schürmann-Polynomials - Roots and Offsprings" von U. Miletzki (veröffentlicht in: Proceedings of The Eighth International Workshop on Frontiers in Handwriting Recognition (IWFHR'02)) beschrieben ist, eingesetzt werden. In anderen Worten, eine Schürmann-Theorie zur Zeichenerkennung kann beispielsweise an die Gestenerkennung unter Verwendung einer Hough-Transformation (auch als "WinDelayLine"-Gestenerkennung bezeichnet) angepasst werden.

### Berücksichtigung eines Handmodells

Bei einigen Ausführungsbeispielen gemäß der Erfindung kann ein Hand-Modell verwendet werden. Eine Hand hat beispielsweise fünf Finger (Daumen, Zeigefinger, Mittelfinger, Ringfinger und kleiner Finger). Daher kann beispielsweise ein 3D-Drahtgittermodell der Hand verwendet werden (wie dies beispielsweise von "Adope Maya" eingesetzt wird).

Aus der Robotertechnik ist das kinematische Modell bekannt. Diesbezüglich wird auf das Buch "Einführung in die Robotertechnik" (VCH-Verlag) verwiesen. Darin ist beschrieben, dass die Kinematik in eine inverse Kinematik-Rück-übersetzbar ist. Das Modell ist ein Modell der Eigenkoordinaten (Ellenbogengelenk, Handgelenk, Mittelfingerknochen, Freiheitsgrade der Rotation jedes Fingers und kombinierte Translation bzw. Verschiebung der Hand).

"WinDelayLine" (oder eine andere Vorrichtung zur Durchführung einer Hough-Transformation und zur Identifizierung von Gestenelementen) verfolgt bzw. "trackt" beispielsweise jeden Finger und die Umrisse der Hand einzeln mit 800 Rahmen pro Sekunde (bzw. "Frames" pro Sekunde). Damit wird die Handbewegung kontinuierlich auf einen singulären momentanen Ist-Zustand überführt, in einem Zustandsraum, der aus allen möglichen Handstellungen besteht, wobei es nur einen Teilbereich der physikalisch möglichen Zustandsübergänge gibt. Die Neubewertung erfolgt also durch Auswertung einer Reihe von Bildfolgen. Dabei wird die Hand durch "rote Punkte", die von WinDelayLine geliefert werden, bestimmt. In anderen Worten, die Hand wird durch Punkte bestimmt, die beispielsweise als Extrempunkte von Kreisbögen oder Ellipsenbögen erkannt wurden. Hier kommen dann beispielsweise die Schnörr-Gavrila-, Schürmann-, HMM-, Poggio-, Ferrari-Algorithmen zum Tragen.

Eine abgespeckte Version ist das Apple iphone Modell oder ein Mausrührpad. Anstelle einer berührungsempfindlichen Monitorfläche ("Touchscreen-Fläche") werden die gleichen Bewegungen ausgeführt wie auf der berührungsempfindlichen Monitorfläche ("Touchscreen-Fläche"), nur dass die Bewegung durch eine Videokamera berührungslos aufgezeichnet wird. Interessant deswegen, weil dadurch die Hand steuern kann. Eine langsame Bewegung nach oben kann eine Bezugsgröße linear hochsetzen (Schiebereglerfunktion). Eine Drehbewegung wie an einem Tresor oder an einem Lautstärke-Knopf einer Stereoanlage oder einem Drehrad der UKW-Empfangsstationen kann optisch aufgenommen werden und in eine Drehbewegung eines Schalters wie einer Waschmaschine umgesetzt werden.

Bei einigen Ausführungsbeispielen kann zusätzlich zu der Erkennung von Kreisbögen oder Ellipsenbögen (beispielsweise unter Verwendung des Konzepts "WinDelayLine" eine Histogrammierung verwendet werden.

In einigen Ausführungsbeispielen gemäß der Erfindung können optional Konzepte eingesetzt werden, wie sie beispielsweise in Kapiteln 8 und 9 des Buchs "Handbook of Mathematical Models in Computer Vision" von N. Paragios (Springer, 2005) beschrieben sind. Unter anderem kann für die Gestenerkennung eine Variations-Segmentierung mit Vorzugsformen bzw. Formvorgaben eingesetzt werdn. Ferner ist für die Gestenerkennung auf das Konzept der KurvenAusbreitung "Curve Propagation" einsetzbar, ebenso wie Pegel-Satz-Verfahren ("level set methods") und Gruppierung ("Grouping").

Einige Ausführungsbeispiele sind somit für eine Steuerung per Hand einsetzbar. Beispielsweise können durch das erfindungsgemäße Verfahren per Videokamera die Fingerkuppen (bzw. deren Position) erkannt werden, wobei die Fingerkuppen als Gestenelemente angesehen werden können. Unter Verwendung eines Hough-Transformators, beispielsweise der sogenannt "WinDelayLine" können nicht nur Fingerkuppen, sondern alle lokalen Extrema bestimmt werden. Allerdings ist es ausreichend, beispielsweise zusätzlich zu einigen Fingerkuppen einige andere weitere lokale Extrema zu bestimmen.

Somit kann insgesamt eine Vorrichtung implementiert werden, die sich für eine Gestenerkennung bzw. für eine Steuerung von Geräten eignet.

### Variations-Segmentierung mit Vorzugsformen bzw. Formvorgaben

Im Folgenden wird kurz das Konzept der Variations-Segmentierung mit Vorzugsformen erläutert, wie es bei einigen Ausführungsbeispielen gemäß der Erfindung zum Einsatz kommen kann. Für weitere Details wird auf Kap. 8 des Buchs "Handbook of Mathematical Models in Computer Vision" verwiesen.

Variationsrechnung nach Hamilton ist eine Minimierung des Variationsintegrals. In einer numerischen digitalen Ausführung kann die Variationsrechnung als eine Minimierung der Produktsummen realisiert werden. Konturen können beispielsweise gemäß den oben genannten Veröffentlichungen von C. Schnörr als Form-Vektoren angegeben werden. Basierend auf einer Hough-Transformation, beispielsweise unter Verwendung des Konzepts der "WinDelayLine", ist dies einfach. Jede Kontur ist ein Satz von Extrematupeln mit der Lage x_i, y_i und der Krümmung. Nach einer Kostenfunktion wird beispielsweise jeder Satz in der Datenbank mit den Referenzmustern abgeglichen (bzw. "gematcht").

Dies ist eine Ausgleichsrechnung, die auf ganz verschiedene Weise realisiert werden kann. Unter anderem kommt beispielsweise eine Realisierung mit einem Programm in der Programmiersprache "Fortran" in Frage.

### Kurven-Ausbreitung, Pegelsatz-Verfahren und Gruppierung

Im Folgenden werden kurz die Konzepte der "KurvenAusbreitung", der "Pegel-Satz-Methoden" und der "Gruppierung" erläutert. Details diesbezüglich sind in Kap. 9 des oben genannten Buchs "Handbook of Mathematical Models in Computer Vision" beschrieben. Kurvenausbreitung "Curve Propagation" ist eine Schnur, die sich um Objekte legt, bis sie sich ganz an die Objekte anschmiegt.

WinDelayLine dagegen nimmt alle Extrema und bildet aus dem vollen Tupelsatz Teiltupelsätze und schaut (bzw. prüft), ob in der Datenbank etwas Passendes dazu vorliegt.

### Stochastisches Modell von geometrischen Schlangen

Bei einigen Ausführungsbeispielen kann ein Konzept eingesetzt werden, bei dem stochastische Modelle geometrischer Schlangen zum Einsatz kommen. Dabei kann beispielsweise der beschriebe DNA-Sequenzierungs-Algorithmus laufen gelassen werden, da dieser auch Teiltupelsequenzen und Einfügungen und Auslastungen erkennt.

### Verwendung von affinen Abbildungen der Verschiebung bzw. der "Translation", Drehung und Streckung

Bei einigen Ausführungsbeispielen gemäß der Erfindung kann eine affine symbolische Abbildung der "WinDelayLine"-Tupel bzw. der die erkannten Gestenelemente beschreibenden Parameter verwendet werden.

Beispielsweise kann eine Drehung einfach implementiert werden. So kann beispielsweise der Tupel-String (der verschiedene Gestenelemente beschreibt), zyklisch durchgeschoben gegen den Datenbankstring durchlaufen werden, und es kann ferner geprüft werden, wo eine maximale Übereinstimmung besteht. In einfachen Worten:

"Ich durchlaufe zyklisch durchgeschoben den Tupel-String gegen den Datenbankstring und schaue, wo es am meisten rappelt".

Auch eine Translation kann einfach realisiert werden. So können beispielsweise sämtliche Tupellisten durchlaufen werden. Dort, wo eine Übereinstimmung ("Match") ist, kennt man auch die Lage (z. B. einer Geste).

Im Folgenden wird beschrieben, wie eine Streckung erreicht werden kann.

Dabei wird als Beispiel zunächst ein Kreis betrachtet. Sowohl die vier Lagepositionen (beispielsweise des linken Extrempunktes, des rechten Extrempunktes, des unteren Extrempunktes und des oberen Extrempunktes) verschieben sich, als auch die Krümmungsradien. Allerdings sind Lageänderung und Krümmungsradiusänderung aneinander gekoppelt, so dass es in einigen Ausführungsbeispielen ausreichend ist, einen Skalierungsparameter "dran zu rechnen" bzw. anzuwenden.

Einige Ausführungsbeispiele gemäß der Erfindung verwenden die hier so beschriebene "symbolisch affine Geometrie" zur Identifizierung von Gesten.

Bei den affinen Abbildungen, also bei der Überführung von "gleichen" Objekten durch Translation (Verschiebung), Rotation und Streckung, zeigt sich, dass bei der symbolischen affinen Abbildung die Translation (Verschiebung) leicht realisierbar ist ("kein Thema ist"), und dass die Drehung einfach durch zyklisches Durchlaufen der Tupelliste machbar ist.

Im Folgenden werden Details im Hinblick auf die symbolische affine Streckung beschrieben, die etwas schwieriger ist.

Nach dem Strahlungssatz kann ein kleiner Kreis in einen großen überführt werden, indem eine konzentrische Welle im Ursprung nach außen läuft (= affine Abbildung). Im Folgenden wird erläutert, was die "Gleichheit eines Bogenelements" bedeutet. Zwei Bogenelemente zu gleichem Winkelelement Δ(φ) werden als "gleich" bezeichnet. Die Bogenlängen sind unterschiedlich, aber mit beiden Bogenelementen kann ein Kreis zusammengesetzt werden, der sich nur durch den unterschiedlichen Krümmungsradius zusammensetzt. Damit kann die Kontur jedes Objekts in verschiedenen Größen zusammengesetzt werden, da die Kontur invariant erhalten bleibt, da stetig fortsetzbar.

Mit anderen Worten, wir bezeichnen zwei Bogenelemente als gleich zu gleichem Winkelelement Δ(φ), die Bogenlängen sind unterschiedlich, aber wir können mit beiden Bogenelementen einen Kreis zusammensetzen, der sich nur durch den unterschiedlichen Krümmungsradius zusammensetzt, und damit die Kontur jedes Objekts in verschiedenen Größen, da die Kontur invariant erhalten bleibt, da stetig fortsetzbar.

Im Folgenden wird die symbolische affine Streckung anschaulich beschrieben.

Nehmen wird den Fall eines Sanitärgroßhandels. Für die Verlegung einer Wasserleitung werden Formstücke (T-Stücke 15°-Stücke, Meterware, 90 Grad Winkel, Bogenstücke, bereitgehalten. Damit kann man die Wasserleitung legen (ebenso wie eine Abwasserleitung).

In unserem Fall setzt sich die "Wasserleitung", die Kontur des Objekts, aus n-Formstücken zusammen. Wir beschreiben daher das Objekt durch die Liste der enthaltenen Formstücke.

Im Folgenden wird ein weiteres Beispiel beschrieben.

Nehmen wir als Beispiel nach dem Strahlensatz ein Quadrat. Aus dem Mittelpunkt projizieren wir in den Eckpunkten die Außenflächen auf eine Stoppfläche. Die Geraden bleiben erhalten und auch die 90°-Ecken. Für die Formbauteile ändern sich nur die Längen der vier geraden Teilstücke. Die gleichen 90°-Winkelstücke können verwendet werden.

Im Folgenden wird ein weiteres Beispiel beschrieben. Nehmen wir nach dem Strahlensatz einen Kreis. Aus dem Ursprung projizieren wir den Kreis in Polarkoordinaten nach außen in Kreissegmenten. Die Formstücke haben nun einen unterschiedliche Bogenlänge und unterschiedlichen Krümmungsradius. Wir müssen also n-Formteile jeweils zu einem bestimmten Krümmungsradius i bereithalten.

Im Folgenden wird ein weiteres Beispiel beschrieben. Wie lautet also die symbolische affine Streckung, z. B. für eine Flasche? Wir wenden den Strahlensatz im Mittelpunkt der Flasche an und projizieren die Geraden in den Anfangs- und Endpunkten nach außen (Boden, Deckel, Flaschenhalswände und Flaschenbauch) (Das heißt, wir multiplizieren jedes Formelement mit einem Skalierungsfaktor α. In der Formstücksuche multiplizieren wir von α = 0 bis α = max) und vergleichen mit der Datenbank. Für die gekrümmten Linienelemente nehmen wir die Formstücke mit größerem Krümmungsradius.

Zeichnerisch kann man dies beispielsweise mit einer gemalten Flasche versuchen. Wie zeichnen eine zweite formgleiche Flasche genau um ein Kästchen verbreitert und verlängert außen herum. Nur an einer Stelle ist das Verfahren kniffelig, an den zwei unteren Flaschenhalspunkten. Wir machen die Strahlen durch die Knickpunkte, um die Strecken zu erhalten, müssen wir von dem neuen Flaschendeckel senkrecht zu dem Strahlensektor durchstoßen.

Einige Ausführungsbeispiele gemäß der Erfindung können somit eine symbolisch affine Abbildung zur Identifizierung einer Geste verwenden. Dabei werden die Gestenelemente in verschiedener Weise verschoben und/oder gedreht und/oder skaliert. Die Verschiebung, Drehung und Skalierung kann beispielsweise vollzogen werden, indem entsprechende Operatoren auf eine Liste von Gestenelementen angewendet werden, um eine modifizierte Liste von Gestenelementen (die durch Parameter beschrieben werden) zu erhalten. Verschiedene modifizierte Listen von Gestenelementen, die durch Parameter beschrieben sind, werden kann beispielsweise mit in einer Datenbank gespeicherten Vergleichslisten verglichen.

### Bewegungsgesten

Bei einigen Ausführungsbeispielen können nicht nur statische Gesten, sondern Bewegungsgesten berücksichtigt werden. Eine Geste kann beispielsweise dann erkannt werden, wenn zwischen zwei aufeinanderfolgenden Bildern, (oder zwischen mehreren aufeinanderfolgenden Bildern) eine bestimmte Veränderung der Position der Gestenelemente eingetreten ist.

Beispielsweise kann bei einigen Ausführungsbeispielen eine Steuerung (zum Beispiel eines Gerätes) mit einer Fingerbewegung nach oben, nach unten, nach links oder nach rechts erfolgen. Dabei kann beispielsweise eine Geschwindigkeit der Bewegung oder eine Beschleunigung (zweite Ableitung des Weges nach der Zeit) berücksichtigt werden. Die Geschwindigkeit kann beispielsweise durch mehrere Komponenten v_i, v_y beschrieben werden. Die Beschleunigung kann beispielsweise durch zwei Komponenten *ẍₓ* und *ẍ_{y}* beschrieben werden. Ferner kann eine Vor/Zurück-Größenänderung berücksichtigt werden.

In der gezeigten Weise können beispielsweise Küchenherde und Waschmaschinen bedient werden.

Bei einigen Ausführungsbeispielen kann es in einer niedrigpreisigen Ausführung ausreichend sein, zwei senkrecht zueinander stehende Zeilenkameras zu verwenden.

Zusammenfassend ist festzuhalten, dass insgesamt bei einigen Ausführungsbeispielen eine Steuerung mit Fingerbewegung nach oben, unten, links, rechts, v_x, v_y und *ẍₓ* und *ẍ_{y}* und Vor/Zurück-Größenänderung erfolgt.

### Ergänzungen

Im Folgenden werden weitere Ergänzungen beschrieben, die bei einigen Ausführungsbeispielen eingesetzt werden können.

So können bei einigen Ausführungsbeispielen optional die folgenden zusätzlichen Merkmale verwendet werden:
a) 3D-Kinematik eine gekoppelten Gelenkmodells-Schwerpunkt und Trägheitsellipse der Drehmomente; und/oder
b) Vollständige Rückrekonstruktion mit einer orthogonalen Radon-Transformation.

Bei einigen Ausführungsbeispielen gemäß der Erfindung kann also eine 3D-Kinematik Modell eines gekoppelten Gelenkmodells eingesetzt werden.

Eine Hand besteht aus vielen Gelenken und Freiheitsgraden. Eine Einführung in die Kinematik und inverse Kinematik von gekoppelten Gelenksystemen bietet das Buch: "Robotertechnik - eine Einführung" von Don Mac Cloy, VCH-Verlag.

Eine 3D-Bewegung eines gekoppelten Gelenkmodells wird in die translatorische Bewegung des Schwerpunkts (Schwerpunkttrajektorie) und die Eigenrotation des gekoppelten Gelenkmodells und der Bewegung der Einzelglieder beschrieben. Die Eigenrotation wird nach Hauptachsentransformation durch die Eigendrehmomente der Vorzugsachsen der Trägheitsellipse (Eigenmatrix der Drehmomente) bestimmt.

In der aufgenommenen 2D-Kamera-Projektion wird das Bild mit zwei orthogonalen Radon-Transformationen längs zwei orthogonalen Achsen zerlegt. Dies entspricht in dem binarisierten Bild einer 2D-Histogrammierung längs der x-Achse und der y-Achse. Mit einem einfachen "Schiffe-Versenken"-Algorithmus kann numerisch gezeigt werden, dass aus dem x-Histogramm und y-Histogramm das Originalbild rekonstruierbar ist. Der x-Schwerpunkt des Histogramms wird berechnet und der y-Schwerpunkt des Histogramms. Somit ist der (x, y)-Schwerpunkt im Bild eines Objekts bekannt und die Schwerpunkts-Bewegungstrajektorie Bild für Bild aufzeichenbar. Das Drehmoment als Maß für die Exzentrizität (Unwucht) wird in x- und y-Richtung gestimmt. Damit können unregelmäßig geformte Körper nach diesem Maß separiert werden (Epsilon-Umgebungsmaß).

Für weitere Details wird auf die Präsentation "Model-Based Hand Tracking with Texture, Shading and Self-Occlusions" vom Matin de La Gorce u.a. sowie auf den Artikel "Model-Based Hand Tracking with Texture, Shading and Self-Occlusions" von Martin de La Gorce u.a. verwiesen. Die genannten beiden Veröffentlichungen wurden auf der CVPR 2008 (IEEE Computer Science Conference on Computer Vision and Pattern Recognition) vorgestellt.

Im folgenden werden bevorzugte Ausführungsbeispiele beschrieben.

Ein Ausführungsbeispiel gemäß der Erfindung schafft eine Vorrichtung 100; 200 zur Erkennung von Gesten in einem Bild 110; 210, mit einem Hough-Transformator 130; 250, der ausgelegt ist, um Bögen B1-B9 in dem Bild oder in einer vorverarbeiteten Version des Bildes 232, 242 als identifizierte Gestenelemente zu identifizieren, um eine Information 132; 252 über die identifizierten Gestenelemente zu erhalten, einem Gesten-Beschreibungs-Ersteller 140; 270, der ausgelegt ist, um eine Gestenbeschreibung 142; 272 unter Verwendung der Information über die identifizierten Gestenelemente zu erhalten, und einem Gesten-Klassifizierer 150; 280, der ausgelegt ist, um die Gesten-Beschreibung mit einer Mehrzahl von Vergleichs-Gesten-Beschreibungen zu vergleichen, denen Gesten-Codes zugeordnet sind, um als Ergebnis des Vergleichs einen Gesten-Code 120; 220 einer erkannten Geste zu liefern. Der Hough-Transformator 130; 250 ist ausgelegt, um eine Mehrzahl von in verschiedenen Richtungen durch das Bild verlaufenden geraden Strecken als identifizierte Gesten-Elemente zu identifizieren, und um eine Information über eine Lage, eine Länge oder eine Richtung einer identifizierten Strecke bereitzustellen. Der Gesten-Beschreibungs-Ersteller 140; 270 ist ausgelegt, um die von dem Hough-Transformator bereitgestellte Information 132; 252 über die identifizierten geraden Strecken für die Erstellung der Gesten-Beschreibung zu verwenden. Der Gesten-Beschreibung-Ersteller 140; 270 ist ausgelegt, um als die Gesten-Beschreibung 142; 272 eine Beschreibung einer Geste zu erhalten, die die Geste als eine geordnete Auflistung von Parametern von identifizierten Gesten-Elementen (B1-B9, L1-L10) beschreibt, wobei die identifizierten Gestenelemente Bögen und gerade Strecken umfassen.

Bei einem bevorzugten Ausführungsbeispiel weist die Vorrichtung 100;200 einen Flächenparameter-Bestimmer 260; 600 auf, der ausgelegt ist, um einen Flächenparameter 262 einer Gestenfläche zu bestimmen. Der Gesten-Beschreibungs-Ersteller 270 ist dabei ausgelegt, um die Gesten-Beschreibung 272 unter Verwendung des Flächenparameters zu erhalten.

Bei einem bevorzugten Ausführungsbeispiel der Vorrichtung 100;200 beschreibt der Flächenparameter (262) eine Eigenschaft der Fläche losgelöst von einer Flächenkontur beschreibt.

Bei einem bevorzugten Ausführungsbeispiel der Vorrichtung 100;200 ist der Flächenparameter-Bestimmer (260) ausgelegt, um als den Flächenparameter eine Information über einen Flächen-Schwerpunkt (S) der Gesten-Fläche, oder eine Information über eine Ausdehnung (L1,L2) der Gesten-Fläche, oder eine Information über ein Moment (M) der Gesten-Fläche oder eine Information über eine Exzentrizität (E) der Gesten-Fläche zu erhalten.

Bei einem bevorzugten Ausführungsbeispiel der Vorrichtung 100;200 ist der Gesten-Beschreibungs-Ersteller 270 ausgelegt, um als die Gesten-Beschreibung 272 einen Satz von Parametern bereitzustellen, die Umriss-Abschnitte der Gesten-Fläche beschreiben, und um die Gesten-Beschreibung unter Verwendung des Flächenparameters zu normieren.

Bei einem bevorzugten Ausführungsbeispiel der Vorrichtung 100;200 ist der Flächenparameter-Bestimmer (260) ausgelegt, um als den Flächenparameter 262 eine Information über eine Lage eines Flächenschwerpunktes der Gesten-Fläche zu erhalten, und der Gesten-Beschreibungs-Ersteller 270 ausgelegt, um die Gesten-Beschreibung 272 so bereitzustellen, dass Lage-Parameter der Umriss-Abschnitte der Gestenfläche auf die Lage des Flächen-Schwerpunktes (S) der Gesten-Fläche bezogen sind.

Bei einem bevorzugten Ausführungsbeispiel der Vorrichtung 100;200 ist der Flächenparameter-Bestimmer 260 ausgelegt, um als den Flächenparameter (262) eine Information über eine Abmessung (L1,L2) der Gesten-Fläche zu erhalten, und der Gesten-Beschreibungs-Ersteller (270) ausgelegt, um die Gesten-Beschreibung so bereitzustellen, dass Lage-Parameter oder Abmessungs-Parameter der Umriss-Abschnitte größenmäßig basierend auf der Information über die Abmessung der Gesten-Fläche normiert sind.

Bei einem bevorzugten Ausführungsbeispiel der Vorrichtung 100;200 ist der Gesten-Beschreibungs-Ersteller 140; 270 ausgelegt ist, um in die Gesten-Beschreibung 142; 272 für identifizierte Kreisbögen oder Ellipsenbögen B1-B9 eine durch den Hough-Transformator 130; 250 gelieferte Information über eine Position eines Extrempunktes P1-P9 des identifizierten Kreisbogens oder des identifizierten Ellipsenbogens aufzunehmen.

Bei einem bevorzugten Ausführungsbeispiel der Vorrichtung 100;200 ist der Hough-Transformator 130; 250 ausgelegt, um nur solche Kreisbögen oder Ellipsenbögen B1-B9 zu identifizieren, deren Krümmungsradius betragsmäßig kleiner als ein vorgegebener maximal zulässiger Krümmungsradius ist.

Bei einem bevorzugten Ausführungsbeispiel der Vorrichtung 100;200 ist der Gesten-Beschreibungs-Ersteller 140; 270 ausgelegt, um eine Beschreibung der Geste durch Aneinanderfügen von ausgewählten benachbarten identifizierten Gesten-Elementen B1-B9, L1-L10 zu erstellen, und um die für die Beschreibung der Geste verwendeten ausgewählten Gesten-Elemente aus einer Gesamtheit von identifizierten Gesten-Elementen auszuwählen, so dass die ausgewählten Gesten-Elemente einen durchgehenden Linienverlauf von einem Anfangspunkt zu einem Endpunkt beschreiben.

Bei einem bevorzugten Ausführungsbeispiel der Vorrichtung 100;200 ist der Gesten-Beschreibungs-Ersteller 140; 270 ausgelegt, um basierend auf den identifizierten Gesten-Elementen B1-N9, L1-L10 einen Merkmals-Vektor zu erzeugen, der aufeinanderfolgende Abschnitte einer Umrisslinie einer Gesten-Fläche beschreibt.

Bei einem bevorzugten Ausführungsbeispiel der Vorrichtung 100;200 weist der Gesten-Klassifizierer 150; 280; 1300; 1400; 1600 einen Datenbank-Vergleicher 1630 auf, der ausgelegt ist, um einen Merkmals-Vektor, der die Informationen der Gesten-Beschreibung 142; 272 umfasst, mit einer Mehrzahl von Vergleichs-Merkmals-Vektoren, die Vergleichs-Gesten zugeordnet sind, zu vergleichen um ein Maß für Unterschiede zwischen dem Merkmals-Vektor und den Vergleichs-Merkmal-Vektoren zu erhalten, und um basierend auf dem Maß für die Unterschiede einen zu dem Merkmals-Vektor gehörenden Gesten-Code zu bestimmen.

Bei einem bevorzugten Ausführungsbeispiel der Vorrichtung 100;200 umfasst die Vorrichtung einen Kantenerkenner 340, der ausgelegt ist, um Kanten in dem Bild zu erkennen, und um basierend auf dem Bild 310 ein Kantenbild als die vorverarbeitete Version 320 des Bildes zu erzeugen.

Bei einem bevorzugten Ausführungsbeispiel der Vorrichtung 100;200 ist die Vorrichtung ausgelegt, um Bildpunkte, deren Farbwert in einem vorgegebenen Bereich liegt, als zu einer Gesten-Fläche gehörende Bildpunkte zu identifizieren.

Bei einem bevorzugten Ausführungsbeispiel der Vorrichtung 100;200 umfasst die Vorrichtung einen Bildausschnitt-Auswähler 350 aufweist, der ausgelegt ist, um in dem Bild 310 einen Bildausschnitt zu identifizieren, der eine zusammenhängende Gesten-Fläche umfasst. Der Hough-Transformator 130; 250 ist dabei ausgelegt, um eine vorverarbeitete Version des Bildes zu verarbeiten, die dem Bildausschnitt entspricht.

Bei einem bevorzugten Ausführungsbeispiel der Vorrichtung 100;200 ist der Gesten-Beschreibungs-Ersteller 140; 270 ausgelegt, um als die Gesten-Beschreibung 142; 272 einen geordneten Satz von Parametern bereitzustellen, die Umriss-Abschnitte einer Gesten-Fläche beschreiben. Der Gesten-Klassifizierer 150; 280 ist dabei ausgelegt, um den geordneten Satz 2210 von Parametern mit einer Mehrzahl von Vergleichs-Parametersätzen zu vergleichen, die Vergleichs-Gesten zugeordnet sind, um eine Information über Unterschiede zwischen dem geordneten Satz von Parametern und den Vergleichs-Parametersätzen zu erhalten. Der Gesten-Klassifizierer ist ausgelegt, um eine oder mehrere skalierte Versionen 2220, 2230 des geordneten Satzes von Parametern mit der Mehrzahl von Vergleichs-Parametersätzen zu vergleichen, um eine Information über Unterschiede zwischen der zumindest einen skalierten Version des geordneten Satzes von Parametern und den Vergleichs-Parametersätzen zu erhalten, und um basierend auf den Informationen über die Unterschiede einen zu dem geordneten Satz von Parametern gehörigen oder einen zu einer skalierten Version des geordneten Satzes von Parametern gehörigen Gesten-Code zu ermitteln.

Bei einem bevorzugten Ausführungsbeispiel der Vorrichtung 100;200 ist der Gesten-Klassifizierer 150; 280 ausgelegt, um die eine oder mehreren skalierten Versionen 2220, 2230 des geordneten Satzes von Parametern so zu erhalten, dass die eine oder mehreren skalierten Versionen einen Umriss einer im Vergleich zu einer tatsächlich in dem Bild enthaltenen Gesten-Fläche vergrößerten oder verkleinerten skalierten Gesten-Fläche beschreiben.

Bei einem bevorzugten Ausführungsbeispiel der Vorrichtung 100;200 ist der Gesten-Klassifizierer 150; 280 ausgelegt, um eine von dem Hough-Transformator 130; 250 gelieferte Krümmungsradius-Information, die Teil des geordneten Satzes von Parametern ist, zu skalieren, um die eine oder mehreren skalierten Versionen 2220, 2230 des geordneten Satzes zu erhalten.

Bei einem bevorzugten Ausführungsbeispiel der Vorrichtung 100;200 ist der Gesten-Klassifizierer 150; 280 ausgelegt, um eine Längeninformation von geraden Linien, die Teil des geordneten Satzes von Parametern sind, zu skalieren, um die eine oder mehreren skalierten Versionen 2220, 2230 des geordneten Satzes von Parametern zu erhalten.

Bei einem bevorzugten Ausführungsbeispiel der Vorrichtung 100;200 ist der Gesten-Beschreibungs-Ersteller 140; 270 ausgelegt, um als die Gesten-Beschreibung 142; 272 einen Satz von Parametern bereitzustellen, die Umriss-Abschnitte einer Gesten-Fläche beschreiben. Dabei ist der Gesten-Klassifizierer 150; 280 ausgelegt, um anhand eines physikalischen Modells eines Körperteils, das die Geste bildet, eine Wahrscheinlichkeit zu bestimmen, mit der die durch den Satz von Parametern beschriebene Stellung von Einzelelementen des Körperteils angenommen wird, und um die Wahrscheinlichkeit bei der Bestimmung des Gesten-Codes zu berücksichtigen.

Bei einem bevorzugten Ausführungsbeispiel der Vorrichtung 100;200 ist der Gesten-Beschreibungs-Ersteller 140; 270 ausgelegt, um eine Information über eine Rotation der Gestenfläche zu erhalten. Der Gesten-Klassifizierer 150; 280 ist dabei ausgelegt, um die Information über die Rotation der Gestenfläche bei der Ermittlung des Gestencodes 120; 220 zu berücksichtigen.

Bei einem bevorzugten Ausführungsbeispiel der Vorrichtung 100;200 ist der Gesten-Klassifizierer 150; 280 ausgelegt, um Gesten in Abhängigkeit von der Information über die Rotation der Gestenfläche zu unterscheiden.

Bei einem bevorzugten Ausführungsbeispiel der Vorrichtung 100;200 ist der Gesten-Klassifizierer 150; 280 ausgelegt, um die Information über die Rotation der Gestenfläche basierend auf einer zeitlichen Entwicklung von Lageparametern der identifizierten Gestenelemente zu ermitteln.

Bei einem bevorzugten Ausführungsbeispiel der Vorrichtung 100;200 ist der Gesten-Klassifizierer 150; 280 ausgelegt, um die Information über die Rotation der Gestenfläche unter Verwendung von Flächenparametern, die Momente (mₓ, m_{y}) der Gestenfläche im Hinblick auf verschiedene Richtungen beschrieben, zu erhalten.

Ein Ausführungsbeispiel schafft eine Vorrichtung 100; 200 zur Erkennung von Gesten in einem Bild 110; 210, mit einem Hough-Transformator 130; 250, der ausgelegt ist, um Bögen B1-B9 in dem Bild oder in einer vorverarbeiteten Version des Bildes 232, 242 als identifizierte Gestenelemente zu identifizieren, um eine Information 132; 252 über die identifizierten Gestenelemente zu erhalten, einem Gesten-Beschreibungs-Ersteller 140; 270, der ausgelegt ist, um eine Gestenbeschreibung 142; 272 unter Verwendung der Information über die identifizierten Gestenelemente zu erhalten, und einem Gesten-Klassifizierer 150; 280, der ausgelegt ist, um die Gesten-Beschreibung mit einer Mehrzahl von Vergleichs-Gesten-Beschreibungen zu vergleichen, denen Gesten-Codes zugeordnet sind, um als Ergebnis des Vergleichs einen Gesten-Code 120; 220 einer erkannten Geste zu liefern. Der Gesten-Beschreibungs-Ersteller 140; 270 ist ausgelegt, um als die Gesten-Beschreibung 142; 272 einen geordneten Satz von Parametern bereitzustellen, die Umriss-Abschnitte einer Gesten-Fläche beschreiben. Der Gesten-Klassifizierer 150; 280 ist ausgelegt, um den geordneten Satz 2110 von Parametern mit einer Mehrzahl von Vergleichs-Parametersätzen zu vergleichen, die Vergleichs-Gesten zugeordnet sind, um eine Information über Unterschiede zwischen dem geordneten Satz von Parametern und den Vergleichs-Parametersätzen zu erhalten. Der Gesten-Klassifizierer ist ausgelegt ist, um eine oder mehrere zyklisch durchrotierte Versionen 2120, 2130 des geordneten Satzes von Parametern mit der Mehrzahl von Vergleichs-Parametersätzen zu vergleichen, um eine Information über Unterschiede zwischen einer oder mehreren zyklisch durchrotierten Versionen des geordneten Satzes von Parametern und den Vergleichs-Parametersätzen zu erhalten. Der Gesten-Klassifizierer ist ausgelegt, um basierend auf den Informationen über die Unterschiede einen zu dem geordneten Satz von Parametern gehörigen oder einen zu einer durchrotierten Version des geordneten Satzes von Parametern gehörigen Gesten-Code 120; 220 zu ermitteln.

Ein Ausführungsbeispiel schafft eine Vorrichtung 100; 200 zur Erkennung von Gesten in einem Bild 110; 210, mit einem Hough-Transformator 130; 250, der ausgelegt ist, um Bögen B1-B9 in dem Bild oder in einer vorverarbeiteten Version des Bildes 232, 242 als identifizierte Gestenelemente zu identifizieren, um eine Information 132; 252 über die identifizierten Gestenelemente zu erhalten, einem Gesten-Beschreibungs-Ersteller 140; 270, der ausgelegt ist, um eine Gestenbeschreibung 142; 272 unter Verwendung der Information über die identifizierten Gestenelemente zu erhalten, und einem Gesten-Klassifizierer 150; 280, der ausgelegt ist, um die Gesten-Beschreibung mit einer Mehrzahl von Vergleichs-Gesten-Beschreibungen zu vergleichen, denen Gesten-Codes zugeordnet sind, um als Ergebnis des Vergleichs einen Gesten-Code 120; 220 einer erkannten Geste zu liefern. Dabei ist der Gesten-Beschreibungs-Ersteller (140; 270) ausgelegt, um als die Gesten-Beschreibung (142; 272) einen geordneten Satz von Parametern bereitzustellen, die Umriss-Abschnitte einer Gesten-Fläche beschreiben. Der Gesten-Klassifizierer (150; 280) ist ausgelegt, um den geordneten Satz (2210) von Parametern mit einer Mehrzahl von Vergleichs-Parametersätzen zu vergleichen, die Vergleichs-Gesten zugeordnet sind, um eine Information über Unterschiede zwischen dem geordneten Satz von Parametern und den Vergleichs-Parametersätzen zu erhalten, und um eine oder mehrere skalierte Versionen 2220, 2230 des geordneten Satzes von Parametern mit der Mehrzahl von Vergleichs-Parametersätzen zu vergleichen, um eine Information über Unterschiede zwischen der zumindest einen skalierten Version des geordneten Satzes von Parametern und den Vergleichs-Parametersätzen zu erhalten. Der der Gesten-Klassifizierer ist zudem ausgelegt, um basierend auf den Informationen über die Unterschiede einen zu dem geordneten Satz von Parametern gehörigen oder einen zu einer skalierten Version des geordneten Satzes von Parametern gehörigen Gesten-Code zu ermitteln.

Ein Ausführungsbeispiel schafft eine Vorrichtung 100; 200 zur Erkennung von Gesten in einem Bild 110; 210, mit einem Hough-Transformator 130; 250, der ausgelegt ist, um Bögen B1-B9 in dem Bild oder in einer vorverarbeiteten Version des Bildes 232, 242 als identifizierte Gestenelemente zu identifizieren, um eine Information 132; 252 über die identifizierten Gestenelemente zu erhalten, einem Gesten-Beschreibungs-Ersteller 140; 270, der ausgelegt ist, um eine Gestenbeschreibung 142; 272 unter Verwendung der Information über die identifizierten Gestenelemente zu erhalten, und einem Gesten-Klassifizierer 150; 280, der ausgelegt ist, um die Gesten-Beschreibung mit einer Mehrzahl von Vergleichs-Gesten-Beschreibungen zu vergleichen, denen Gesten-Codes zugeordnet sind, um als Ergebnis des Vergleichs einen Gesten-Code 120; 220 einer erkannten Geste zu liefern. Der Gesten-Beschreibungs-Ersteller 140; 270 ist ausgelegt ist, um als die Gesten-Beschreibung eine Satz von Parametern bereitzustellen, die Umriss-Abschnitte einer Gesten-Fläche beschreiben. Der Gesten-Klassifizierer ist ausgelegt, um zu erkennen, ob der Satz von Parameter-Werten eine vorgegebene physikalische Lage-Bedingung verletzt, und um eine Bereitstellung des Gesten-Codes zu unterdrücken oder einen Fehler zu signalisieren, wenn der Satz von Parameter-Werten die vorgegebene Lage-Bedingung verletzt.

Ein Ausführungsbeispiel schafft eine Vorrichtung 100; 200 zur Erkennung von Gesten in einem Bild (110; 210), mit einem Hough-Transformator 130; 250, der ausgelegt ist, um Bögen B1-B9 in dem Bild oder in einer vorverarbeiteten Version des Bildes 232, 242 als identifizierte Gestenelemente zu identifizieren, um eine Information 132; 252 über die identifizierten Gestenelemente zu erhalten, einem Gesten-Beschreibungs-Ersteller 140; 270, der ausgelegt ist, um eine Gestenbeschreibung 142; 272 unter Verwendung der Information über die identifizierten Gestenelemente zu erhalten, und einem Gesten-Klassifizierer 150; 280, der ausgelegt ist, um die Gesten-Beschreibung mit einer Mehrzahl von Vergleichs-Gesten-Beschreibungen zu vergleichen, denen Gesten-Codes zugeordnet sind, um als Ergebnis des Vergleichs einen Gesten-Code 120; 220 einer erkannten Geste zu liefern. Der Gesten-Beschreibungs-Ersteller 140; 270 ist ausgelegt, um als die Gesten-Beschreibung 142; 272 einen Satz von Parametern bereitzustellen, die Umriss-Abschnitte einer Gesten-Fläche beschreiben. Der Gesten-Klassifizierer ist ausgelegt, um einen aktuellen Gesten-Code, der einen aktuellen Gesten-Zustand beschreibt, in Abhängigkeit von einem basierend auf einem früheren Bild bestimmten früheren Gesten-Code, der einen vorherigen Gesten-Zustand beschreibt, zu bestimmen.

## Patentansprüche

1. Vorrichtung (100; 200) zur Erkennung von Gesten in einem Bild (110; 210), mit folgenden Merkmalen:
einem Hough-Transformator (130; 250), der ausgelegt ist, um Bögen (B1-B9) in dem Bild oder in einer vorverarbeiteten Version des Bildes (232, 242) als identifizierte Gestenelemente zu identifizieren, um eine Information (132; 252) über die identifizierten Gestenelemente zu erhalten;
einem Gesten-Beschreibungs-Ersteller (140; 270), der ausgelegt ist, um eine Gestenbeschreibung (142; 272) unter Verwendung der Information über die identifizierten Gestenelemente zu erhalten; und
einem Gesten-Klassifizierer (150; 280), der ausgelegt ist, um die Gesten-Beschreibung mit einer Mehrzahl von Vergleichs-Gesten-Beschreibungen zu vergleichen, denen Gesten-Codes zugeordnet sind, um als Ergebnis des Vergleichs einen Gesten-Code (120; 220) einer erkannten Geste zu liefern;
wobei der Hough-Transformator (130; 250) ausgelegt ist, um eine Mehrzahl von in verschiedenen Richtungen durch das Bild verlaufenden geraden Strecken als identifizierte Gesten-Elemente zu identifizieren;
wobei der Hough-Transformator (130; 250) ausgelegt ist, um eine Information über eine Lage, eine Länge oder eine Richtung einer identifizierten Strecke bereitzustellen, und
wobei der Gesten-Beschreibungs-Ersteller (140; 270) ausgelegt ist, um die von dem Hough-Transformator bereitgestellte Information (132; 252) über die identifizierten geraden Strecken für die Erstellung der Gesten-Beschreibung zu verwenden;
wobei der Gesten-Beschreibung-Ersteller (140; 270) ausgelegt ist, um als die Gesten-Beschreibung (142; 272) eine Beschreibung einer Geste zu erhalten, die die Geste als eine geordnete Auflistung von Parametern von identifizierten Gesten-Elementen (B1-B9, L1-L10) beschreibt, wobei die identifizierten Gestenelemente Bögen und gerade Strecken umfassen.

2. Vorrichtung gemäß Anspruch 1, wobei der Gesten-Beschreibungs-Ersteller (140; 270) ausgelegt ist, um die Gesten-Beschreibung (142; 272) so zu ordnen,
dass die geordneten identifizierten Gesten-Elemente entsprechend ihrer Reihenfolge entlang einer durchgehenden Umriss-Linie einer Gesten-Fläche geordnet sind, oder
dass die geordneten identifizierten Gesten-Elemente eine durchgehende Umriss-Linie der Gesten-Fläche beschreiben.

3. Vorrichtung gemäß einem der Ansprüche 1 bis 2, wobei der Hough-Transformator (130;250) ausgelegt ist, um eine Information (132; 252) über eine Lage, eine Orientierung, eine Bogenlänge, einen Krümmungsradius oder einen Krümmungswinkel der identifizierten Bögen bereitzustellen; und
wobei der Gesten-Beschreibungs-Ersteller (140; 270) ausgelegt ist, um die von dem Hough-Transformator bereitgestellte Information über die Lage, die Orientierung, die Bogenlänge, den Krümmungsradius oder den Krümmungswinkel der identifizierten Bögen für die Erstellung der Gesten-Beschreibung (142; 272) zu verwenden.

4. Vorrichtung gemäß einem der Ansprüche 1 bis 3, wobei der Gesten-Beschreibungs-Ersteller (140; 270) ausgelegt ist, um die Gesten-Beschreibung (142; 272) so zu erstellen, dass die Gesten-Beschreibung eine Beschreibung einer relativen Lage von zu einer Umrisslinie einer Gesten-Fläche gehörigen Kreisbögen oder Ellipsenbögen (B1-B9) umfasst.

5. Vorrichtung gemäß einem der Ansprüche 1 bis 4, wobei der Gesten-Beschreibungs-Ersteller 140; 270) ausgelegt ist, um in die Gesten-Beschreibung (142; 272) für identifizierte Kreisbögen oder Ellipsenbögen (B1-B9) eine durch den Hough-Transformator gelieferte Information über eine Orientierung des jeweiligen Kreisbogens oder Ellipsenbogens aufzunehmen.

6. Vorrichtung gemäß einem der Ansprüche 1 bis 5, wobei der Gesten-Beschreibungs-Ersteller (140; 270) ausgelegt ist, um als die Gesten-Beschreibung (142; 272) einen geordneten Satz von Parametern bereitzustellen, die Umriss-Abschnitte einer Gesten-Fläche beschreiben, und
wobei der Gesten-Klassifizierer (150; 280) ausgelegt ist, um den geordneten Satz (2110) von Parametern mit einer Mehrzahl von Vergleichs-Parametersätzen zu vergleichen, die Vergleichs-Gesten zugeordnet sind, um eine Information über Unterschiede zwischen dem geordneten Satz von Parametern und den Vergleichs-Parametersätzen zu erhalten, und
wobei der Gesten-Klassifizierer ausgelegt ist, um eine oder mehrere zyklisch durchrotierte Versionen (2120, 2130) des geordneten Satzes von Parametern mit der Mehrzahl von Vergleichs-Parametersätzen zu vergleichen, um eine Information über Unterschiede zwischen einer oder mehreren zyklisch durchrotierten Versionen des geordneten Satzes von Parametern und den Vergleichs-Parametersätzen zu erhalten, und
wobei der Gesten-Klassifizierer ausgelegt ist, um basierend auf den Informationen über die Unterschiede einen zu dem geordneten Satz von Parametern gehörigen oder einen zu einer durchrotierten Version des geordneten Satzes von Parametern gehörigen Gesten-Code (120; 220) zu ermitteln.

7. Vorrichtung gemäß einem der Ansprüche 1 bis 6, wobei der Gesten-Beschreibungs-Ersteller (140; 270) ausgelegt ist, um als die Gesten-Beschreibung (142; 272) einen geordneten Satz von Parametern bereitzustellen, die Umriss-Abschnitte einer Gesten-Fläche beschreiben, und
wobei der Gesten-Klassifizierer (150; 280) ausgelegt ist, um den geordneten Satz (2210) von Parametern mit einer Mehrzahl von Vergleichs-Parametersätzen zu vergleichen, die Vergleichs-Gesten zugeordnet sind, um eine Information über Unterschiede zwischen dem geordneten Satz von Parametern und den Vergleichs-Parametersätzen zu erhalten, und
wobei der Gesten-Klassifizierer ausgelegt ist, um eine oder mehrere skalierte Versionen (2220, 2230) des geordneten Satzes von Parametern mit der Mehrzahl von Vergleichs-Parametersätzen zu vergleichen, um eine Information über Unterschiede zwischen der zumindest einen skalierten Version des geordneten Satzes von Parametern und den Vergleichs-Parametersätzen zu erhalten, und
wobei der Gesten-Klassifizierer ausgelegt ist, um basierend auf den Informationen über die Unterschiede einen zu dem geordneten Satz von Parametern gehörigen oder einen zu einer skalierten Version des geordneten Satzes von Parametern gehörigen Gesten-Code zu ermitteln.

8. Vorrichtung gemäß einem der Ansprüche 1 bis 7, wobei der Gesten-Beschreibungs-Ersteller (140; 270) ausgelegt ist, um als die Gesten-Beschreibung eine Satz von Parametern bereitzustellen, die Umriss-Abschnitte einer Gesten-Fläche beschreiben, und
wobei der Gesten-Klassifizierer ausgelegt ist, um zu erkennen, ob der Satz von Parameter-Werten eine vorgegebene physikalische Lage-Bedingung verletzt, und
um eine Bereitstellung des Gesten-Codes zu unterdrücken oder einen Fehler zu signalisieren, wenn der Satz von Parameter-Werten die vorgegebene Lage-Bedingung verletzt.

9. Vorrichtung gemäß einem der Ansprüche 1 bis 8, wobei der Gesten-Beschreibungs-Ersteller (140; 270) ausgelegt ist, um als die Gesten-Beschreibung (142; 272) einen Satz von Parametern bereitzustellen, die Umriss-Abschnitte einer Gesten-Fläche beschreiben und
wobei der Gesten-Klassifizierer ausgelegt ist, um einen aktuellen Gesten-Code, der einen aktuellen Gesten-Zustand beschreibt, in Abhängigkeit von einem basierend auf einem früheren Bild bestimmten früheren Gesten-Code, der einen vorherigen Gesten-Zustand beschreibt, zu bestimmen.

10. Vorrichtung gemäß Anspruch 9, wobei der Gesten-Klassifizierer (150; 280) ausgelegt ist, um bei der Bestimmung des aktuellen Gesten-Codes eine Zustandsübergangs-Zulässigkeitsinformation auszuwerten, die beschreibt, welche aktuellen Gesten-Zustände ausgehend von einem vorherigen Gesten-Zustand angenommen werden können,
wobei der Gesten-Klassifizierer (150; 280) ausgelegt ist, um Übergänge von einem vorherigen Gesten-Zustand in einen aktuellen Gesten-Zustand zu unterdrücken, die durch die Zustandsübergangs-Zulässigkeitsinformationen als unzulässig beschrieben sind.

11. Vorrichtung (100; 200) gemäß einem der Ansprüche 1 bis 10, wobei die Vorrichtung ausgelegt ist, um eine Hand-Geste zu erkennen,
wobei der Gesten-Beschreibungs-Ersteller ausgelegt ist, um die Gesten-Beschreibung so zu erstellen, dass die Gesten-Beschreibung eine Beschreibung von Bögen unterschiedlicher Orientierungen umfasst, die Fingerspitzen und Fingerzwischenräume beschreiben.

12. Verfahren (2500) zur Erkennung von Gesten in einem Bild, mit folgenden Schritten:
Durchführen (2510) zumindest einer Hough-Transformation, um Bögen in dem Bild oder in einer vorverarbeiteten Version des Bildes als identifizierte Gestenelemente zu identifizieren, um eine Information über die identifizierten Gestenelemente zu erhalten,
und um eine Mehrzahl von in verschiedenen Richtungen durch das Bild verlaufenden geraden Strecken als identifizierte Gesten-Elemente zu identifizieren, um eine Information über eine Lage, eine Länge oder eine Richtung einer identifizierten Strecke bereitzustellen,
Erzeugen (2520) einer Gesten-Beschreibung unter Verwendung der Information über die identifizierten Gestenelemente,
So dass die Gestenbeschreibung die Geste als eine geordnete Auflistung von Parametern von identifizierten Gesten-Elementen beschreibt, wobei die identifizierten Gestenelemente Bögen und gerade Strecken umfassen,
wobei die durch die Hough-Transformation bereitgestellte Information über die identifizierten geraden Strecken für die Erstellung der Gesten-Beschreibung verwendet wird; und
Vergleichen (2530) der Gesten-Beschreibung mit einer Mehrzahl von Vergleichs-Gesten-Beschreibungen, denen Gesten-Codes zugeordnet sind, um als Ergebnis des Vergleichs einen Gesten-Code einer erkannten Geste zu liefern.

13. Computerprogramm zur Durchführung eines Verfahrens gemäß Anspruch 12, wenn das Computerprogramm in einem Computer ausgeführt wird.

14. Kamerasystem (2400), mit folgenden Merkmalen:
einer Kamera (2410), die ausgelegt ist, um ein Kamerasignal (2412) zu liefern, das ein von der Kamera aufgenommenes Kamerabild beschreibt;
einer Vorrichtung (2420) zur Erkennung von Gesten in einem Bild, gemäß einem der Ansprüche 1 bis 11, wobei die Vorrichtung zur Erkennung von Gesten ausgelegt ist, um das Kamerabild zu empfangen und basierend darauf den Gesten-Code (2422) zu erhalten; und
einer Kamera-Steuerung, die ausgelegt ist, um eine Ausrichtung, Fokussierung oder Funktion der Kamera in Abhängigkeit von dem Gesten-Code der in dem Kamerabild identifizierten Geste einzustellen.

15. Geräteanordnung, mit folgenden Merkmalen:
einem Gerät mit einer Gerätesteuerung;
einer Kamera, die ausgelegt ist, um ein Kamerasignal zu liefern, das ein von der Kamera aufgenommenes Kamerabild beschreibt; und
einer Vorrichtung zur Erkennung von Gesten in einem Bild, gemäß einem der Ansprüche 1 bis 11, wobei die Vorrichtung zur Erkennung von Gesten ausgelegt ist, um das Kamerabild zu empfangen und basierend darauf den Gesten-Code zu erhalten;
wobei die Gerätesteuerung ausgelegt ist, um eine Funktion des Geräts in Abhängigkeit von dem Gesten-Code zu steuern.

## Claims

1. An apparatus (100; 200) for recognizing gestures in a picture (110; 210), comprising:
a Hough transformer (130; 250) configured to identify arcs (B1-B9) in the picture or in a pre-processed version of the picture (232, 242) as identified gesture elements so as to obtain information (132; 252) about the identified gesture elements;
a gesture description creator (140; 270) configured to obtain a gesture description (142; 272) while using the information about the identified gesture elements; and
a gesture classifier (150; 280) configured to compare the gesture description to a plurality of comparative gesture descriptions having gesture codes associated with them so as to provide, as the result of the comparison, a gesture code (120; 220) of a recognized gesture;
wherein the Hough transformer (130; 250) is configured to identify a plurality of straight-line segments extending through the picture in various directions as identified gesture elements;
wherein the Hough transformer (130; 250) is configured to provide information about a location, a length or a direction of an identified straight-line segment, and
wherein the gesture description creator (140; 270) is configured to use the information (132; 252), provided by the Hough transformer, about the identified straight-line segments for creating the gesture description;
wherein the gesture description creator (140; 270) is configured to obtain as the gesture description (142; 272) a description of a gesture describing the gesture as an ordered listing of parameters of identified gesture elements (B1-B9, L1-L10), wherein the identified gesture elements include arcs and straight-line segments.

2. The apparatus as claimed in claim 1, wherein the gesture description creator (140; 270) is configured to order the gesture description (142; 272) in such a manner that the ordered identified gesture elements are ordered in accordance with their sequence along a continuous contour line of a gesture area, or
that the ordered identified gesture elements describe a continuous contour line of the gesture area.

3. The apparatus as claimed in any of claims 1 to 2, wherein the Hough transformer (130; 250) is configured to provide information (132; 252) about a location, an orientation, an arc length, a radius of curvature, or an angle of curvature of the identified arcs; and
wherein the gesture description creator (140; 270) is configured to use the information, provided by the Hough transformer, about the location, the orientation, the arc length, the radius of curvature, or the angle of curvature of the identified arcs for creating the gesture description (142; 272).

4. The apparatus as claimed in any of claims 1 to 3, wherein the gesture description creator (140; 270) is configured to create the gesture description (142; 272) such that the gesture description includes a description of a relative location of circular arcs or elliptical arcs (B1-B9) that belong to a contour line of a gesture area.

5. The apparatus as claimed in any of claims 1 to 4, wherein the gesture description creator (140; 270) is configured to include information, provided by the Hough transformer, about an orientation of the respective circular arc or elliptical arc into the gesture description (142; 272) for identified circular arcs or elliptical arcs (B1-B9).

6. The apparatus as claimed in any of claims 1 to 5, wherein the gesture description creator (140; 270) is configured to provide as the gesture description (142; 272) an ordered set of parameters describing contour sections of a gesture area, and
wherein the gesture classifier (150; 280) is configured to compare the ordered set (2110) of parameters to a plurality of comparative parameter sets associated with comparative gestures, so as to obtain information about differences between the ordered set of parameters and the comparative parameter sets, and
wherein the gesture classifier is configured to compare one or more cyclically rotated-through versions (2120, 2130) of the ordered set of parameters to the plurality of comparative parameter sets so as to obtain information about differences between one or more cyclically rotated-through versions of the ordered set of parameters and the comparative parameter sets, and
wherein the gesture classifier is configured to determine, on the basis of the information about the differences, a gesture code (120; 220) belonging to the ordered set of parameters or belonging to a rotated-through version of the ordered set of parameters.

7. The apparatus as claimed in any of claims 1 to 6, wherein the gesture description creator (140; 270) is configured to provide as the gesture description (142; 272) an ordered set of parameters describing contour sections of a gesture area, and
wherein the gesture classifier (150; 280) is configured to compare the ordered set (2210) of parameters to a plurality of comparative parameter sets that are associated with comparative gestures, so as to obtain information about differences between the ordered set of parameters and the comparative parameter sets, and
wherein the gesture classifier is configured to compare one or more scaled versions (2220, 2230) of the ordered set of parameters to the plurality of comparative parameter sets so as to obtain information about differences between the at least one scaled version of the ordered set of parameters and the comparative parameter sets, and
wherein the gesture classifier is configured to determine, on the basis of the information about the differences, a gesture code belonging to the ordered set of parameters or belonging to a scaled version of the ordered set of parameters.

8. The apparatus as claimed in any of claims 1 to 7, wherein the gesture description creator (140; 270) is configured to provide as the gesture description a set of parameters describing contour sections of a gesture area, and
wherein the gesture classifier is configured to detect whether the set of parameter values violates a predefined physical location condition, and
to suppress provision of the gesture code or to signal an error if the set of parameter values violates the predefined location condition.

9. The apparatus as claimed in any of claims 1 to 8, wherein the gesture description creator (140; 270) is configured to provide as the gesture description (142; 272) a set of parameters describing contour sections of a gesture area, and
wherein the gesture classifier is configured to determine a current gesture code describing a current gesture state in dependence on a previous gesture code that is determined on the basis of a previous picture and describes a previous gesture state.

10. The apparatus as claimed in claim 9, wherein the gesture classifier (150; 280) is configured to evaluate, when determining the current gesture code, state transition admissibility information describing which current gesture states may be assumed on the basis of a previous gesture state,
wherein the gesture classifier (150; 280) is configured to suppress transitions from a previous gesture state to a current gesture state that are described as inadmissible by the state transition admissibility information.

11. The apparatus (100; 200) as claimed in one of claims 1 to 10, wherein the apparatus is configured to recognize a hand gesture,
wherein the gesture description creator is configured to create the gesture description such that the gesture description includes a description of arcs having different orientations describing fingertips and spaces between fingers.

12. A method (2500) for recognizing gestures in a picture, comprising:
performing (2510) at least one Hough transform for identifying arcs in the picture or in a pre-processed version of the picture as identified gesture elements so as to obtain information about the identified gesture elements;
and to identify a plurality of straight-line segments extending through the picture in various directions as identified gesture elements so as to provide information about a location, a length or a direction of an identified straight-line segment,
creating (2520) a gesture description while using the information about the identified gesture elements;
so that the gesture description describes the gesture as an ordered listing of parameters of identified gesture elements, wherein the identified gesture elements include arcs and straight-line segments
the information about the identified straight-line segments that is provided by the Hough transform being used for creating the gesture description; and
comparing (2530) the gesture description to a plurality of comparative gesture descriptions having gesture codes associated with them so as to provide a gesture code of a recognized gesture as the result of the comparison.

13. A computer program for performing a method as claimed in claim 12, when the computer program is performed in a computer.

14. A camera system (2400) comprising:
a camera (2410) configured to provide a camera signal (2412) describing a camera picture taken by the camera;
an apparatus (2420) for recognizing gestures in a picture in accordance with any of claims 1 to 11, the apparatus for recognizing gestures being configured to receive the camera picture and to obtain the gesture code (2422) on the basis thereof; and
a camera controller configured to set an alignment, focusing or function of the camera in dependence on the gesture code of the gesture identified in the camera picture.

15. A device configuration, comprising:
a device comprising a device controller;
a camera configured to provide a camera signal describing a camera picture taken by the camera; and
an apparatus for recognizing gestures in a picture in accordance with any of claims 1 to 11, the apparatus for recognizing gestures being configured to receive the camera picture and to obtain the gesture code on the basis thereof;
the device controller being configured to control a function of the device in dependence on the gesture code.

## Revendications

1. Dispositif (100; 200) pour identifier des gestes dans une image (110; 210), aux caractéristiques suivantes:
un transformateur de Hough (130; 250) conçu pour identifier, comme éléments de geste identifiés, des arcs (B1 à B9) dans une image ou dans une version prétraitée de l'image (232, 242), pour obtenir une information (132; 252) sur les éléments de geste identifiés;
un préparateur de description de geste (140; 270) conçu pour obtenir une description de geste (142; 272) à l'aide de l'information sur les éléments de geste identifiés; et
un classificateur de geste (150; 280) conçu pour comparer la description de geste avec une pluralité de descriptions de geste de comparaison auxquelles sont associés des codes de geste pour fournir, comme résultat de la comparaison, un code de geste (120; 220) d'un geste identifié;
dans lequel le transformateur de Hough (130; 250) est conçu pour identifier, comme éléments de geste identifiés, une pluralité de lignes droites s'étendant dans différentes directions dans l'image;
dans lequel le transformateur de Hough (130; 250) est conçu pour mettre à disposition une information sur une position, une longueur ou une direction d'une ligne identifiée, et
dans lequel le préparateur de description de geste (140; 270) est conçu pour utiliser l'information (132; 252) sur les lignes droites identifiées mise à disposition par le transformateur de Hough pour la préparation de la description de geste;
dans lequel le préparateur de description de geste (140; 270) est conçu pour obtenir, comme description de geste (142; 272), une description d'un geste qui décrit le geste comme une énumération ordonnée de paramètres d'éléments de geste identifiés (B1 à B9, L1 à L10), les éléments de geste identifiés comportant des arcs et des lignes droites.

2. Dispositif selon la revendication 1, dans lequel le préparateur de description de geste (140; 270) est conçu pour ordonner la description de geste (142; 272) de sorte
que les éléments de geste identifiés ordonnés soient ordonnés selon leur ordre le long d'une ligne de contour continue d'une surface de geste, ou
que les éléments de geste identifiés ordonnés décrivent une ligne de contour continue de la surface de geste.

3. Dispositif selon l'une des revendications 1 à 2, dans lequel le transformateur de Hough (130; 250) est conçu pour mettre à disposition une information (132; 252) sur une position, une orientation, une longueur d'arc, un rayon de courbure ou un angle de courbure des arcs identifiés; et
dans lequel le préparateur de description de geste (140; 270) est conçu pour utiliser l'information mise à disposition par le transformateur de Hough sur la position, l'orientation, la longueur d'arc, le rayon de courbure ou l'angle de courbure des arcs identifiés pour la préparation de la description de geste (142; 272).

4. Dispositif selon les revendications 1 à 3, dans lequel le préparateur de description de geste (140; 270) est conçu pour préparer la description de geste (142; 272) de sorte que la description de geste comporte une description d'une position relative d'arcs de cercle ou d'arcs d'ellipse (B1 à B9) appartenant à une ligne de contour d'une surface de geste.

5. Dispositif selon l'une des revendications 1 à 4, dans lequel le préparateur de description de geste (140; 270) est conçu pour reprendre dans la description de geste (142; 272), pour les arcs de cercle ou arcs d'ellipse (B 1 à B9) identifiés, une information fournie par le transformateur de Hough sur une orientation de l'arc de cercle ou de l'arc d'ellipse respectif.

6. Dispositif selon l'une des revendications 1 à 5, dans lequel le préparateur de description de geste (140; 270) est conçu pour mettre à disposition, comme description de geste (142; 272), un ensemble ordonné de paramètres qui décrivent les segments de contour d'une surface de geste, et
dans lequel le classificateur de geste (150; 280) est conçu pour comparer l'ensemble ordonné (2110) de paramètres avec une pluralité d'ensembles de paramètres de comparaison associés à des gestes de comparaison, pour obtenir une information sur les différences entre l'ensemble ordonné de paramètres et les ensembles de paramètres de comparaison, et
dans lequel le classificateur de geste est conçu pour comparer une ou plusieurs versions tournées cycliquement (2120, 2130) de l'ensemble ordonné de paramètres avec la pluralité d'ensembles de paramètres de comparaison, pour obtenir une information sur les différences entre une ou plusieurs versions tournées cycliquement de l'ensemble ordonné de paramètres et les ensembles de paramètres de comparaison, et
dans lequel le classificateur de geste est conçu pour déterminer sur base des informations sur les différences, un code de geste (120; 220) appartenant à l'ensemble de paramètres ordonné ou à une version tournée de l'ensemble de paramètres ordonné.

7. Dispositif selon l'une des revendications 1 à 6, dans lequel le préparateur de description de geste (140; 270) est conçu pour mettre à disposition, comme description de geste (142; 272), un ensemble ordonné de paramètres décrivant les segments de contour d'une surface de geste, et
dans lequel le classificateur de geste (150; 280) est conçu pour comparer l'ensemble ordonné (2210) de paramètres avec une pluralité d'ensembles de paramètres de comparaison associés aux gestes de comparaison, pour obtenir une information sur les différences entre l'ensemble ordonné de paramètres et les ensembles de paramètres de comparaison, et
dans lequel le classificateur de geste est conçu pour comparer une ou plusieurs versions échelonnées (2220, 2230) de l'ensemble ordonné de paramètres avec la pluralité d'ensembles de paramètres de comparaison, pour obtenir une information sur les différences entre l'au moins une version échelonnée de l'ensemble ordonné de paramètres et les ensembles de paramètres de comparaison, et
dans lequel le classificateur de geste est conçu pour déterminer, sur base des informations sur les différences, un code de geste appartenant à l'ensemble ordonné de paramètres ou un code de geste appartenant à une version échelonnée de l'ensemble ordonné de paramètres.

8. Dispositif selon l'une des revendications 1 à 7, dans lequel le préparateur de description de geste (140; 270) est conçu pour mettre à disposition, comme description de geste, un ensemble de paramètres décrivant les segments de contour d'une surface de geste, et
dans lequel le classificateur de geste est conçu pour identifier si l'ensemble de valeurs de paramètre viole une condition de position physique prédéterminée, et
pour supprimer une mise à disposition du code de geste ou signaler une erreur lorsque l'ensemble de valeurs de paramètre viole la condition de position prédéterminée.

9. Dispositif selon l'une des revendications 1 à 8, dans lequel préparateur de description de geste (140; 270) est conçu pour mettre à disposition, comme description de geste (142; 272), un ensemble de paramètres décrivant les segments de contour d'une surface de geste, et
dans lequel le classificateur de geste est conçu pour déterminer un code de geste actuel décrivant un état de geste actuel en fonction d'un code de geste antérieur déterminé sur base d'une image antérieure, décrivant un état de geste précédent.

10. Dispositif selon la revendication 9, dans lequel le classificateur de geste (150; 280) est conçu pour évaluer, lors de la détermination du code du geste actuel, une information de fiabilité de transition d'état qui décrit les états de geste actuels pouvant être adoptés partant d'un état de geste précédent,
dans lequel le classificateur de geste (150; 280) est conçu pour supprimer les passages d'un état de geste précédent à un état de geste actuel qui sont décrits comme inadmissibles par les informations de fiabilité de transition d'état.

11. Dispositif (100; 200) selon l'une des revendications 1 à 10, dans lequel le dispositif est conçu pour identifier un geste de main,
dans lequel le préparateur de description de geste est conçu pour préparer la description de geste de sorte que la description de geste comporte une description d'arcs de différentes orientations décrivant des pointes de doigt et des espaces entre les doigts.

12. Procédé (2500) pour identifier de gestes dans une image, aux étapes suivantes consistant à:
réaliser (2510) au moins une transformation de Hough pour identifier, comme éléments de geste identifiés, des arcs dans l'image ou dans une version retraitée de l'image, pour obtenir une information sur les éléments de geste identifiés,
et pour identifier, comme éléments de geste identifiés, une pluralité de lignes droites s'étendant dans différentes directions dans l'image, pour mettre à disposition une informations sur une position, une longueur ou une direction d'une ligne identifiée,
générer (2520) une description de geste à l'aide de l'information sur les éléments de geste identifiés,
de sorte que la description de geste décrive le geste comme une énumération ordonnée de paramètres d'éléments de geste identifiés, les éléments de geste identifiés comportant des arcs et des lignes droites,
dans lequel l'information sur les lignes droites identifiées mise à disposition par la transformation de Hough est utilisée pour la préparation de la description de geste; et
comparer (2530) la description de geste avec une pluralité de descriptions de geste de comparaison auxquelles sont associés des codes de geste, pour fournir, comme résultat de la comparaison, un code de geste d'un geste identifié.

13. Programme d'ordinateur pour réaliser un procédé selon la revendication 12 lorsque le programme d'ordinateur est exécuté sur un ordinateur.

14. Système de caméra (2400), aux caractéristiques suivantes:
une caméra (2410) qui est conçue pour fournir un signal de caméra (2412) décrivant une image de caméra prise par la caméra;
un dispositif (2420) pour identifier des gestes dans une image, selon l'une des revendications 1 à 11, où le dispositif pour identifier des gestes est conçu pour recevoir l'image de caméra et pour recevoir, sur base de cette dernière, le code de geste (2422); et
une commande de caméra qui est conçue pour régler une orientation, une focalisation ou une fonction de la caméra en fonction du code de geste identifié dans l'image de caméra.

15. Aménagement d'appareils, aux caractéristiques suivantes:
un appareil avec une commande d'appareil;
une caméra qui est conçue pour fournir un signal de caméra décrivant une image de caméra prise par la caméra; et
un dispositif pour identifier des gestes dans une image, selon l'une des revendications 1 à 11, où le dispositif pour identifier des gestes est conçu pour recevoir l'image de caméra et pour recevoir, sur base de cette dernière, le code de geste;
dans lequel la commande d'appareil est conçue pour régler une fonction de l'appareil en fonction du code de geste.
